Europäisches Patentamt

European Patent Office

Office européen des brevets

(19)

(11) Publication number: **0 210 014**

**A2**

(12)

# EUROPEAN PATENT APPLICATION

(21) Application number: 86305231.2

(22) Date of filing: 07.07.86

(51) Int. Cl.⁴: **G 01 N 1/28**
**G 01 N 35/06, G 01 N 1/00**

(30) Priority: 05.07.85 US 752449
08.07.85 US 753005
18.10.85 US 789945

(43) Date of publication of application:
28.01.87 Bulletin 87/5

(84) Designated Contracting States:
AT BE CH DE FR GB IT LI NL SE

(71) Applicant: CETUS CORPORATION
1400 Fifty-Third Street
Emeryville California 94608(US)

(72) Inventor: Leath, Richard Alan
1136 The Alameda
Berkeley California 94707(US)

(72) Inventor: Wennberg, Timothy J.
3416 Medera
Oakland California 94619(US)

(72) Inventor: Mazel, Louis Michael
40615 Ondina Court
Fremont California 94539(US)

(72) Inventor: Widunas, Joseph Thomas
1364 Henry Street
Berkely California 94709(US)

(72) Inventor: Golden, Robert
2044 Glen Cove Road
Vallejo California 94591(US)

(72) Inventor: Buchtel, Forrest
14 Las Piedras
Orinda California 94563(US)

(74) Representative: Bizley, Richard Edward et al,
BOULT, WADE & TENNANT 27 Furnival Street
London EC4A 1PQ(GB)

(54) Automated liquid handling apparatus and process with plate handler.

(57) A computer directed liquid handler which can take samples of specimen liquids out of two levels of a test tube, transfer the samples to assay wells and add reagents stored in other containers to the assay wells. The computer control circuitry allows the user to customize the liquid handling procedures and link more than one procedure to the other. Also disclosed is a wash block and method of washing wells and methods for sensing the liquid level in a test tube and for delivering multiple reagents to the same assay well without cross contamination.

EP 0 210 014 A2

FIG.1

## AUTOMATED LIQUID HANDLING APPARATUS
## AND PROCESS WITH PLATE HANDLER

The invention relates to the field of liquid handling for work with chemicals and biological tissue samples, enzymes and reagents, and, more particularly, to the field of automated liquid handling apparatus for work in these areas.

The area of chemical and biological research and routine operations such as blood typing and chemical assays usually requires a great deal of liquid handling such as washing reaction wells, preparing diluted solutions, and preparing reaction solutions such as by adding certain reagents and/or enzymes to tissue samples or other chemicals of interest and examining the result. In blood typing and chemical assays in particular, it often is necessary to repetitively prepare the same solutions for hundreds and perhaps thousands of donors every day. Such labor is both tedious and subject to human error.

Chemical and biochemical analyses are designed to detect the presence or quantity of a given chemical or species in a sample. In a clinical or medical laboratory setting one common test regimen involves contacting each of a plurality of aliquots of the sample with a different reagent or combination of reagents and detecting a characteristic reaction or change in physical state to indicate the presence of a particular chemical or species. One such application is blood-typing where a sample of blood is spun to give serum and blood cell fractions and a plurality of portions of these two materials are contacted with various reagents to determine type via specific cell agglutination. Another such application involves antigen/antibody screening tests where a sample of a body fluid such as plasma, serum, blood, urine or the like is contacted with a plurality of antigen and/or antibody-containing reagents and the formation of immune complexes between species in the body fluid and the reagents is detected.

It will be appreciated that such screening type tests can involve the repetitive dispensing and manipulation of numerous small liquid volumes as each sample may be screened against many reagents and in a medical laboratory setting there may be a large number of samples undergoing analysis at any given time.

It is desirable, of course, to perform such repetitive assays as quickly and efficiently as possible. It is also desirable to use limited sample size to cut down on expensive reagent use and to minimize the volume of sample - e.g., blood - that must be taken from the patient. The need for speed and efficiency and the use of small volumes have given rise to a range of techniques wherein the assays are carried out in small volume wells in assay trays. Typically, such trays contain 20, 24, 48 or 96 wells arranged in a rectangular configuration. A range of devices are now available to facilitate the addition of materials to these multiwell trays. These devices can be manual, semiautomated or automated and can in some cases be computer controlled with programs which allow several sequential manipulations to be performed on the samples or test well contents.

Further, often it is necessary to string together long sequences of liquid handling process steps into procedures. To do this by hand requires painstaking hand recording of every process step in a record which then must be learned by each technician which is to perform that particular procedure. Every new employee must be trained in each procedure before they can be productive. It would be desirable to use unskilled labor to carry out the time consuming assays, but such a laboratory organization would increase the number of human errors borne of trying to perform complicated, detailed procedures on thousands of samples daily. It would be useful in such an environment to have a machine which could automatically carry out such complicated procedures at the touch of a button and do so all day on thousands of samples without making a mistake or suffering from fatigue, confusion or loss of memory as to which of scores of wells in which a particular solution was placed. It would also be useful to have a machine which was closed to modification by the user such that the same procedure could be run by many different users without error or modification in certain environments, but which could be open to modification of customization of the procedures in other environments to give maximum flexibility.

Often the different washes, soaks, incubation times, well plate filling procedures, reagent addition procedures and emptying procedures used in one assay may be used in a different sequence or in slightly modified fashion in other assay procedures. Frequently it is useful to be able to mix old procedures with new procedures in building block fashion to construct a new assay procedure.

Typically, manufacturers sell to such labs which do this type of work plates comprised of a plurality of wells some of which must be filled with the patient's blood plasma and others of which must be filled with a diluted solution of the patient's red blood cells. These samples are put in empty plates and are then treated with a sequence of reagents to type the blood and test for the presence of certain antibodies after which they must be removed and labeled with the donor number. Naturally, since blood labs which do this sort of work must work with thousands or millions of samples, an automated system to do the liquid handling and plate handling work would be highly desirable. Such a system would eliminate many of the human errors which could result from imposing such tedious and repetitious work on a lab worker. Further, the work could be done much faster and with lab workers having few clinical skills.

In a laboratory setting, there are times when the operator needs to confirm the presence of liquid such as in an assay tray well or in a sample container. Also, in a laboratory setting, there are times when one needs to know the liquid level of samples. For example, when testing centrifuged blood samples one needs to know the liquid level so as to differentiately sample the red blood cells packed or clotted at the bottom of the sample and the red cell-free plasma or serum thereabove.

With the advent of more and more apparatus for automatically manipulating laboratory samples there is a need for a liquid presence or level sensing system that is simple and compact, that absolutely avoids physical cross contamination of samples, and that can be efficiently incorporated into automated liquid handling devices and protocols.

One favored technique for use in assay plate analysis involves adhering or adsorbing reagents, in particular immunological reagents, to the walls of the assay plate wells or to a solid bead present in the well. Then, if an immunological complexing reaction takes place, the complex is bound to the walls of the well or to the bead and its presence is more readily detected. In such analyses, washing steps to remove unreacted sample and the like are often called for. In an automated assay apparatus, it would be of advantage to have a device which would provide this wash function in a thorough manner.

Accordingly, a need has arisen for an apparatus which can be programmed with a number of different procedures which can be open to customization or closed to customization at will and which can be programmed by the user to string together many different procedures into larger procedures which can be repeated endlessly without error. Further, a need has arisen for a machine which can remember the customized procedures programmed by the user and repeat them on command daily. Also a need has arisen for a system which can automatically handle a large number of samples of blood or other material to be assayed with various reagents and which can automatically load empty plates into such a system and remove plates with samples and reagents in the wells for reading in a plate reader.

A need has also arisen for an automated liquid handling apparatus which can provide a plurality of functions including sample dispensing to trays, dilution, mixing, sample transfer, reagent addition, liquid sensing and washing. It is important to configure such an apparatus in a manner which maximizes motion efficiency and which minimizes the possibility of cross-contamination and minimizes the effort needed to maintain the apparatus at proper levels of cleanliness and sterility.

Examples of assay and sample handling machines have been disclosed in the art. For example, commonly owned United States Patent 4,478,094 discloses a system for automatically transferring samples and other liquids to wells in assay trays using a plurality of disposable pipette tips. United States patent application Serial No. 542,113 filed October 14, 1983 shows a similar machine equipped with a movable pipette head assembly which permits liquids to be moved between particular receptacles such as between test tubes and particular assay tray wells. See also United States Patents 4,478,094 of Salomaa and 3,143,393 of DeSequin Des Hons. United States patent application Serial No. 656,234, filed October 1, 1984, shows another machine for dispensing liquids into receptacles such as assay tray wells. This machine includes an aspirating manifold for removing fluids from wells and a plurality of dispensing manifolds for adding materials to wells. United States patent application Serial No. 683,264, filed December 14, 1984 shows a machine which incorporates a movable transfer pipette for depositing liquids from a carousel sample holder into assay tray wells as well as a series of pipettes for adding reagents and the like to the assay tray wells. This machine is capable of identifying and correlating samples and their assay tray positions. This machine provides an indirect photocell-based mechanism for detecting the liquid level of the samples in test tubes and points out that this mechanism is particularly useful with spun blood samples as it enables automatic sampling of the serum and red cell fractions.

With reference to the liquid sensing aspects of the present invention, the sensing device employs a bubbler. Prior art concerning bubblers includes the following United States Patents

3,613,456 of Hopfe et al;

2,233,561 of Kalle;

2,933,094 of Cunniff et al; and

3,380,463 of Trethewy.

Although assay apparatus such as the foregoing have been advances there are improvements to be made. There is a need to provide additional flexibility and function to such a device, to enable a greater variety of tests to be performed. There is also a need to provide a machine which requires less manual operator involvement in the handling of samples. Similarly, it would be useful to provide an automated sample handling device in which reagent cross-contamination is avoided and in which any parts contacted with reagents or samples are readily disposable or removable for cleansing (e.g., washing or autoclaving). It would also be useful to provide an analysis and sample handling apparatus which can conduct a wide range of functions on a plurality of small liquid samples in an efficient manner, with precision and with a minimum of mechanical complexity.

It would also be advantageous to have a sample handling machine which would provide automated washing of assay tray wells and/or their contents. Moreover, it would be of advantage to have an automated device for sample handling which could determine liquid levels, directly but without contamination of non-disposable components.

There is disclosed herein an automated liquid handling system for performing assays in the chemical

-8-

and biological research, testing and small production environment. The machine consists, inter alia, of a motor driven carrousel which holds test tubes and pipette tips in separate storage locations and a bed for holding a plurality of trays for holding short pipette tips, reagents, diluents and the mixtures of samples from the test tubes which various reagents and/or diluents. A multifunction motor driven transfer head coupled with a plurality of pumps coupled to various units on the head is controlled by a host processor and various motor controller processors to transfer samples to the diluent tray, the mixing wells and to transfer reagents to the mixing wells. A ROM memory stores various preprogrammed procedures, and subroutines which are available for use by the user. These subroutines and procedures are called by a real time operating system. Each subroutine can be customized in an open architecture embodiment by allowing the user to specify all the critical process parameters and storing these parameters in an EEPROM. These process parameters are specified by answering a number of initialization questions displayed by the host processor on the user interface display. The user's answers, entered on a keyboard, are remembered by the host processor by constructing a database in EEPROM which has at least one field for every process parameter. Default answers are supplied if the user does not supply an answer. In a closed architecture embodiment, the procedures are entirely preprogrammed including the process parameters, and are not subject to modification by the user.

Maximum flexibility is provided the user by allowing him or her to link various files of either the preprogrammed or customized variety into a string defining whatever assay the user desires. There can be any number of such strings defined, and each string can be remembered by the host computer for reuse later in the sense that at the end of the execution of each file, the computer looks for a link field telling which file, if any, to execute next. If that file also has a link field, the computer will then execute the next linked file and so on until all linked files have been executed. The same string of files will be executed every time the first file in the string is executed until the linking fields are changed or eliminated.

The invention also includes a wash head and a process for carrying out automated wash sequences on wells in trays to contain liquids to be assayed. The present invention has the following aspects. (1) A wash block for sequentially dispensing and aspirating a predetermined depth of wash liquid to a plurality of wells of an assay tray. (2) A wash head assembly for incorporation into an assay tray liquid manipulation device which assembly includes the wash block of (1) in combination with a mechanism for moving it vertically down to the assay tray for use and up away from the tray for storage. (3) A liquid dispensing and well-washing apparatus for incorporation into an assay tray liquid manipulation device, which apparatus includes the wash head assembly of (2) in combination with a liquid dispensing manifold. (4) The liquid dispensing and well washing apparatus of (3) in combination in an assay tray liquid manipulating device with a horizontally translatable sample transfer pipette and/or with fixed position pipettes. (5) The combination of (4) wherein the sample transfer pipette incorporates a liquid sensing system. (6) The liquid sensing system of (5) and the method of its use and (7) The sample transfer pipette of (4) in combination with a liquid dispensing manifold of (3) and optionally the fixed pipettes of (4).

The wash block is provided for dispensing to a plurality of wells of an assay tray a washing flow of wash liquid and simultaneously limiting the maximum level of liquid in the wells and thereafter aspirating the liquid from the wells. The wash block comprises a manifold block carrying

(a) a wash liquid dispensing manifold having an inlet adapted to be connected to one or more sources of wash liquid and a plurality of spaced outlets each fitted with a depending wash liquid dispensing tube angled slightly from vertical, the spacing of said dispensing tubes being in correspondence with the spacing between the wells of the assay tray;

(b) a wash liquid aspirating manifold having an outlet adapted to be connected to a vacuum source and a plurality of spaced inlets each fitted with a vertically-depending wash liquid removal tube, the tip of said removal tube being below the tip of the wash liquid dispensing tube and the spacing of said removal tubes being in correspondence with the spacing between the wells of the assay tray; and

(c) an overflow aspirating manifold having an outlet adapted to be connected to a vacuum source and a plurality of spaced inlets each fitted with a vertically depending overflow aspirating tube, the tip of said overflow aspirating tube extending to a point above the tip of the removal tubes corresponding to the maximum depth of wash liquid desired in the wells and the spacing of the overflow aspirating tubes being in correspondence with the spacing between the wells of the assay tray.

The wash head assembly of the invention comprises the wash block just described affixed to means for translating the wash block vertically between upper and lower positions, the lower position being the wash position.

The invention also includes a process for liquid level sensing in the donor tube which is done without creating the possibility of contamination of other donor samples. The liquid level sensing is done by dipping the pipette used only to handle that particular donor's samples into the liquid and pushing the plunger down so as to expel air while the pipette is being dipped into the liquid. The host computer then monitors a pressure transducer pneumatically coupled to the internal cavity of the pipette for a rise in pressure. When the pipette tip penetrates the liquid meniscus, the pressure rises rapidly. At that time, the computer reads the position of the stepper motor which is lowering the pipette tip and stores the position data as the level of the current liquid meniscus.

The invention also includes a process for mixing liquids using the pipette tips which handle only that liquid so as to avoid cross contamination between liquids of one type and liquids of another type or from another donor.

The invention also includes a process for adding more than one reagent to a well without cross contamination between reagents. The transfer head picks up the first reagent and moves it to the well to which it is to be added. The pipette tip is then lowered until the tip is at the top, center of the well but not in contact with the liquid meniscus. The bed is then shifted in one of its directions until the tip touches the side of the well, and the plunger is lowered to deposit an amount of the reagent which is either stored as a constant or stored in EEPROM as set by the user. To add the next reagent, the transfer head ejects its current tip, gets a new pipette tip and picks up the second reagent. The transfer head then moves to the same well and lowers the pipette tip until the tip is at the top center of the well but not in contact with the liquid, and the bed is shifted in the opposite direction until the pipette tip touches the opposite side of the well as was first touched. The second reagent is then deposited in an amount determined by the user or stored as a constant. In neither deposit did the pipette tip touch any liquid in the well. Third and fourth reagents can then be deposited in the same manner except that when the pipette tip is located at the top center of the well, the x-y head is shifted either left or right and the bed is left stationary. The shift places the pipette tip in contact with a side of the well not previously touched in any previous delivery, and does not touch any liquid in the well. The fourth reagent is delivered in the same manner, but the x-y head is shifted in the opposite direction as the previous delivery to put the pipette tip in contact with a side of the well not touched in any of the previous three deliveries.

The invention also includes a system for taking a stack of empty plates of wells stored in a stack in a plate stacking mechanism and loading the empty plates one by one onto the bed of the machine for receipt of samples and reagents. The filled plates are then removed from the bed of the liquid handling system and stacked for later manual transfer to a plate reader. The plate stacker mechanism is comprised of two stacking frames having cam operated latches which store the plates in stacks. An elevator mechanism having pins which engage camming surfaces on the underside of latches holding the empty plate stack rises up to free a single empty plate from the bottom of the stack. When the pins engage the camming surfaces, they move the latches away from engagement with the bottom plate thereby allowing it to rest on the elevator. The elevator then lowers the empty plate from the bottom of the stack onto a belt which is driven by a motor. When the elevator lowers the plate, the pins on the elevator recede thereby allowing the latches, which are spring biased toward the latching position to engage the underside of the next plate up in the stack of empty plates.

The bottom plate is then moved under a partition between the empty plate stack and the full plate stack into loading position. This plate is then engaged by a belt which is raised from a lowered position beneath the surface of the loading position platform so as to engage the bottom of the plate through a slot in the bottom of the loading position platform. This belt is then moved so as to move the empty plate out through an opening in the partition between the plate stacker and the bed of the liquid handling apparatus. There it engages another segment of the same belt which is pushed upward through a slot in the bed by an extension arm which can be moved up and down on a cam roller which engages a slanted slot in the extension arm and which is moved by a solenoid.

The full plates are unloaded by a procedure which is the reverse of the above process except that the full plates are stacked in a rack above the loading position.

Brief Description of the Drawings

Figure 1 is an overall perspective view of the system showing the physical layout of the carrousel, integrated head, movable bed and the trays.

Figure 2 is an electrical block diagram of the system.

Figure 3 is a flow diagram of the blood typing process sequence which gives details of the steps the machine performs in doing fluid handling aspects of blood typing.

Figure 4 is a flow diagram of one embodiment of a mixing process which can be used alone or in combination with other processes.

Figure 5 is a flow diagram of the preferred embodiment of the mixing process.

Figure 6 is front view of a wash head for use in the integrated head of the apparatus.

Figure 7 is a side view of the wash head of Figure 6.

Figure 8 is a flow diagram of the wash sequence which can be used alone or in conjunction with other files.

Figure 9 is a flow diagram of an assay-sample handling sequence.

Figure 10 is a flow diagram of a bromelin treatment process which gives detail regarding the steps the machine goes through in implementing the process.

Figure 11 is a perspective view of the plate handling mechanism.

Figure 12 is a top view of the mechanism of the plate handling mechanism below the surface 608 in Figure 11.

Figure 13 is a top view of surface 608 showing the relative placement of the partitions, the latches, the slots for the elevator mechanism and the slots for the belt mechanism.

Figure 14 is a view of the elevator mechanism's scottish yoke taken along view line 14-14 in Figure 12.

Figure 15 is another view of the elevator mechanism's scottish yoke taken along the view line 15-15 in Figure 12.

Figure 16 is a view of the mechanism of the latches and plate handling mechanism above the surface 608 taken along the view line 16-16 in Figure 13.

Figure 17 is a view of the mechanism of the latches and plate handling mechanism above the surface 608 taken along the view line 17-17 in Figure 13.

Figures 18A and 18B are views of the operation of the latches in moving in and out of latching position.

Figure 19 is view in elevation of the plate handling mechanism below the surface 608 of the plate handling mechanism taken along the view line 19-19 in Figure 12.

Figure 20 is view in elevation of the plate handling mechanism below the surface 608 taken along the view line 20-20 in Figure 12.

Figure 21 is an elevation view of the extension mechanism which guides and supports the belt 606 under the surface of the bed 74 in Figure 11 and which allows the belt 606 to be raised such that the top surface of the belt rises through the slot 616 in the bed 74 and protrudes above the surface of the bed 74.

Figure 22 is a top view of the extension mechanism of Figure 21.

Figures 23A and 23B are flow charts of the software which controls the operations of the plate handler.

-15ã

Figure 24 is a view in elevation looking at the fusion head along the looking down the negative y axis.

Figure 25 is a view of the fusion head looking down the negative x axis.

Figure 26 is a perspective view of a single manifold dispense manifold.

Figure 27 is a perspective view of a double manifold dispense manifold.

This invention is related to the inventions disclosed in the following commonly owned United States Patents and patent applications each of which is expressly incorporated herein by reference.

United States Patent No. 4,478,094
United States Patent No 4555957
International Patent Application No WO 8602168
United States Patent Application No 683,264, filed December 14, 1984.

System Overview

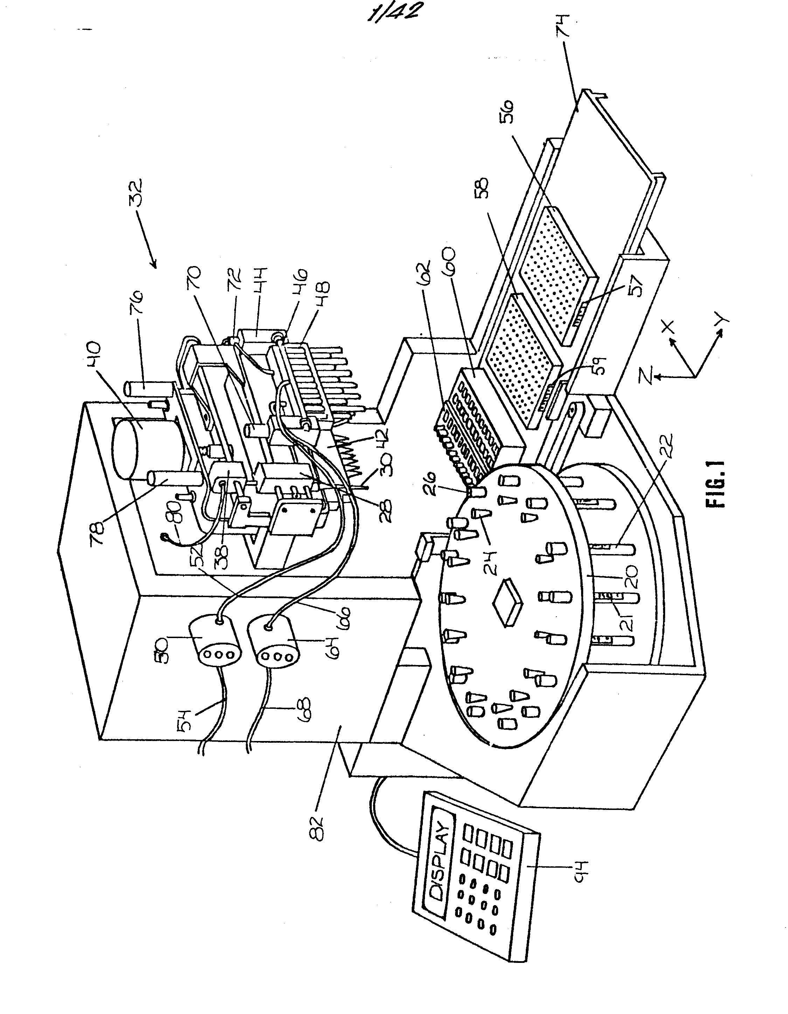

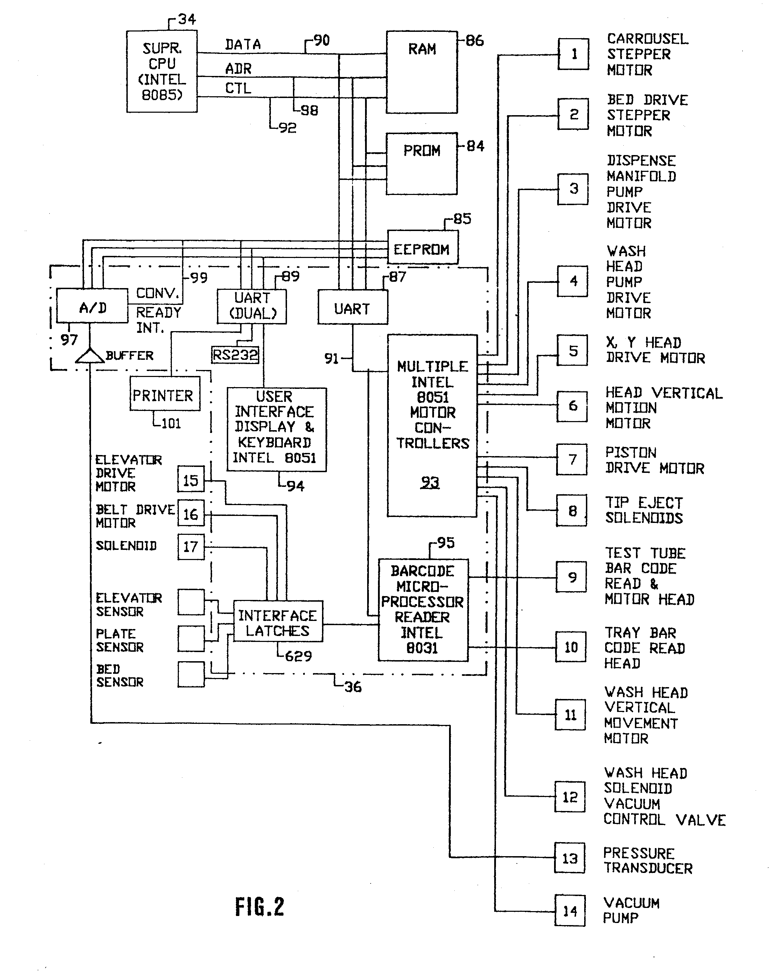

Referring to Figure 1, there is shown an overall physical perspective view of the mechanical layout of the machine of the invention. Figure 2 is a block diagram of the electrical control apparatus that drives the machine. Referring jointly to Figures 1 and 2 will give an integrated picture of the liquid handling machine's structure. A carrousel 20 stores a plurality of test tubes 22 which store tissue samples or chemicals or solutions to be assayed. The test tubes are shown as having bar codes 21 thereon. The actual positions of these bar codes are above the upper surface of the test tubes so that they can be read while the tubes are in their stored positions. Typically, the tubes contain blood which has been spun in a centrifuge. Immediately radially behind each test tube is a storage position for a long pipette tip in the form of a hole in the carrousel in which a pipette tip rests such as the pipette 24. The pipette tips have long projecting tips that can reach the bottom of the test tubes to extract tissue samples or chemicals from the bottom of the tubes. There is one tip stored for each test tube so that cross contamination will not occur as each tip is used with its particular test tube only.

The carrousel is moved by a stepper motor (not shown in Figure 1) #1 in Figure 2. Motor 1 moves the carrousel through a belt drive mechanism (not shown)) but other drive mechanisms would work also such as direct drive or chain drive. The carrousel is moved so as to place one and only one test tube at any given time in an "active" position under an x-y head 28. The x-y head is shown in its left position in preparation for moving its long pipette tip down into the test tube 26 in the active position below the tip 30. The x-y head has another position further left wherein a tip holder (not shown) is aligned directly over a projecting end of the pipette tip stored behind the test tube in the active position. The tip holder has an outside diameter which is matched to the inside diameter of the long pipette tip ends projecting from the pipette storage positions such that the tips can be picked up when the head is lowered such that the tip holder engages the tip.

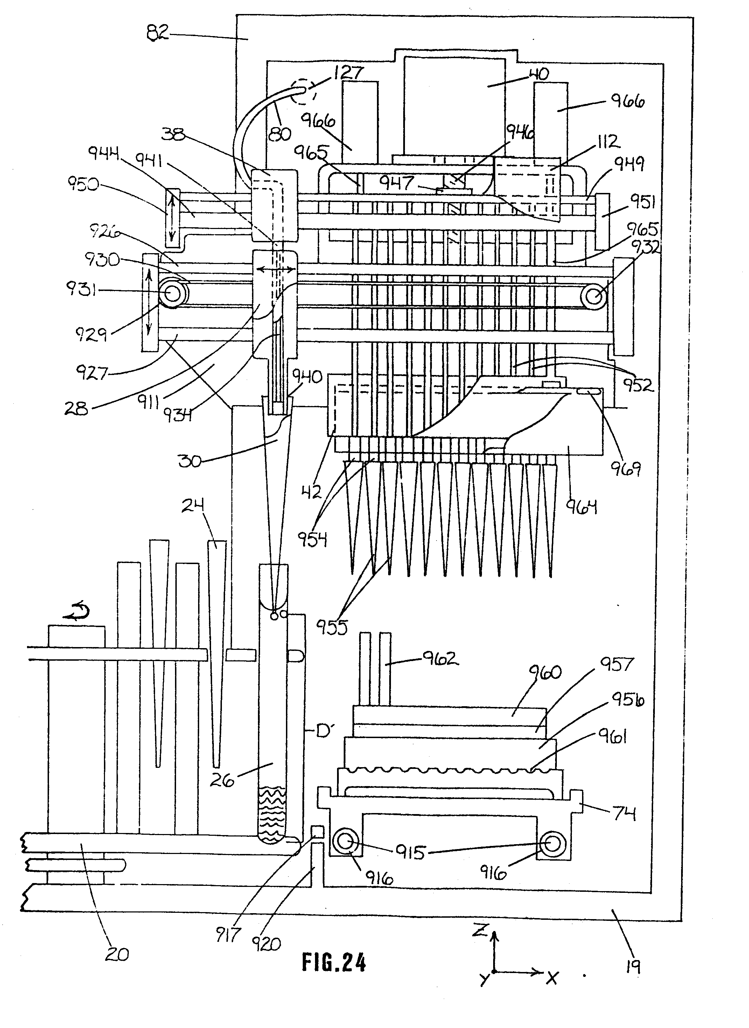

The x-y head 28 is part of an integrated transfer head 32 (sometimes hereafter referred to as the "fusion head") which combines several liquid handling apparatus in one small space and shares the function of various drive motors among the various head units comprising the whole. The entire head 32 moves vertically (along the Z axis in Figure 1) up and down on tracks (not shown) under the control of a head vertical motion motor #6 in Figure 2 (not shown in Figure 1) under the control of the supervisor computer and a motor driver (not shown) in the interface circuit 36. The x-y head 28 also moves horizontally (along the X axis in Figure 1) under the control of the x-y head drive motor #5 in Figure 2 (not shown in Figure 1). The mechanical details of the transfer head 32 will be given in more detail below in connection with the discussion of Figure 24 and following.

In order to pick up a long tip such as the tip 30, the motor #5 is commanded by the computer 34 and the interface board 36 to move the x-y head to the position where the tip holder is lined up with the tip stored behind the tube in the active position, and the motor #6 is commanded to move the entire head 32 down until the tip holder is seated in the projecting portion of the long tip stored in the tip holder position behind the active tube. The motor #6 is then commanded to lift the entire head to draw the entire tip out of the storage position. The tip can then be moved to any position along the X axis by motor #5.

The x-y head also has a movable piston (not shown) within the cylinder coupled to the pipette holder and tip. The piston can be moved up and down in the Z direction by a piston drive frame 38 which is connected to the piston, and which is driven by a piston drive motor #7 in Figure 2 and shown at 40 in Figure 1. This motor is connected by a worm gear (not shown) to the piston drive frame 38 such that rotation of the worm gear is translated into Z axis motion of the frame 38.

The integrated head 32 is also comprised of a multichannel head 42, a wash head 44 and a dispense manifold 46.

The dispense manifold 46 is a multichannel liquid dispense manifold with multiple outlets 48 which can be lowered into wells to fill them with liquids pumped into the manifold 46 by a peristaltic pump 50 through a section of flexible hose 52. The input of the pump is coupled through another hose 54 to a reservoir of solution such as saline solution. In the preferred embodiment, the dispense manifold has the same number of outlets 48 as there are wells in mixing plates 56, 58 and a diluent tray 60 and a reagent tray 62 and has the same center to center spacing for the outlets 48 as the wells in the trays have.

The plates 56 and 58 are shown as having bar code labels 57 and 59 respectively. The actual positions of these bar code labels are on the opposite surface of the plates but this could not be shown in the view selected to illustrate the system. The bar code read head for the plates is on the same side of the bar code labels, and is located such that the bar code labels can be read when the plates are in their positions on the bed 74 and the bed is moved so that the plates 56 and 58 move past the bar code read head.

The wash head will be described in more detail later, but for present purposes, it is a multichannel head for filling the wells in the various trays with wash solutions, preventing overfill conditions and for emptying the wells. Each well filling position, and there are a plurality of such positions, has an empty and overfill cannula which is connected to an evacuated manifold to empty wells, and a fill cannula which is connected to a manifold which is supplied by wash liquid under pressure from a peristaltic pump 64 through a flexible tube 66. The input to the pump 64 is connected through a flexible tube 68 to a wash solution reservoir. The wash head 44 is coupled to the integrated head 32 by a mechanism (not shown) such that it can be lowered up and down independently of any movement of the entire head. There is a separate wash head movement motor, motor #11 in Figure 2 which implements the independent wash head movement, and a solenoid operated valve 72, #12 in Figure 2, both of which will be described in more detail later.

The pumps 50 and 64 are driven by pump motors #3 and #4 respectively in Figure 2 under control of the computer 34 and motor drive controllers (not shown) in the interface 36.

The multichannel head 42 consists of a plurality of pipette tip supports which are equal in number and have the same center to center spacing as the wells in the various plates under the head. Each tip support, as in the case of the long tips picked up by the x-y head, is sized so as to fit into the projecting end of a short tip stored in a storage position in the plate 62 beneath the head. The manner of picking up the tips is the same as in the case of the x-y head but there is no need to move the multichannel head 42 in the X direction. This is because the plate 62 is in a registered position on a bed 74 such that the tip supports are exactly lined up with the center lines of the tips stored in the storage positions in the plate 62. The bed 74 is supported on rails (not shown) such that it can slide either way in the Y direction. The bed 74 is driven by a belt drive and a motor #2 in Figure 2 (not shown in Figure 1) to cause movement to any desired position on the Y axis. Such movements are made under control of the computer 34 and the motor controller for motor number 2 in the interface 36. In other embodiments, the head 32 may be mounted on tracks and moved in the Y direction, and the bed 74 can be stationary. To pick up a short tip, the bed 74 is moved such the short tips are lined up under the multichannel head tip supports and the integrated head 32 is lowered until the tip supports are seated in the short tip projecting portions. Figure 1 shows the multichannel head with short tips in position on the tip supports. The multichannel head can move in the Z direction only under the control of motor #6 and the computer 34.

There is a tip ejector plate (not shown) located at the bottom of the multichannel head 42 between the upper ends of the tips closest to the multichannel head and the bottom surface of the multichannel head. This plate can move up and down in the Z direction under control of two tip ejector solenoids 76 and 78 controlled by the computer and symbolized as solenoids #8 in Figure 2. When these solenoids are activated, the tip ejector plate is driven down, and the tips are ejected. There is also a projection on the tip ejector plate to eject the long tip on the x-y head when it is moved to the extreme right position in the X direction (farthest from the origin).

There are two bar code read heads which cannot be seen in Figure 1 which serve to read bar codes on the test tubes and the mixing trays to provide identifying information to the host computer and supervisory microprocessor 34 regarding the samples or chemicals in the test tubes and the donors or chemicals present in the mix trays. This information is stored for later use in correlation of donors and reagents stored in particular wells and plates to test results for those plates. These bar code readers are conventional and their details of structure and operation need not be given here.

The cavity of the x-y head has a volume controlled by the position of the piston and piston drive frame 38. The mechanical details of the x-y head 28 are known and available from Cetus Corporation in Emeryville, California in certain models of the

Pro/Pette<sup>tm</sup> instrument system. This internal volume is coupled in any conventional way to a pressure transducer (not shown) by a flexible hose 80 which is long enough to not interfere with operation of the head 32. Preferably the pressure transducer is mounted in the instrument cabinet 82 near the computer 34 and the interface 36. This transducer is symbolized by the transducer #13 in Figure 2.

Figure 2 also includes a programmable read only memory (PROM) 84 and a random access memory (RAM) 86. The PROM stores all the preprogrammed sequences of instructions, i.e., subroutines, for various operations which cause the computer 34 to send the proper addresses, data and control signals on the busses 88, 90 and 92 to the interface 36 to cause the peripheral devices and motors etc., #'sl - 13, to perform the proper movements in the proper sequence. The PROM also contains instructions to ask the user a series of initialization questions regarding the process parameters to be used for each process. The questions are asked through a series of displayed messages on the display of the user interface 94. User interface 94 contains a custom programmed general purpose Intel 8051 microprocessor which scans the keyboard. The software therefor is filed herewith as part of the application documents as Appendix D, which does not, however, form part of the published application. Default answers are stored in the PROM and any answers provided by the user through the keyboard on the user interface are read by the computer 34 and stored in a database for that particular file in an EEPROM 85. The EEPROM 85 then stores the user supplied answers for a modified file as a database for that file along with the file number supplied by the user for that file and the routine in PROM 84 to which the data pertains. Thereafter, when the user requests that that file be run, the computer 34 accesses the database in EEPROM 85 and stores it in RAM 86. When the computer needs to know how much liquid to draw, which wells to put it in etc., it accesses the particular process parameter it needs from RAM 86 when it reaches the particular point in the instruction sequence stored in PROM 84 that calls for the data. There is also a linking field stored in the database for each file which instructs the computer 34 which file, i.e., which address in the EEPROM 85 to start with in executing the next file stored in EEPROM 85 after completing execution of the file currently being processed. Only user modified files stored in EEPROM 85 can be linked. At the end of each subroutine in PROM 84 there is an instruction or set of instructions which cause the computer 34 to access the database for that file in EEPROM 85 and read the linking field. That field will contain the address of the starting point for next the sequence of instructions, i.e., the next file, to be run by the computer 34 from the EEPROM 85. By changing the contents of the linking field in the database for each file, the user can put together long strings of files for execution. The user is asked at . the end of each batch of file initialization questions whether he wants to link the file he has just customized to another file.

The interface 36 serves to connect the host computer to the bar code scanners through a UART 87 and to the motors through a plurality of single chip microprocessor motor controllers. The host microprocessor 34, an Intel 8085 for which the software is filed herewith as part of the application documents as Appendix E(which does not form part of the published application), has data, address and control busses 90, 88, and 92 which are coupled to a UART 87 and a dual UART 89. The two UART's convert the parallel data on the data bus 90 to serial data for communication to other devices in the interface and to a host CPU (not shown). The serial data from the UART 87 is coupled on line 91 to a set of Intel 8051 microprocessors which are programmed as motor controllers 93. The program which customizes each general purpose Intel 8051 microprocessor to become a tepper motor controller (each controller is identical, and each controller can control 4 motors in the system) is filed herewith as part of the application documents as Appendix C (which does not form part of the published application). Each microprocessor so programmed becomes a motor controller which can accept a predetermined set of motor control commands to start and stop each motor it controls, tell each how many steps to move, the run rate and which can read the position of any motor under its control and report that information to the supervisory microprocessor 34. The microprocessor 34 sends these controllers commands regarding the modes to operate in, the motor being addressed, whether the motor is to be started, stopped, jogged or sent to its home position. Certain data bytes are sent to specify the start rate, the run rate, the jog rate, the acceleration rate and the maximum position limit to which the motor will be allowed to more. These data bytes are used to control the velocity profile for each movement of the motors for maximum accuracy in delivery quantities and position. Every start, jog and home command will also contain a destination word indicating the desired position to which the motor should move its driven part. There are also read commands so that the computer 34 can read the position of any given motor to determine the position of that motor's driven part.

The line 91 is also coupled to a bar code microprocessor 95, the software for which is filed herewith as part of the application documents as Appendix B (which does not form part of the published application). The bar code microprocessor 95 is coupled to the bar code read heads #'s 9 and 10, and interprets their signals. The mechanical details of the placement and apparatus for causing the bar code read heads to read the bar codes are conventional. The data derived from the bar code read heads is sent to the host processor 34 via the line 91 and the UART 87 for storage in the RAM 86.

The signals on the control bus 92 tell the various interface circuits whether the computer is reading or writing and other things about the status of the busses and the CPU 34. Each of the motor controllers, UART's and the A/D converter has a separate chip select input on the control bus 92 such that the host computer 34 can individually address each one of these devices alone while the other devices have their bus ports in the tri-state condition effectively isolating the desired device on the bus.

The motor controllers 93 also contain I/O pins which are connected to the tip eject solenoid #8 and to the wash head solenoid vacuum control valve. These pins have specific addresses, and when the host computer 34 wishes to activate one of the solenoids, it addresses the particular I/O pin and sends a data byte which changes the voltage level on the I/O pin to the proper level to activate the solenoid in the proper fashion.

In addition the interface 36 has an A/D converter 97 to convert the analog signal from the pressure transducer #13 to a digital signal which can be read by the computer 34 and put through a comparison routine, the purpose of which is to sense pressure rises in the pipette connected to the x-y head of greater than a certain amount. The A/D converter has a conversion ready interrupt line 99 which signals when the conversion is ready. This line is regularly polled by the host computer 34, and when it signals the conversion is ready, the host computer reads the conversion data from the A/D converter and stores it for a comparison.

Alternatively, the pressure transducer interface circuitry can consist of any circuit which can detect a rise in the pressure in the chamber of the x-y pipette tip. One way of doing this is to set a known reference level and compare the signal from the transducer to the reference level. When the level is exceeded, an interrupt can be generated to signal the processor that the condition being watched for has occurred.

The UART 89 is coupled to a user interface 94 consisting of a display and keyboard through which the host computer 34 displays messages and queries to the user and reads the users responses on the keyboard. The manner of displaying and reading the queries is conventional. There is also a printer 101 which can be connected to the UART 98 to print the user defined files stored in EEPROM 85.

## Flow Diagram of System Control Software For ABO Rh Blood Typing

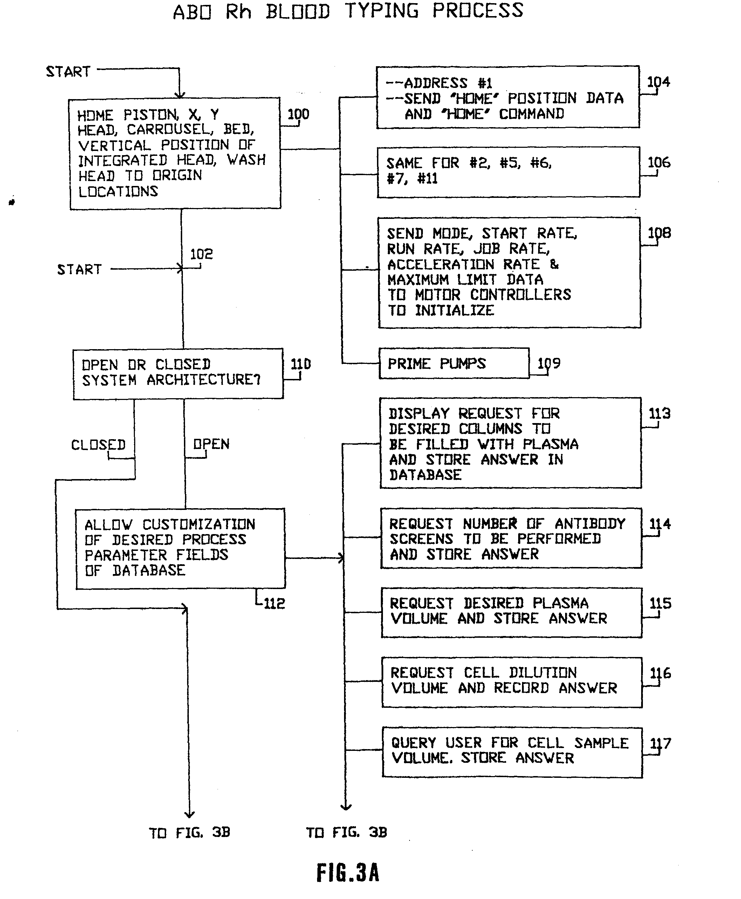

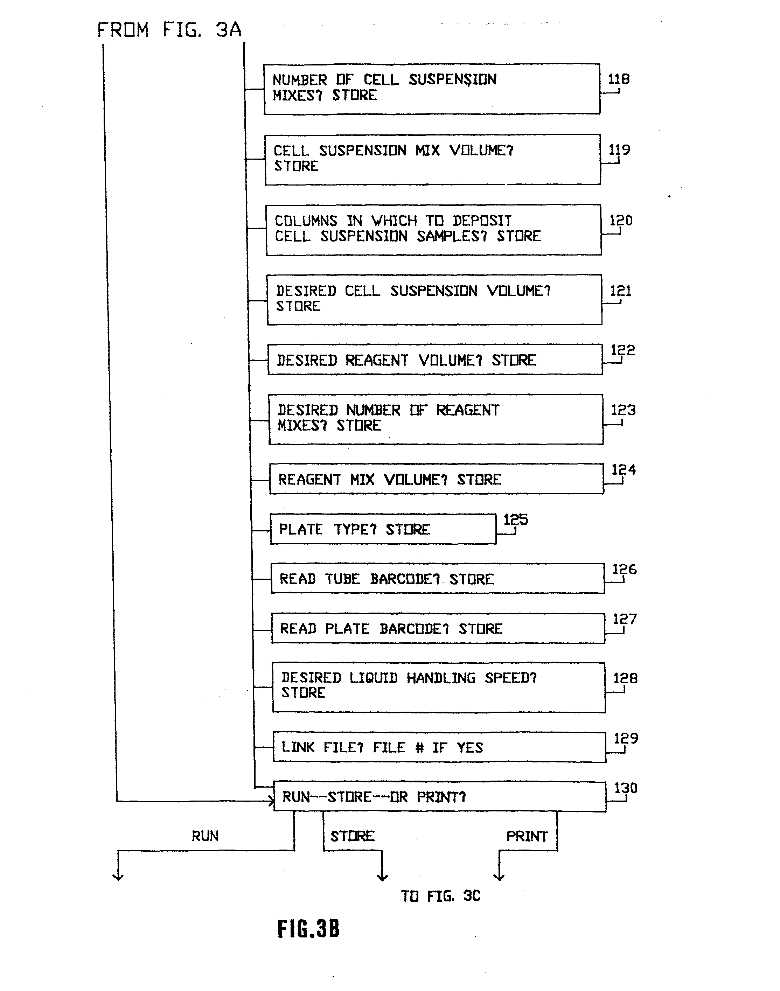

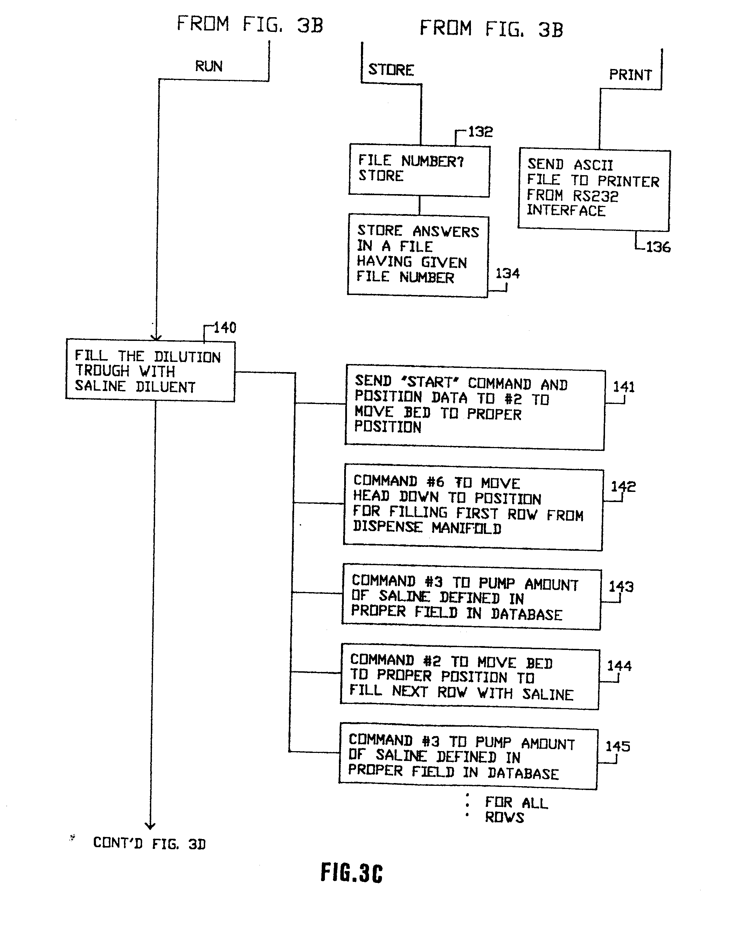

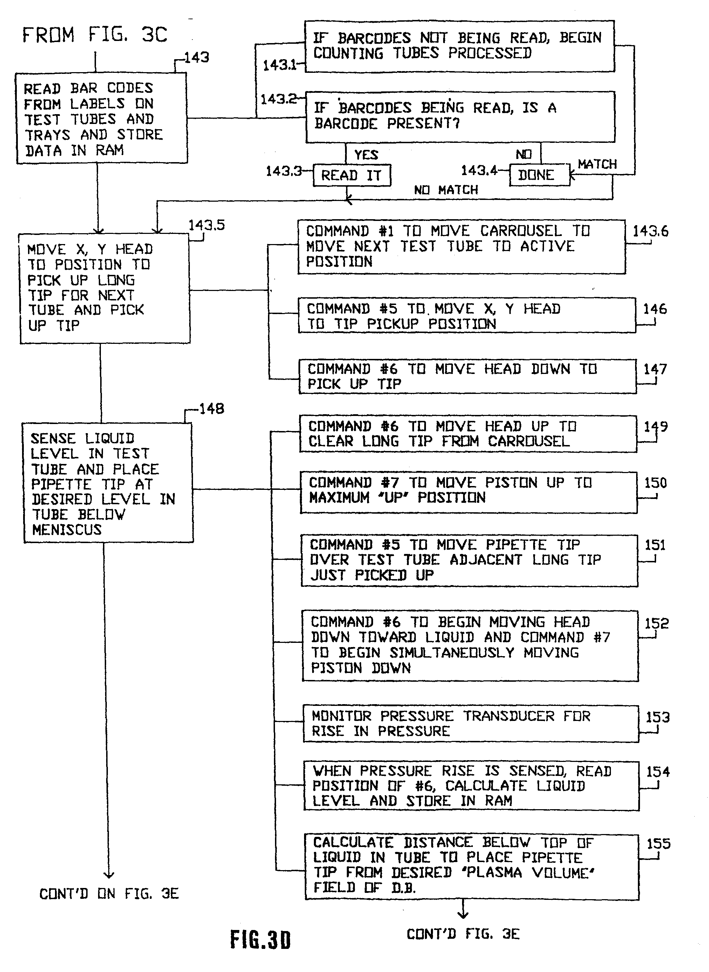

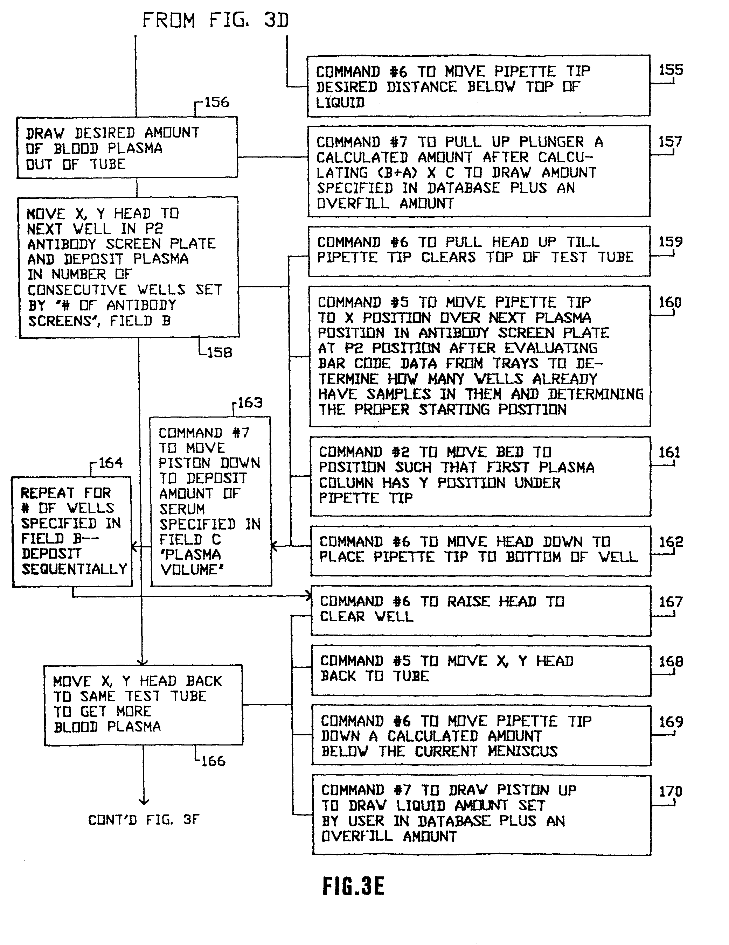

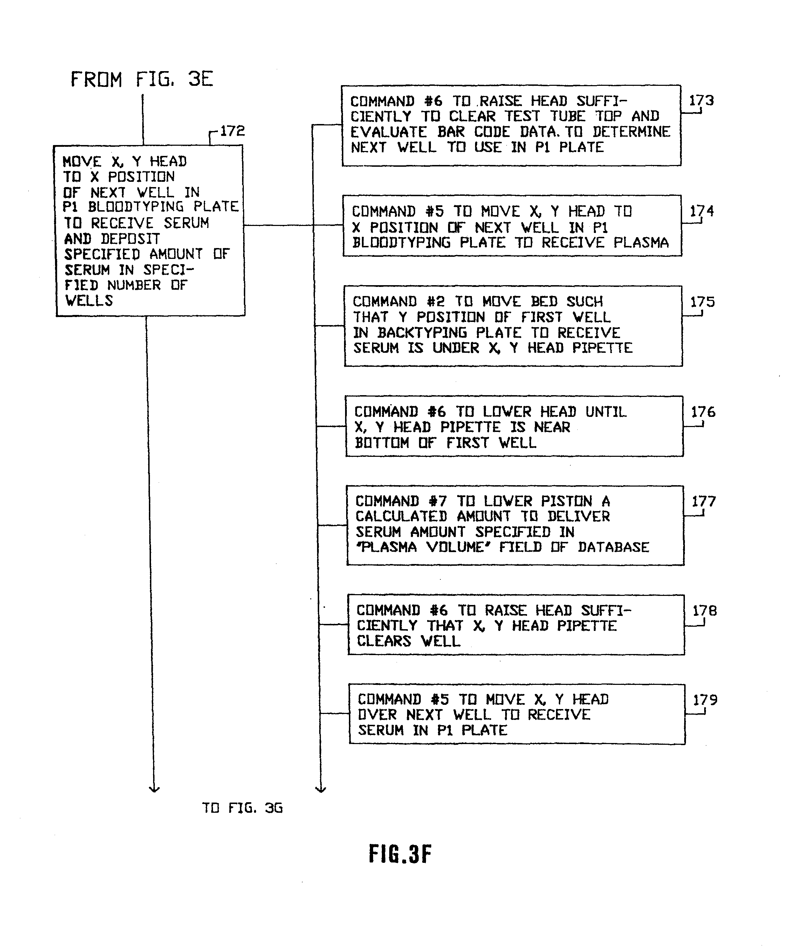

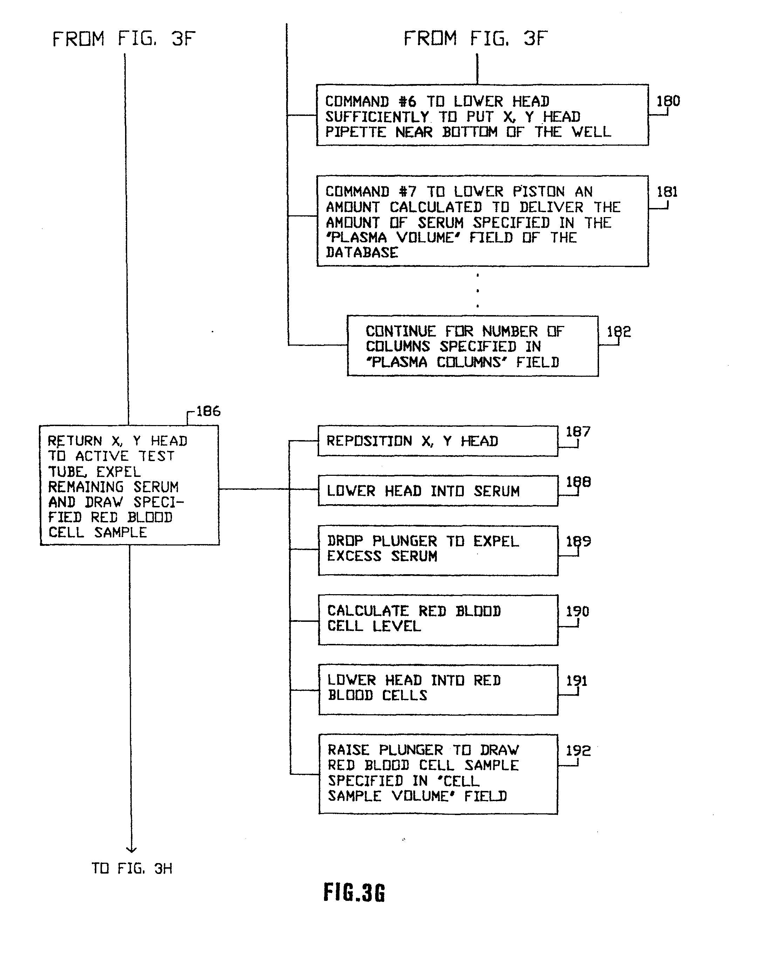

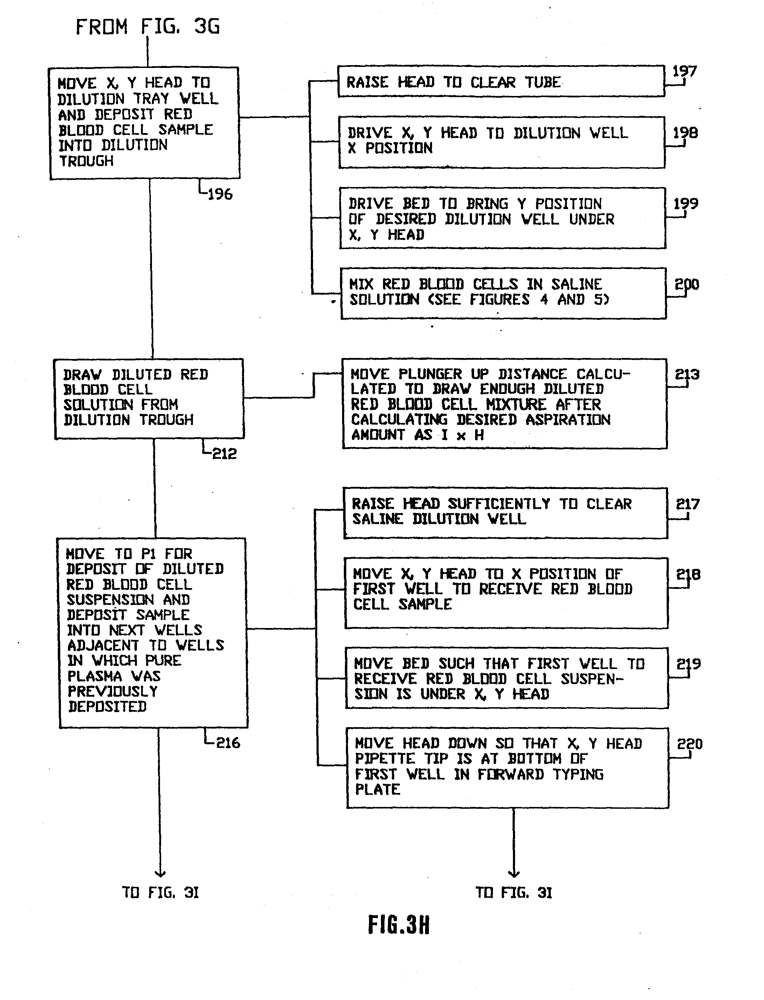

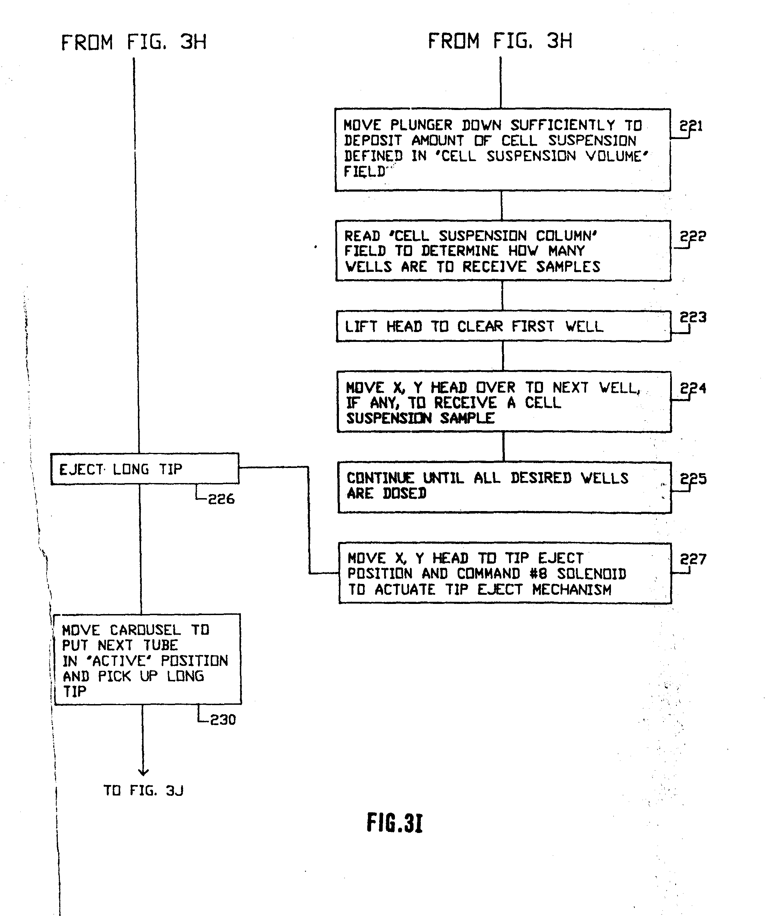

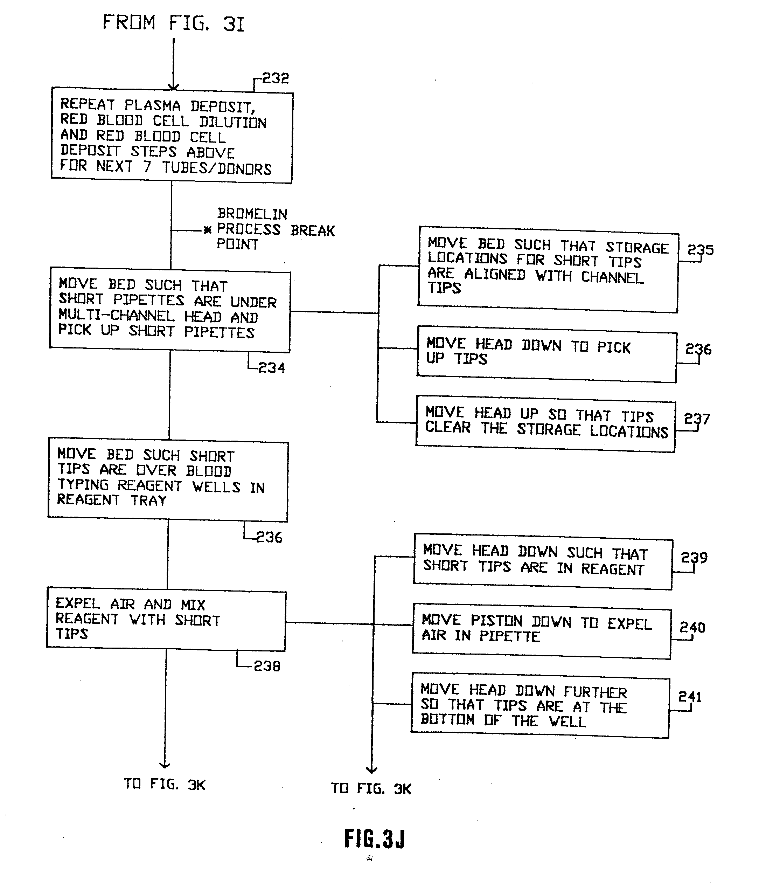

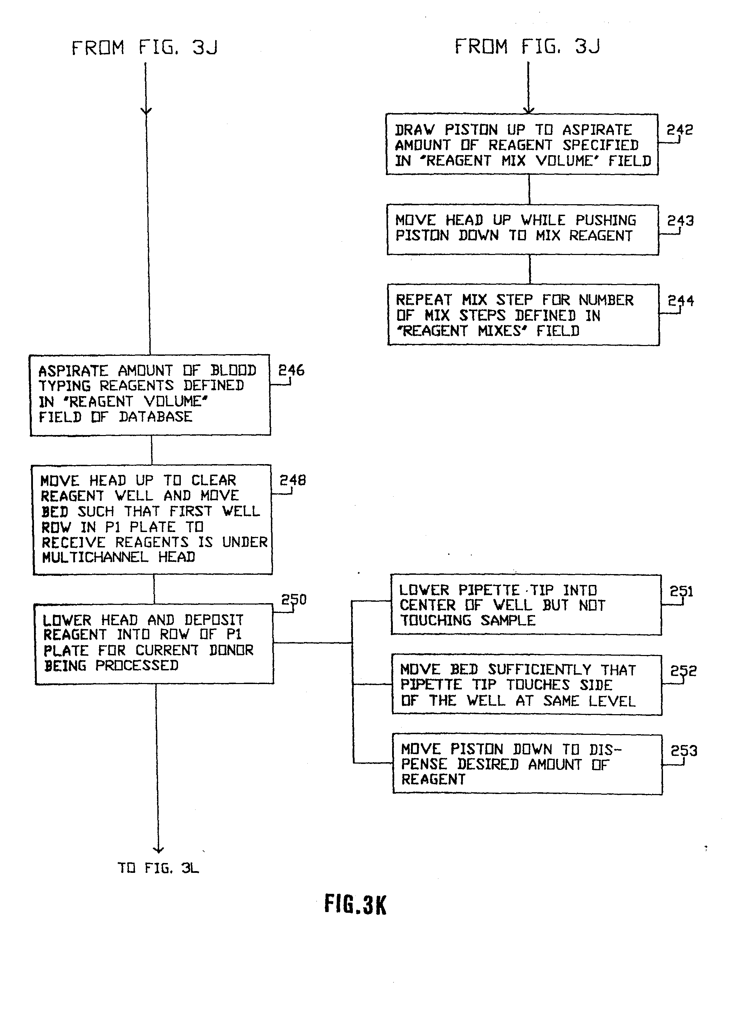

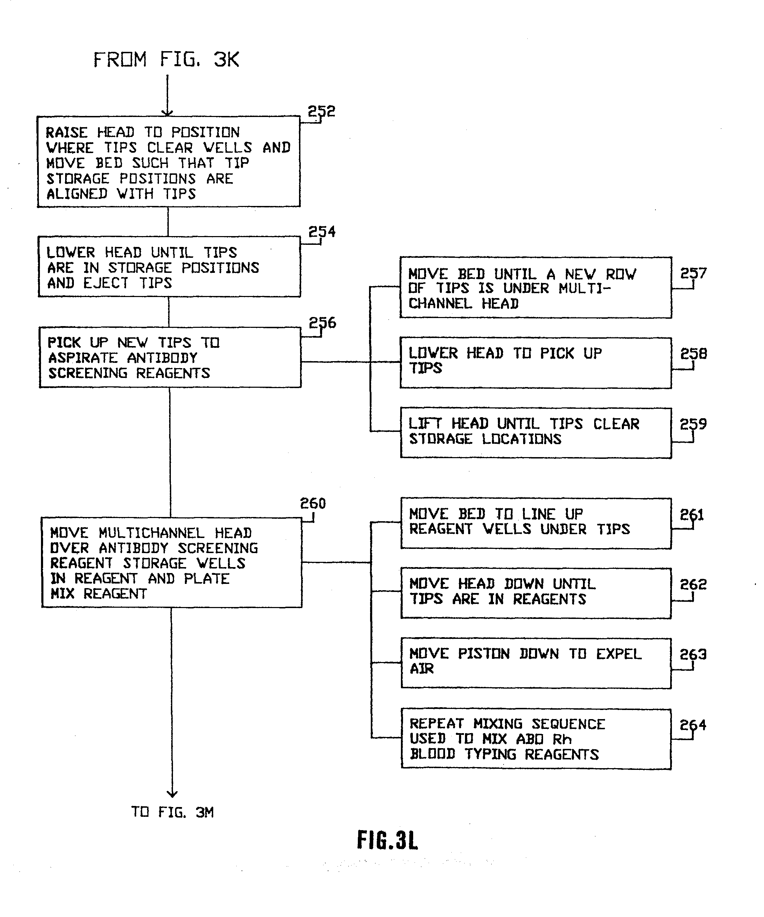

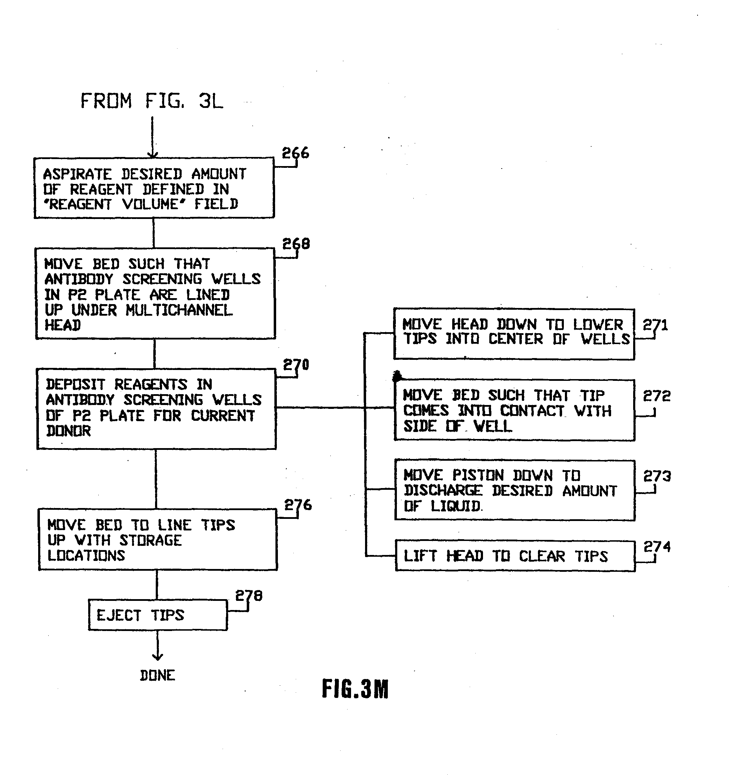

Referring to Figure 3 there is shown a flow diagram of the process the machine implements in doing blood typing. Step 100 is an optional homing step which can be bypassed by starting at the point 102. The purpose of the step 100 is to cause all the motors to move their driven parts to known home positions. The steps 104, 106 and 108 are the detailed steps which are performed to accomplish the step 100. Basically each motor is addressed and sent home position data and a home command. Also velocity profile data is sent to the motor controllers to establish the parameters for acceleration, run rate, etc. that will be used in driving the motors per step 108, and this step normally occurs first.

Step 110 is a step which may be performed to signal the computer whether or not to bypass the file customization routine. In "closed architecture" systems, the computer 34 is signaled to skip the customization routine and to use the default process parameters stored in the PROM. If an "open architecture" is used the computer 34 is signaled to not skip the customization questions. The signaling of an open or closed architecture can be done by a switch to which the user does not have access, a protected file which only one user has access to, by a particular byte preprogrammed into the PROM or by other secure or unsecure means apparent to those skilled in the art. If customization is desired, the step 112 is performed, and the series of steps 113-129 is performed to display the series of user queries on the display 94, read the answers on the keyboard on the user interface 94 and store the answers in the proper fields of the database for that file as stored in the RAM 86. The step 130 is performed regardless of whether an open or closed architecture is used to ask whether the user wishes the file or program to be run, stored or printed. If the answer is "run", the sequence of process steps detailed in the remaining portions of Figure 3 are performed. If the answer is "store", the computer 134 asks for the number under which to store the file, reads the answer from the keyboard and stores the answers just given in a database file under the user supplied file number. If the user says "print", then the answers supplied by him are sent to a printer 101. The data can also be sent to a host computer or other device connected to an RS232 serial port upon request from that device.

Step 140 represents the first step in the blood typing process where the dilution trough is filled with saline diluent. The dilution trough is trough 60 in Figure 1, and it is filled using the dispense manifold 46. The steps 141-145 represent the detailed substeps which must be performed to perform the step 140. The first step is to get the first row of wells in the dilution trough positioned properly under the outlets of the dispense manifold. The dilution trough is typically a trough extending from one end of a rectangular block to the other in the X direction. Two rows of dilution wells are formed in the block forward of the trough in the Y direction (farther away from the origin in Figure 1). Prior to attempting to fill these wells with saline solution the pumps will have been primed as symbolized by the step 109 in the homing routine. This step consists of moving the bed under the dispense manifold and activating the pump motor #3 for a short time to pump some saline solution into the trough and get all air pockets out of the lines. The wash head may be primed in the same way.

After the step 141 properly positions the first row of wells under the dispense manifold, the step 142 activates motor #6 to move the whole head 32 down to position the outlets of the dispense manifold to allow pumping of saline into the wells without splashing. The pump motor #3 is then activated in step 143 for a short time to deliver the proper quantity of saline into each well. The proper amount of saline to be delivered is determined from accessing the database and reading the information supplied by the user in step 116. The above steps are then repeated for all the rows in the dilution trough.

The computer then reads the bar codes of the test tubes and the trays currently resident in the machine and stores them in RAM as per step 143. Bar code labels are applied to the walls of the test tube prior to storing them in the carrousel 20. The bar code read head is located near the outside edge of the carrousel on a support. To read the bar codes, the carrousel is spun by activating motor #1 until a test tube is in front of the bar code test tube read head. The read head is then moved up and down past the label, or scanned by a laser reader and the signals are sent to a microprocessor in the interface 36. The microprocessor interprets the signals in a conventional manner. The program for reading the bar codes is given in Appendix B which is filed herewith but does not form part of the published application. The steps 143.1-143.4 detail the steps in handling the determination as to whether the machine is done processing all the test tubes it has with donor samples in them. If during the initialization of the machine, the user said no bar code reading was to occur, then the computer prompts the user for the number of tubes in the carrousel and begins counting the tubes that it as processed. When the count matches the number of tubes, processing proceeds to step 143.4, and the machine is finished. If the count does not match, then processing proceeds to step 143.5

If the bar codes are being read, then the computer checks to see if a bar code is present. If there is one, then processing proceeds to step 143.3 to read it and then to step 143.5. The bar code microprocessor 95 also checks to see if the tube bar code just read is the same code read from the previous tube as a means of providing a check on the carrousel movement system. If the code is the same, an error condition is signaled. If no bar code is present, then processing proceeds to step 143.4, and the machine is done with its work. A further check for the carrousel movement system is performed by the host processor when the bar code reader signals that the bar code just read is the same as one previously read which indicates that the carrousel has gone one complete revolution. The position of the stepper motor driving the carrousel is read at that time to see if its position corresponds to one complete revolution. If it does not, then an error condition is set.

The bar code read head for the plates is located inside the instrument case near the location where the plates pass by the edge of the casing and at the level of the bar code label. To read the plate bar codes, the computer activates the bed drive motor #2 and moves the bed past the bar code read head until the bar codes on the two trays 56 and 58 have been read. Each tray has a bar code label on it with the bars running in the Z direction. As the tray is moved past the bar code read head, the signals from the bar code reader are sent to the interface 36 where a microprocessor receives the signals and interprets them in a conventional fashion. Alternatively, a laser reader could scan the plate bar codes. The tray 56 will be used to store samples of blood from many individual donors to which blood typing reagents will be added. The tray 58 also stores blood samples from many donors to which other antibody screening reagents will be added to screen the samples for evidence as to whether the donor has any infectious diseases. The computer collects the bar code data from the test tubes and plates in order to remember which donor samples were placed in which cells on which trays. This can be done much more quickly, accurately and cheaply with a computer than with laborious record keeping by hand.

This system lends itself well to automation to work in conjunction with an automated plate reader which reads the results of the tests performed by putting the blood typing and antibody screening reagents in with the blood samples. Such a device can access the data stored in the system of the invention to correlate the test results with the donor information.

To get the donor blood samples into the wells requires that the x-y head must be fitted with a pipette tip suitable for dipping down into the test tubes. Accordingly, the x-y head is moved in step 143.5 to the position to pick up the long tip stored behind the test tube in the active position. The steps 143.6-146 detail the specific steps necessary to pick up the long tip.

The donor blood in the test tubes will have been previously spun in a centrifuge to separate the red blood cells from the plasma. Because a certain amount of plasma must be withdrawn it must be known where the top of the liquid level is so as to know how far down to place the pipette tip to avoid sucking up all the available liquid above the tip and then beginning to aspirate air. This would happen if the tip was not lowered far enough into the plasma. Further, if the top of the plasma level is known, the approximate level of the red blood cells will also be known from statistical hematocrit data. This method of liquid level sensing is superior to liquid level sensing schemes using a single cannula which is inserted into each donor tube, since there is no contamination of donor samples by virtue of the insertion of a tube which has previously inserted in other donor sample tubes. The invention senses the liquid level in each donor tube with the only pipette that will ever be placed in that tube.

Liquid Level Sensing

To sense the liquid level in the test tube in step 148 requires use of a pressure sensing technique detailed in steps 149-155. Basically the technique involves moving the x-y head over the test tube and lowering the tip into the liquid while simultaneously moving the piston down within the pipette chamber to expel air and simultaneously monitoring the pressure in the chamber through use of the pressure transducer. As air is being expelled before the pipette tip is in the liquid there is only a slight pressure rise. However, when the pipette tip becomes submerged there is a sharp increase in pressure in the pipette chamber. The analog signal can be sensed by such apparatus as a comparator or Schmitt trigger in the interface electronics or by many other means. When the pressure rise is sensed, an interrupt to the computer 34 can be generated or the computer can continuously poll the A/D output for completion of the conversion. The service routine for this interrupt can include commands to read the motor position of motor #6 and store that position as the level of the meniscus in the test tube. The computer must then determine how much plasma is to be drawn by consulting the database field containing the amount of plasma to be drawn established by the query of step 115. The computer knows the diameter of the test tube, and calculates how far down the pipette tip must be placed to safely aspirate the desired amount of plasma without aspirating any air. Motor #6 is then commanded to further lower the pipette tip to the calculated level.

After reaching the desired level, motor #7 is commanded to pull the piston upward a certain distance calculated to cause aspiration of the desired amount of plasma. This is performed in step 156 and 157. The amount of plasma to aspirate is calculated from the contents of various variable fields in the database defined in Appendix A as customized by the user. Appendix A is the database stored in RAM for the blood typing assay sequence and defines each field's contents and gives each variable a letter designation. The amount of plasma to aspirate is calculated by adding the contents of field B to the contents of field A and multiplying the sum by the contents of field C, i.e., (# of antibody screens + plasma columns) x plasma volume.

The next step in the process is to deposit the blood plasma in various wells in the antibody screen plate 58. This is accomplished in the step 158 the substeps of which are detailed in steps 159-164. The computer causes the long tip to be pulled out of the serum and moves the x-y head to the proper X position of the first well in plate 58 to receive plasma. Then it moves the bed 74 such that the Y position of the first well to receive plasma is under the long pipette tip on the x-y head. The tip is then moved down into the first well such that the tip is just above the bottom of the well and the plunger motor #7 is activated to move the piston down to deposit the amount of serum specified in field C of Appendix A, the database for the blood typing sequence. The tip is placed at the bottom of the well for the delivery such that the surface tension of the fluid in the well will pull the last drop away from the pipette tip rather than leaving a drop on the tip which could drip into other wells and contaminate them during subsequent movements. This deposit step is repeated sequentially for the number of wells specified in field B of Appendix A. That is, if the field contains the number 3, the deposit steps above described are repeated for the first three wells in the plate 58. The computer must calculate how much plasma to draw from the number of deposits to be made specified in field B and the volume of plasma per deposit, specified in field C, plus a small overfill amount to avoid contamination as described more fully below. The purpose of this deposit is to prepare donor sample for later deposit of antibody screening reagents to test the donors blood for the presence of irregular antibodies which could cause adverse reactions in blood transfusion recipients.

Other samples of serum must be prepared for mixing with reagents which will tell what type of blood the donor has. Thus the machine must go back to the same test tube in the active position to obtain more serum. The step 166 is to accomplish this end in moving the x-y head back to a position over the test tube in the active position. It is normal to overdraw liquid every time liquid is drawn for accuracy in delivery. At this time, the overdrawn amount from the first aspiration may be discharged back into the tube. The same long tip previously used is then dipped into the serum and an amount of plasma is withdrawn as determined by the plasma volume field in the database. The computer must calculate the current liquid level by substracting the volume of plasma previously drawn from the liquid volume as indicated by the meniscus or liquid level previously sensed. Then based upon the number of samples to be deposited and the plasma volume per sample, the computer calculates how much plasma to aspirate and how far below the current liquid level to send the long pipette tip. The computer must not send the tip so low as to accidentally aspirate any red blood cells residing at the bottom of the tube since this interferes with proper plasma testing. The detailed substeps of step 166 are described in the steps 167-170. The computer causes motor #7 to draw the piston up sufficiently to draw slightly more plasma than is actually needed so as to slightly overfill the pipette. This insures that when the samples are delivered into multiple wells that there will be more than enough to give each well an equal dose without fear of running short on the last one and blowing a protein bubble which could burst over other wells sending aerosols into the air to contaminate whatever they fall upon. It is extremely important for the accuracy of test to insure that each donor's sample not become contaminated with cells from another donor's sample. The machine takes extra precautions to avoid this.

The sample blood plasma must then be deposited in the "reverse typing" portion of the ABO blood typing plate 56 for later mixing with reagents which will cause reactions which indicate the blood type. This requires movement of the x-y head to the X position of the first well to receive a sample. The computer must evaluate the bar code data to see if the plate 56 has already been used, and then consult field A of the blood typing database, Appendix A, to determine the exact columns in the first row of the plate 56 which are to receive samples. The plates are generally arranged into 8 rows of 12 columns of wells. If only columns 1, 3 and 5 have been designated, then only those wells will be multidosed with serum. If all of them have been designated, then all columns will receive a sample. The process is performed in step 172 and the detailed steps 173-182.

Blood typing requires not only reagent tests on plasma but reagent tests on the red blood cells also to insure absolute accuracy. Accordingly, the next step is to draw samples of the red blood cells from the currently active donor tube and deposit them in wells specified in the database for later mixing with typing reagents. However, before this can be done several preliminary steps must be done. First the x-y head must be repositioned over the active tube, the excess plasma expelled and the approximate red blood cell level calculated. These operations are symbolized by the process step 186 and detailed in the steps 187-192. These latter steps are detailed in the figures more schematically than previous detailed substeps since those skilled in the art will now appreciate which motors must be activated and what the positioning commands must be to accomplish the functions specified given the above disclosure. Step 187 is a repositioning of the x-y head long pipette over the test tube in the active position. Next the pipette tip is lowered into the serum and the plunger is pushed down to expel excess serum. In some embodiments the plunger may be pushed down without lowering the tip into the serum, but to submerge it before expelling the excess plasma is preferred because this eliminates the possibility of blowing a plasma bubble which may burst and send contaminating aerosols into the air to contaminate other donor's wells.

Step 190 requires a calculation of the red blood cell level. This is done by recalling the liquid level from step 148 and calculating the red blood cell level based upon hematocrit data. It is known that for a given volume of blood, a certain percentage of it will be red blood cells and the balance will be plasma. The approximate percentage of red blood cells is stored in the PROM, so the computer 34 simply uses this constant (which is set to be approximately the minimum hematocrit level blood banks will normally accept) to calculate the approximate level in the tube of red blood cells. The pipette tip is then lowered to a level in the tube which is no higher than 38% up from the bottom of the tube to the original meniscus sensed in step 148. Of course, this level is not critical, and other limits for the penetration of the pipette tip can be used. The critical thing is that an adequate red blood cell sample volume be drawn to accomplish the desired tests, and that the tip be lowered sufficiently into the red blood cells to draw that amount and not draw plasma by virtue of running out of red blood cells. Further other methods of determining the level of red blood cells can also be used such as optical methods such as optically scanning the tube to determine at what level the color or coefficient of light transmission changes drastically. Any method of determining the level of red blood cells including optical sensing methods is acceptable for purposes of practicing the invention. Finally, the plunger is raised an amount sufficient to draw an amount of red blood cell sample specified in field E, cell sample volume, Appendix A.

These red blood cells must be diluted and suspended in a saline or bromelin solution, so the x-y head is moved to a dilution trough 60 where the red blood cell sample is deposited into the saline solution which was previously placed in the dilution trough wells. The red blood cells are mixed thoroughly with the saline solution to insure even distribution and thus accurate dilution. The details of this procedure are specified in the step 196 and its substeps 197-200. The x-y head is brought to the X position of the first well in the dilution trough 60. The next donor sample will be brought to the next well, so the computer must make a record of which wells in the dilution trough have been used. The pipette tip is then lowered into the appropriate dilution well to a level about 25% below the 0.8 milliliter mark in the dilution well to which the well has been filled with saline. The cells are then discharged by pushing the plunger down. By discharging the cells when the tip is submerged, blowing of red blood cell bubbles is prevented. Red blood cells, like proteins, have a tendency to create huge bubbles when a pipette tip containing them is discharged into the air. To avoid contamination, the tip is submerged before the cells are discharged.

Mixing Sequences

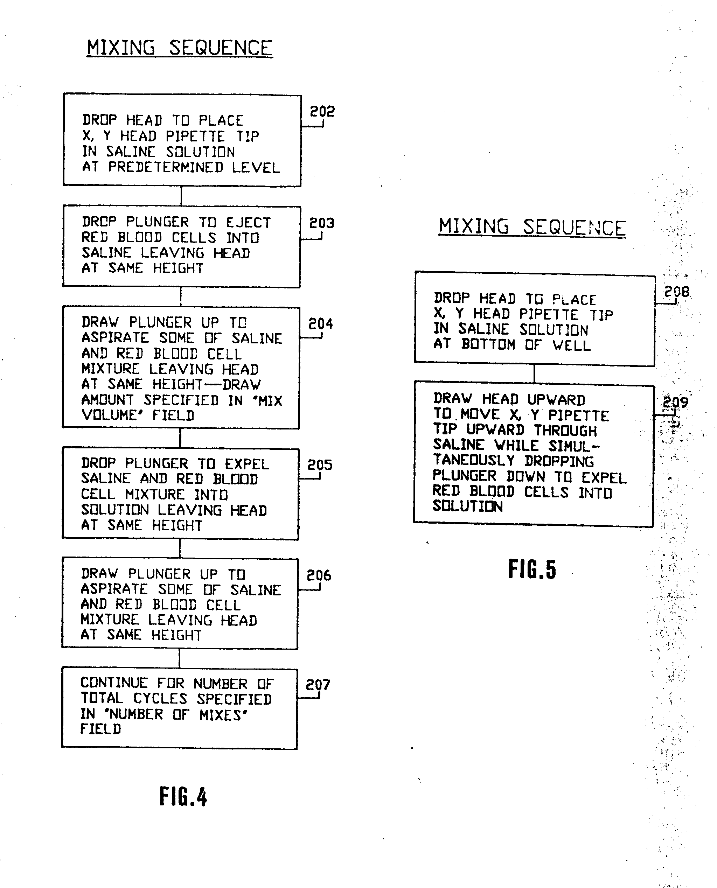

There are at least two embodiments of mixing processes which are acceptable to mix the red blood cells in the saline solution to put the cells in suspension. The first of these mix processes is detailed in Figure 4 and the second and preferred method is detailed in Figure 5. Figures 4 and 5 are intended to be expansions of the step 200 in Figure 3.

Referring to Figure 4, the steps 202-207 detail the steps of the mix sequence. Basically the mix sequence involves lowering the tip of the pipette into the saline solution to the level specified above, and ejecting the red blood cells. Then the plunger is drawn up to aspirate an amount of the solution specified in the cell suspension mix volume field, field G of Appendix A. This solution is ejected, and the process is repeated for the number of times specified in the field F, cell suspension mixes.

Referring to Figure 5, the steps 208 and 209 detail the steps of the preferred embodiment of the mix sequence. This mix sequence involves lowering the pipette tip all the way to the bottom of the saline solution containing well and then slowly raising the tip while lowering the plunger so as to expel the red blood cells simultaneously as the pipette tip rises. The preferred embodiment of the mix sequence is used preferably only on the reagent troughs.

Returning to Figure 3, the step 212 represents the process of calculating the amount to draw out of the trough of the cell suspension in the dilution trough just mixed for multidosing into the forward typing plate 56. The correct amount is calculated by multiplying the number of cell suspension columns requested by the user as given by the field H times the cell suspension volume given by field I. The plunger is then drawn up a sufficient amount to draw the calculated amount of cell suspension up into the pipette plus an extra amount to insure the last dose is delivered accurately. This step is detailed in step 213.

The cell suspension is then ready for multidosing into the selected wells of the forward typing plate 56. This step is symbolized by the step 216 and the steps 217-220 detail the individual moves. The first well to receive a sample of the cell suspension mix is given in the H field of the database. The tip is lowered all the way to the bottom of the well, and the volume of the sample specified in field E is discharged into the well. This process is repeated for all the specified wells.

That finishes the donor sampling portions of the activities with the test tube currently in the active position. Next a new test tube with blood samples from a new donor must be moved into the active position, the old tips must be ejected and a new tip picked up. Steps 226 and 227 represent the process of moving the x-y head over to the tip eject position and activating the tip eject solenoids #8 to move the tip ejector plate downward to knock the old tip into a waste receptacle.

Step 230 activates the carrousel motor #1 to move a new test tube into the active position. This is another time in which the bar code on the test tube could be read, i.e., at a time just before the tube enters the active position while it is in front of the bar code read head.

The above described steps from step 100 to step 230 are then repeated for the next 7 donor test tubes as symbolized by the step 232. Next, the reagent delivery steps must be performed.

Step 234 is the step of picking up the short pipette tips stored in the storage positions on the reagent tray 62. The tips are picked by moving the reagent tray storage positions under the multichannel head by activating the bed drive motor until the tips are under the tip supports. The entire head is then dropped until the tip supports seat themselves in the tip heads.

The bed 74 is then moved so that the short tips are over the first row of reagent storage wells, step 236, and the air is expelled from the tips and the tips are used to mix the reagent as symbolized by the step 238 and its substeps 239-244. The air is expelled after the tips are lowered into the reagent to prevent formation of any bubbles and possible resultant cross contamination. The reagent mixing step involves moving the tips to the bottom of the wells, aspirating some reagent and drawing the tips up slowly while expelling the reagent. This mixing could be done other ways as well such as by the mix of Figure 4, and the mix is repeated the number of times specified in the field K.

Each time the mix is performed, the tip is dropped back to the bottom of the well and the plunger is pulled up to aspirate more reagent.

Step 246 is to aspirate the reagent to be mixed with the donor samples. The amount to aspirate is determined from the reagent volume field, field J times the number of rows of donor samples into which the reagent will be dispensed. The reagent should be taken from near the bottom of the well to avoid sucking any air into the pipette. The reagent tray contains two rows of wells, one row containing reagents to screen for antibodies and the other row containing reagent to do the blood typing. Although the above mixing step pertains to the antibody screening reagents, and the sequence will be repeated for the blood typing reagents in the other row of wells in the reagent plate 62, this order is not critical and could be reversed.

Reagent Delivery Without Cross Contamination

Next, as specified in steps 248 and 250, the reagent is delivered to the first row of wells to receive it. The multichannel head is raised to clear the tips, and the bed 74 is moved so that the first row is under the pipette tips. The head 32 is then lowered until the tips are in the center of the wells. The bed is then moved sufficiently that the tip of the pipette touches the sidewall of the well. The piston is then moved down to dispense the amount of reagent specified in the field J of the database. Two or more different reagents could be delivered in this manner without cross contamination by delivering the first reagent by lowering the tip into the center of the well but not touching the liquid in the well and moving the bed forward away from the origin until the tip comes into contact with the back wall of the well closest to the origin. The preferred embodiment is to lower the tip until the lower extremity of the tip is even with the top of the well. The second reagent would be delivered identically after picking up a new tip except that instead of moving the bed forward, the bed 74 would be moved backward toward the origin until the tip comes into contact with the forward wall of the well. Of course, any other portions of the side wall could be used with the same degree of effectiveness. It is only necessary that contact between the tip and the side wall be made to allow the wall to draw off any last drop on the tip for each delivery, and that a different portion of the side wall be used for each delivery of a specific type of reagent. A new tip must be used for each new type of reagent. The tips are not lowered low enough to come into contact with donor sample. This manner of delivery not only avoids cross contamination between donor samples, it also prevents cross contamination between reagents. It also prevents cross contamination by dripping of reagents or cells from one donor into the sample wells of other donors during table travel. Dripping is prevented by virtue of the surface tension effects of the walls in contact with the tips and the last drops of the reagents as the tip is withdrawn from the well. This tends to draw off the last drop into the proper well as the tip is withdrawn.

In other embodiments, the reagent delivery could be done by the x-y head. The short tips could be picked up by moving the x-y head over the bed and moving the bed such that a short tip was lined up under the tip support of the x-y head. The head 32 could then be lowered until the tip support seated into the tip. Each individual tip storage location could be reached by moving the x-y head along the X axis. An added advantage of using the x-y head for reagent delivery is that four reagents may be delivered without cross examination. The reagents are delivered by lowering the tip into the center of the well but not into contact with the donor sample and either moving the bed forward or backward along the Y axis until the tip comes into contact with the side wall or moving the x-y head either left or right along the X axis until the tip comes into contact with the side walls of the wells. One of these front, back, left or right shifts would be used for each delivery until four reagents have been delivered and all four shifts have been used. Because the tips never come into contact with the donor sample, they can be used to multidose other donor sample wells without cross contamination. Such a system would clearly be equivalent to the system as described herein and well within the skill of the art to modify the programs included herewith to implement the process. The steps 251-253 detail the reagent delivery for only one shift using the multichannel head since that is all that is necessary for this blood typing process.

Steps 252 and 254 and 256 represent the process of replacing the short tips in their storage positions in the reagent tray 62, ejecting them and picking up new short tips. The reagent tray 62 has two rows of tip storage positions, one row for storing tips for the antibody screens and one row for storing tips for blood typing. The steps 257-250 detail the substeps for picking up the new set of antibody screening reagent tips. The steps 260-264 detail the steps of moving the multichannel head 42 over the row of reagent storage wells and using the tips to mix the reagents using one of the mixing sequences described above. The sequence is very similar to the mixing sequence detailed above for the other set of reagents. The step 266 represents aspiration of the desired amount of the antibody screen reagent from near the bottom of the well.

Steps 268, 270 and the substeps 271-274 represent movement of the multichannel head over the first row of antibody screening wells and delivery of the reagent in the same fashion as described above for the delivery of the blood typing reagents. The comments above for the delivery without cross contamination with either the multichannel head or the x-y head apply equally here. The last steps 276 and 278 are tip storage steps where the short tips are ejected back into their storage positions

The part of the blood typing process done by the invention described here is now complete. From this point, the plates are removed and another machine optically evaluates the wells to make the blood typing and antibody screen determinations for each donor. The system above described has an RS232 port through which the other machine can access the donor and well information to correlate the results of the tests from all the wells to the donors whose blood was in those wells.

Wash Head Assembly

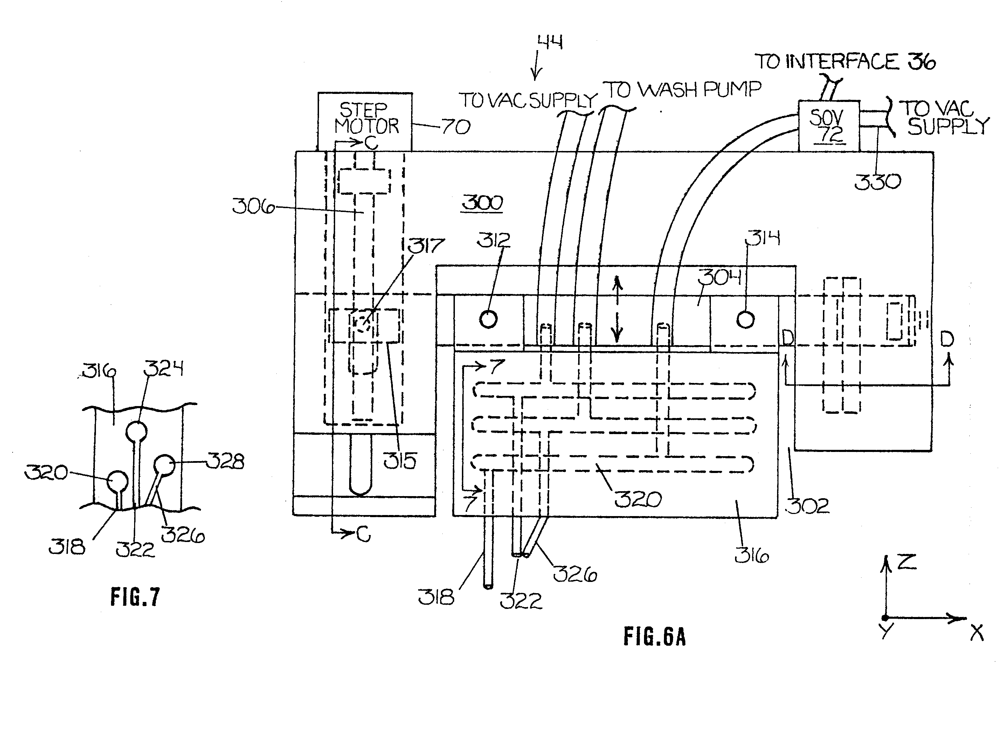

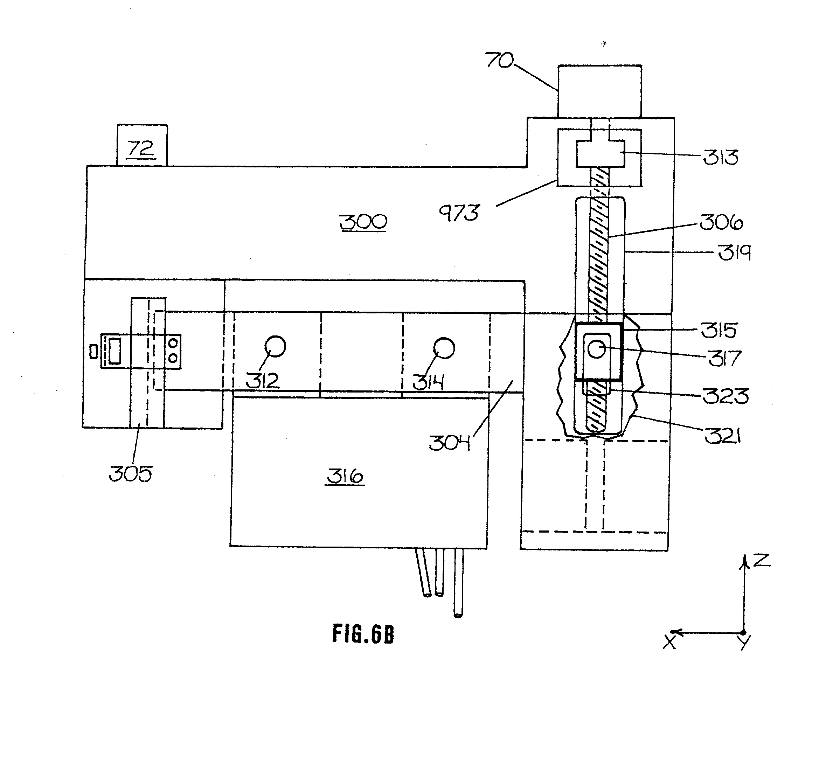

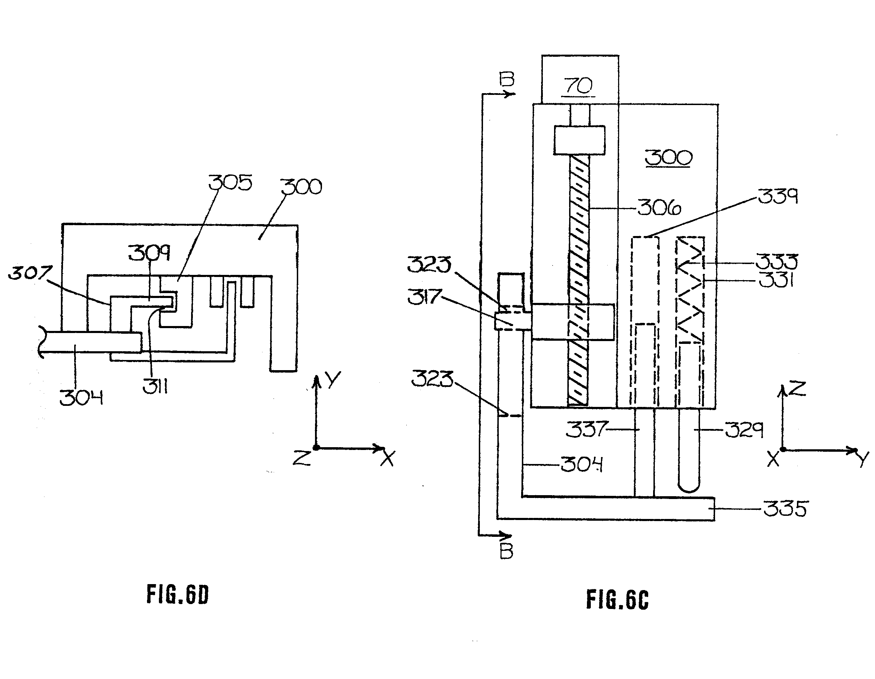

Referring to Figures 6A-E, there are shown more detailed drawings of the wash head assembly 44. Referring first to Figure 6A there is shown a front view of the wash head assembly showing the wash block in its normal extended operating position. The wash head is comprised of an inverted U shaped block 300 with an inset area 302, a wash block 316, cannula 318 ,322, 326 and their associated manifolds 320, 324 and 328 and a step motor 70 with its associated drive apparatus for moving the wash block 300 and a solenoid operated valve 72. Figure 6B is back view of the wash head looking along the positive Y axis from an origin from the opposite side of the side shown in Figure 6A. i.e., the view line B-B in Figure 6C. Figure 6C is a side elevation sectional view of the wash block taken along the section line C-C in Figure 6A. Figure 6D is a bottom sectional view taken along the section line D-D in Figure 6A showing the details of the support for the wash block support at the end opposite the step motor 70.

A movable plate 304 is coupled to the back side of the wash head block (nearest the origin in Figure 1 when installed) by tracks or other means by which the plate 304 can be free to slide up and down in the Z direction. In the preferred embodiment shown in Figure 6B, the moveable plate 304 is supported on one end by a track support 305. The details of this track and the coupling with the moveable plate are best seen in Figure 6D. The moveable plate has a projecting arm 307 which is L shaped and which has a projecting portion 309 which rides up and down along the Z axis in a track or inset region 311 of the track support 305. The moveable plate 304 is coupled to a stepper motor 70 by a worm gear 306 through a universal joint 313 and a threaded coupler block 315 and driving pin 317. The universal joint provides alignment flexibility for the worm gear and is best seen through the aperture 973 formed in the back of the block 300 as shown in Figure 6B. The threaded coupler 315 has a threaded aperture which engages the threads of the worm gear 306 such that the threaded coupler rides up and down along the Z axis when the stepper motor 70 turns the worm gear 306. A support track for the movement of the threaded coupler 315 is provided by tracks on the walls of a slot 319 formed in the block 300 parallel to the axis of the worm gear 306. Projecting portions of the threaded coupler engages the tracks on the walls, but any other mechanism which provides slideable coupling between the block 300 and the threaded coupler 315 will also suffice for purposes of practicing the invention. The threaded coupling's purpose is to translate the rotary motion of the worm gear 306 into linear motion along the Z axis, and any mechanical arrangement which will accomplish this function is acceptable. Other arrangements will also work to cause motion of the plate 304 vertically along the Z axis such as use of a solenoids and a latching mechanism to drive the plate 304 between its extended position, i.e., down the Z axis as far as it can travel toward the origin, and its retracted position as far up the Z axis as the block can travel. Further the motor 72 could be mounted with its shaft parallel to the Y axis and a belt drive could be used. A belt could be used between a pulley on the end of the motor shaft and another pulley attached to the frame 300 close to the plate 304. This second pulley could drive a gear which engages a linear gear track attached to the plate 304 thereby translating the rotary motion of the pulley into linear motion of the plate along the Z axis. Any arrangement that can produce linear motion along the Z axis for the plate 304 will suffice.

Figure 6B includes a cutaway portion 321 on the back of the moveable plate 304 to allow viewing details of the threaded coupler 315 and the worm gear 306 and the slot 319. The driving pin 317 resides in a slot 323 formed in the moveable plate 304 as seen from the side in Figure 6C (the limits of the slot 323 are shown in phantom) and as seen from the back in Figure 6B (the slot is in the cutaway region but its outlines are not shown cutaway for purposes of allowing the reader to visualize its relative position). The purpose of this slot is for safety purposes which will be described more fully below.

The plate 304 has two projections 312 and 314 extending out into the inset area 302 along the Y axis. The purpose of these projections is to provide a means to attach a wash head block 316 to the movable plate 304. The projections preferably have a locking recess on them such that the wash head can be snapped into place and locked, and later removed easily and without the use of tools. Alternatively, the wash head may be attached to the plate 304 by threaded machine screws. The purpose of the motor 70, the movable plate 304 and the worm gear 306 is to allow the wash head 316 to be moved into and out of an extended position independent of the movement of the overall head 32 up and down in the Z direction. This allows the wash head to be extended during wash operations while the rest of the head is positioned far enough above the wells being washed so as to not be splashed by the wash solution. When wash operations are not being performed, the wash head may be retracted so as to be out of the way of the other operations of the head 32.

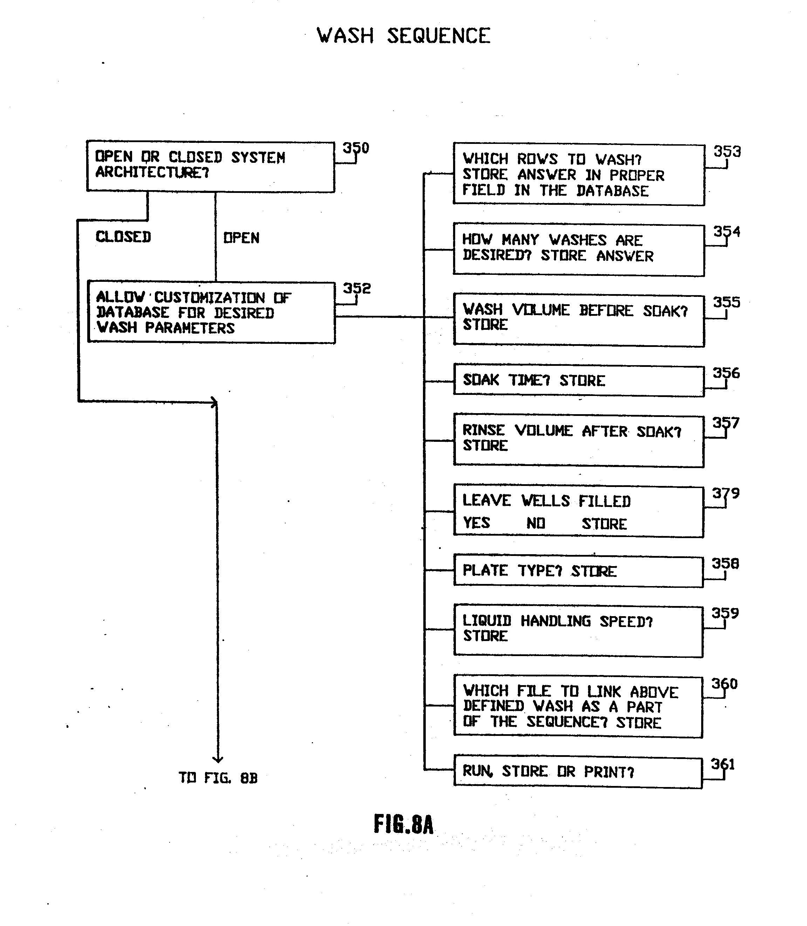

The wash head 316 has a plurality of sets of three cannula or hollow tubes extending from the lower surface closest to the origin. These cannula each have a different function, and each is connected to its own separate manifold. For simplification purposes, only the first set of cannula are shown in Figures 6A and 6B. All three cannula of each set extend into a single well. The longest cannula 318 is coupled to a vacuum manifold 320 and serves to empty the well under certain conditions. The cannula 322 is connected to a vacuum supply manifold 324 and serves as an overfill protection device. As seen in Figure 7 which shows a cross sectional view of the manifold portion of the wash block 316 as seen along the section line 7-7 in Figure 6A, the cannula 322 passes alongside the manifold 320 without a vacuum connection such that each manifold is independent of the other. The same is true for the manifold 328 and the cannula 326 to be described below, i.e., the manifold 328 makes no connection with any of the other manifolds. The cannula 318 and 322 can be side by side along either the X or Y axis. Vacuum is preferably always supplied to the manifold 324 from the vacuum pump #14 in Figure 2 thereby preventing the liquid level in any well being washed from rising above the end of the cannula 322. However, in other embodiments, this vacuum can be supplied only when necessary. An angled cannula 326 is coupled to a wash solution supply manifold 328 which is supplied with wash solution under pressure from the pump 64 in Figure 1 via the hose 66. The cannula 326 is angled at a ten degree angle to give the wash solution a swirling effect when it is injected into the well being washed.

A solenoid operated valve 72 supported by the block 300 serves to connect or disconnect a source of vacuum connected to an input hose 330 to the vacuum supply manifold 320 of the empty cannula 318. The solenoid operated valve 72 is electrically driven by drive circuitry controlled by the computer 34 in the interface 36. Thus the computer 34 can shut off the vacuum supply to empty cannula 318 at will. This is done during a washing operation when wash solution is being injected through the cannula 326. The overfill cannula 322 is always supplied with vacuum.

A safety feature of the wash block design is a non-rigid connection between the driving pin 317 and the moveable plate 304 when the worm gear 306 is moving the driving pin 317 in the negative Z direction. Note how when the driving pin 317 is being driven in the negative Z direction, there is only the open expanse of the slot 323 in front of the driving pin. Gravity and the effect of a spring loaded pin 329, seen best in Figure 6C, assist in moving the wash block 316 downward. The spring loaded pin 329 slides in a bore 331 formed in the block 300. A spring 333 interposed between the end of the pin 329 and the top of the bore 331 causes the pin 329 to be constantly biased to move in the negative Z direction. A projecting portion 335 of the moveable plate 304 lies under the tip of the pin 329 such that as the pin is moved downward by the action of the spring 333, the pin engages the projecting portion 335 and the bias force of the spring is transferred through the pin 329 to the moveable plate 304. This bias force keeps the moveable plate 304 spring biased such that, absent any obstacles in the downward path of the wash head 316 attached to the moveable plate 304, the driving pin stays engaged with the top of th slot 323. In an obstacle such as a hand or a plate is encountered during the downward travel of the cannula, the upward force exerted on the wash block 316 is transmitted to the moveable plate 304 and then to the pin 329. This compresses the spring 333 allowing the moveable plate 304 and wash block 316 to remain stationary at the point of contact with the obstacle even though the stepper motor 70 and worm gear 306 continue to attempt to move the wash block 316 down. The driving pin 317 continues to move in the negative Z direction in this condition, but it moves harmlessly in the slot 323 thereby preventing any further downward movement of the wash block 316 and consequent injury or damage.

Additional support and guidance for the movement of the wash block is provided by a guide rod 337 seen in Figure 6C engaged in a bore 339 formed in the block 300.

## Wash Process Control Software

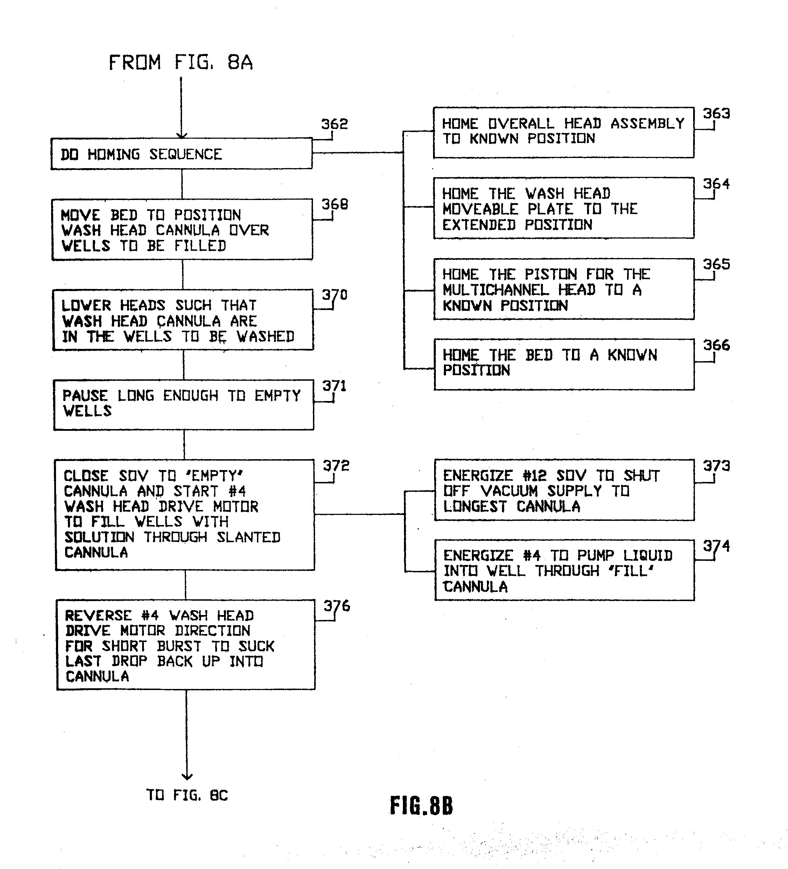

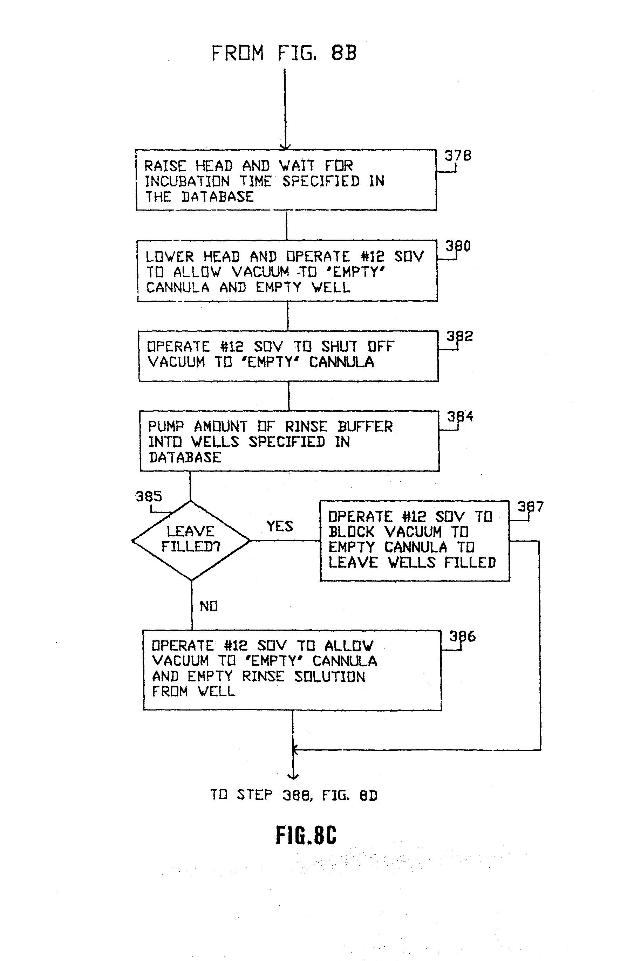

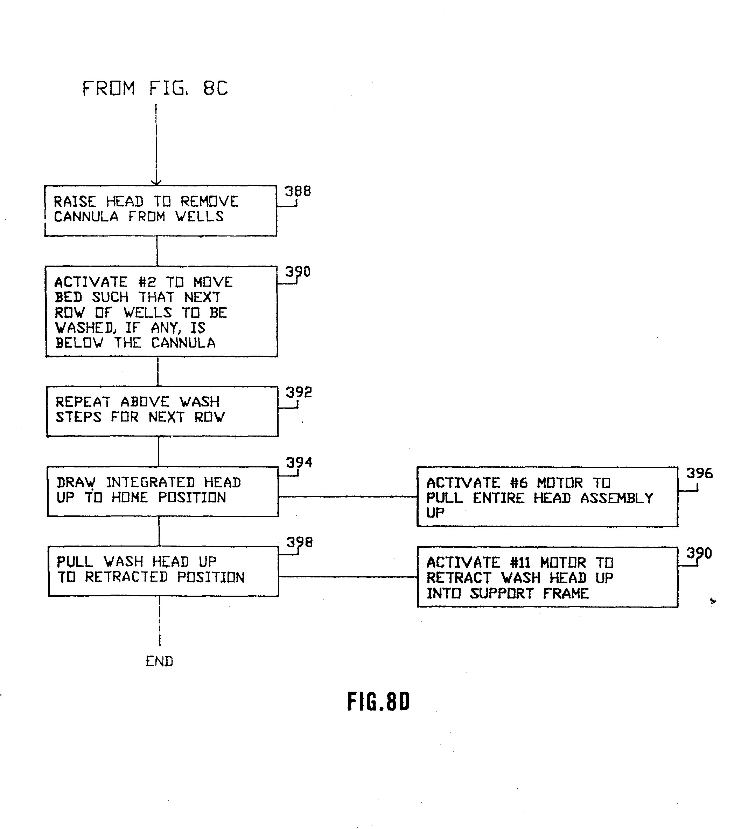

Referring to Figure 8 there is shown a process flow diagram for the sequence of steps performed during a well washing operation. First the computer determines whether the system is configured in a closed or open system architecture in step 350. This check can be done in any number of ways as described above. If the architecture is closed to customization, the default answers which are preprogrammed in PROM in a database for the wash sequence are used and the user customization questions of step 352 are skipped. If the system is open, a series of questions are asked of the user by display on the display of user interface 94 in the same manner as in the blood typing sequence described above. The questions and the process of reading the answers and storing them in a database for the wash sequence file stored in RAM 86 or detailed in steps 353-361. The variables of the fields of the database for the wash sequence can be determined by study of the steps 353-361 and the step 379. The step 379 provides considerable flexibility in the wash sequence in terms of incubation time possibilities when used in conjunction with a linking address to a time delay file. The step 379 allows the user to specify that the wells be left filled by rinse solution at the end of the wash. Processing can then be vectored to a time delay file and then back to another wash file by use of another linking address in the time delay file.

The steps 355 and 356 represent the setting of parameters for an incubation period during a wash. The wash sequence is typically used to wash wells in plates which have been pretreated by their manufacturers with antigens or antibodies bound to the walls by binding compound. The wash process is to remove unwanted matter after a donor sample or a reagent or both are added to the well, and the incubation time is to allow any reactions which may occur to occur.

After the soak, there is a rinse step to remove contamination from the tips of the cannula. The volume of this rinse is set by the user in the step 357. The step 358 allows the user to customize the file such that different size plates can be used with well heights that are different. This field adjusts the height of movements of the head 32 such that the cannula clear the wells and descend far enough into the wells regardless of the well height. This is important to prevent any of the proteins on the walls from being accidentally scraped off by movements of the head.

Step 360 allows the user to link the wash sequence file to other files such that the wash can be carried out anytime before or after another file sequence is performed. The field established by the step 360 essentially establishes a go to address in the wash sequence database to direct the computer to the starting address in the PROM 84 for the next file to be run. As an example of the flexibility this system provides, an entire assay can be constructed by the user by linking certain files. For example, the user can use any of the tube to plate processes described herein, followed by a wash file to clean a plate, and link this file to a plate fill file to fill the plate with reagents and human samples or chemicals to be assayed. The plate fill file is a known file available from Cetus Corporation under the trademark Pro/Pette Express$^{tm}$. The plate fill file can be linked to a time delay file also, available with the Express package, and the delay file can be linked to another plate fill file to add another reagent. In this manner great flexibility is provided to the user in designing automated assays.

The first step in the wash movement is to do homing of the overall head 32, the piston, the bed and the wash head movable plate to known positions. These movements are detailed in steps 363-366. The home position for the wash head movable plate 304 is the extended position.

The step 368 represents putting the proper tray wells under the wash head by moving the bed 74. Then the wash head cannula are moved into the wells by lowering the head 32 as per step 370. Because there may already be liquid in the wells, it is desirable to empty this liquid before pumping washing solution in to prevent dilution of the wash buffer. For this reason, a pause step 371 causes a pause by the wash head after it has been lowered into the well for a long enough period for the empty cannula, which has vacuum applied to it at that time, to empty the wells. Then the wells are filled with wash solution through the wash cannula by shutting off the vacuum to the empty cannula 318 by activating the solenoid 72 in such a manner as to cut off the vacuum supply to the manifold 320. Then the wash head pump motor 64 is started to pump liquid through the manifold 328 into the wells to be washed as detailed in substeps 373-4. The wash head pump motor 64 is driven in accordance with a velocity and acceleration profile which is designed to give good accuracy in the volume of fluid delivered. This velocity profile can be changed by programming the computer (not a user accessible programming change) to initialize the motor controllers with different ramp up, run and ramp down velocity profiles.

It is optionally desirable at the end of the velocity profile to reverse the pump motor 64 for a short burst to draw the last drop of wash solution back up into the wash cannula 326. This is done in the step 376 to prevent dripping when the wash head is moved to a position over a new set of wells to wash. This same technique can be used with the piston 38 to draw it back up to aspirate the last drop of sample or reagent after a delivery prior to movement of the head back to a tip storage position or to a new tube or set of wells in alternative embodiments of the liquid handling routines described herein.

After the wash solution has been delivered, the head 32 is raised, and the solution is left to sit for the incubation time specified in the database. This allows proteins that are on the walls of the well to diffuse into the wash buffer for a better wash. Removing the cannula from the solution prevents these proteins from diffusing up into the cannula and possibly contaminating them. This step is performed at 378.

Next in step 380 the solenoid operated valve #12 is actuated to reopen the vacuum supply to the empty cannula 318 after lowering the head to put the empty cannula very close to the bottom of the well. This draws liquid up into the manifold 320 and out to waste to empty the well of all the undesired matter. In step 382, the solenoid valve #12 is again actuated to shut off vacuum to the empty cannula 318, and in step 384 the well is rinsed by activating the motor 64 to pump rinse buffer into the well. This also cleans out the inside of the wash cannula 326 and the outside of the other cannula to avoid contaminating other wells. The inside of the other cannula get cleared out by sucking action of the vacuum supply to each.

Next a branch test is performed in step 385 to check the database for the answer given to the prompt of step 379 in Figure 8A. If the answer to the question of whether the wells are to be left filled is yes, a step 387 is performed to operate the solenoid operated valve 72 in such a manner to insure that vacuum to the empty cannula is blocked to leave the wells filled. Thereafter, processing is vectored to a step 388 to raise the head to remove the cannula from the wells.

If the answer to the test of step 385 is no, processing is vectored to a step 386. In step 386, the solenoid operated valve is opened to allow vacuum supply to the empty cannula 318 to empty the wells. Thereafter, processing is vectored to step 388.

In step 388, the integrated head 32 is raised to remove the cannula from the wells just washed, and in step 390 the bed motor #2 is activated to move the next row of wells to be washed under the wash head. The rows to be washed are specified in the field of the database filled in the step 353. The above described wash steps are then repeated for each well row to be washed as symbolized by the step 392. In steps 394 and 396, the integrated head 32 is pulled up by activating motor #6 to clear the cannula from the wells. Finally, in steps 398 and 390 the wash head is retracted by activating motor #11 to pull the movable plate 304 to its position of maximum Z axis retraction (away from the origin).

## Assay Sample Handling Process Control Software

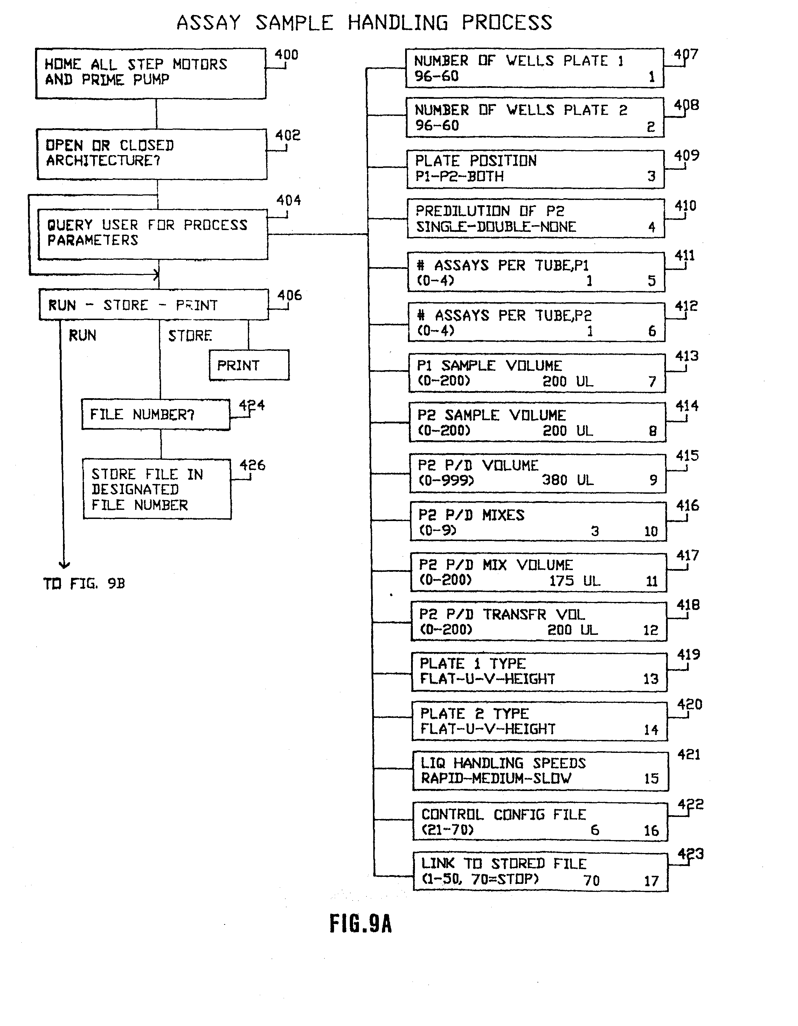

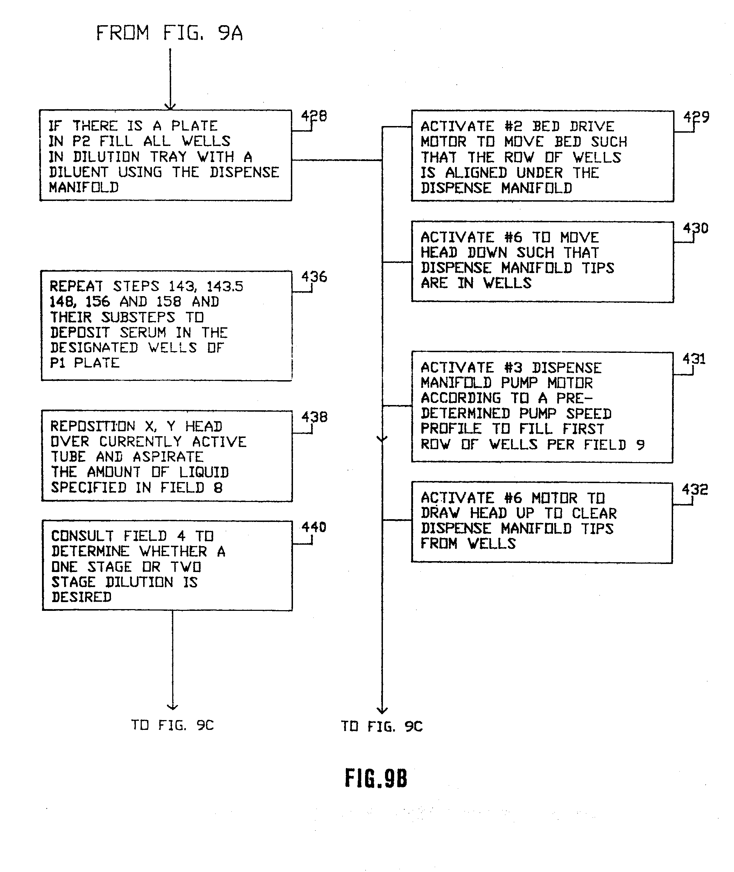

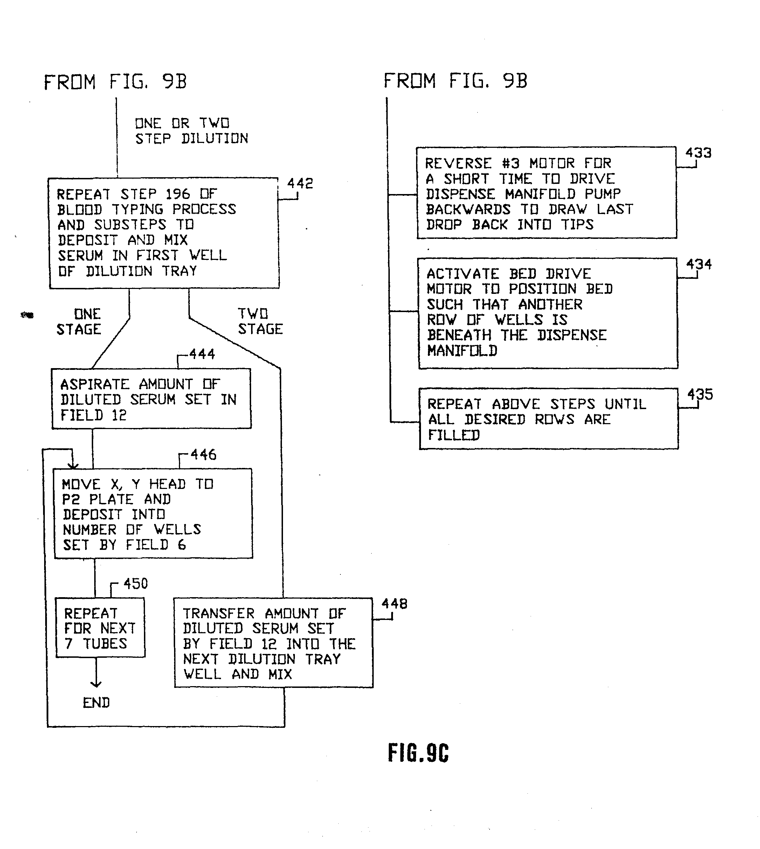

Figure 9 shows a flow diagram for a general assay-sample handling process. This process is used for preparing diluted and undiluted samples of blood plasma or other fluid to be assayed in trays 56 and 58. The first step 400 is to home all step motors and to prime the pumps. To prime the pumps, the bed 74 must be brought to a position such that the dispense manifold is over the trough in the dilution tray 60, and the pump motor #3 is activated for a short time. To prime the wash head pump, the bed is brought to a position such that the wash head is over the trough in the dilution tray, and the wash head pump motor #4 is activated for a short time.

Next in step 402, the computer determines whether it is dealing with an open or closed architecture. If the architecture is closed, processing proceeds to step 406 to determine if the user wishes to run the file, store it or print the database. If the architecture is determined to be open, and this is done as in the earlier described processes, then processing passes to step 404 to query the user regarding the process parameters he or she desires. Steps 407-423 are the queries that the computer puts to the user to compile a database for the desired process parameters. In each of these steps, the question listed in the top line of the block is displayed on the user interface display with the range of possible responses listed below the question. Default values, if any, are listed to the right on the second line. In the extreme lower right corner of each box is an arbitrarily assigned field number which will be used herein to identify the particular variable established in that particular step. At each step the computer reads the user's response from the keyboard on the user interface 94 and stores the answer in RAM. Processing then proceeds to step 406.

If the user responds "store" at 406 the newly designated process parameters are stored in the file number given by the user in steps 424 and 426. This provides good long term reproducibility of assay procedures and reliability in processing after assays have been optimized for a particular application. If the user responds "run", processing proceeds to step 428 where the wells of the plate in the P2 position are filled with a diluent such as water, saline or a buffer. The steps 429-435 detail the substeps for activation of the various motors necessary to implement this procedure. The motor profile and short reversal at the end of the dispense to aspirate the last drop can be used in step 140 of the blood typing sequence as well and in the similar step in the bromelin treatment process as well. Processing them proceeds to step 436 which represents a repetition of many of the steps of the blood typing process. Steps 143 and 143.5 are repeated as they were done in the blood typing process. Step 148 is repeated as in the blood typing process except that the level the pipette tip is placed below the meniscus must be calculated from the contents of fields 5 and 7. The amount of plasma to aspirate must be at least equal to the number of assays per test tube (field 5) times the P1 per well sample volume (field 7). The maximum amount of fluid that a pipette can draw is only 200 microliters however, so if not enough serum can be aspirated, multiple trips will have to be made to the same tube until the number of assays per tube requirement is satisfied. Thus the level below the meniscus at which the tip is placed must be low enough to allow the calculated amount of serum to be aspirated plus a small overfill amount without aspirating air. Step 156 is the same as in the blood typing process except that the amount of plasma or other liquid aspirated is calculated in accordance with the above discussion. Step 158 is the same except that the number of wells in which the aspirated liquid is deposited depends upon the contents of field 5 and the amount deposited depends upon the contents of field 7.

Processing then proceeds to step 438 where more serum is aspirated from the tube for dilution purposes. It will be apparent given the above disclosure how the x-y head is repositioned over the tube in the active position, so detailed substeps will not be given from this point forward. The contents of field 8 and field 6 are consulted before calculating the amount to move the plunger 38 to aspirate liquid.

This second aliquot of serum can be diluted in the dilution tray, and this dilution can take the form of either a one step process or a two step process. Which dilution is used depends upon the contents of field 4. Step 440 represents the computer consulting this field to determine which type of dilution is desired. If a one step dilution is to be performed, the aliquot of serum is moved by the x-y head 28 to the first well in the dilution tray 60 and deposited in step 442. This step represents a repetition of the substeps of the step 196 in the blood typing sequence except that an aliquot of serum is diluted instead of an aliquot of red blood cells. Either of the mixing sequences of Figures 4 or 5 can be used for the mixing step 200. The amount of the diluted serum that is aspirated on each mix is calculated after consulting field 11, and the number of mixes is controlled by the contents of the field 10.

After the mixing is done, if a one stage dilution is being done, the amount of diluted serum set by field 8 is aspirated out of the first well in the dilution tray and transferred to the number of wells in the P2 plate established in field 6 per step 444 and 446. It will be apparent to those skilled in the art how these two steps are accomplished.

If a two stage dilution is being performed, processing proceeds to step 448 where an amount of the diluted serum controlled by the user's answer establishing the contents of field 12 is aspirated and transferred from the first well to the second well in the dilution tray where it is mixed. The means to accomplish the transfer step will be apparent to those skilled in the art, and the mixing step is the same as step 200 previously described. After the mixing is completed, steps 444 and 446 are repeated except that the amount of the sample set by field 12 is aspirated out of the second well instead of the first and is transferred to the next sequential wells in the P2 plate. The whole process is then repeated for the next seven test tubes or until all desired tubes are processed. The process is then complete.

Bromelin Treatment Process Control Software

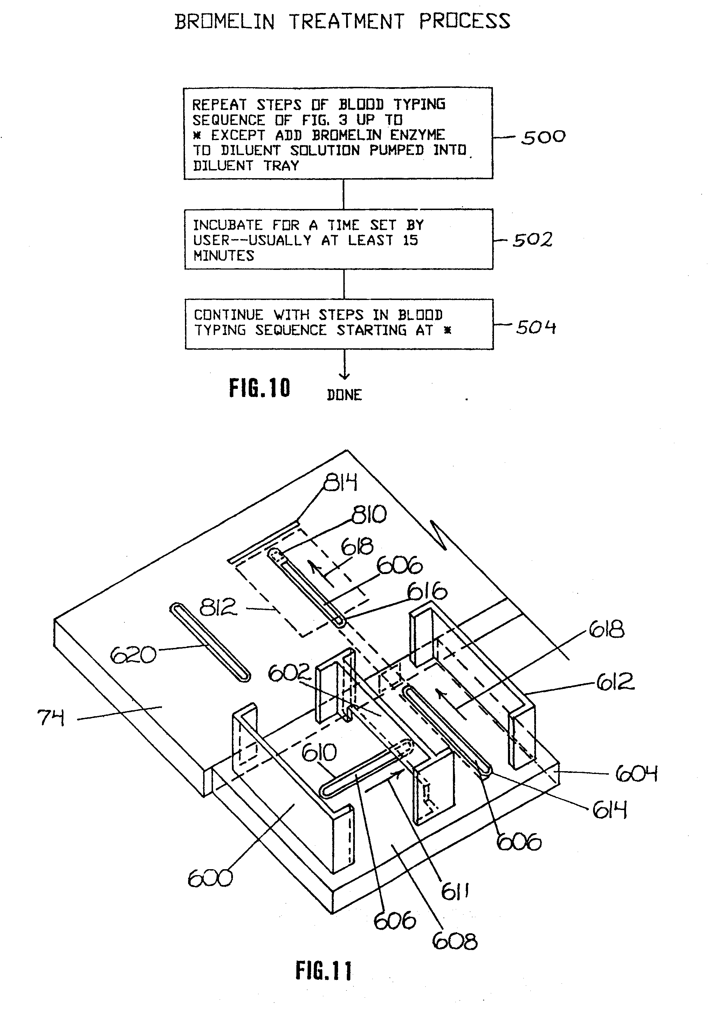

The invention also has the capability of performing a bromelin treatment sequence. Red blood cells have A, B and Rh type antigens which bond to the outside of the cell. A and B type antigens are very strong and dominant, but Rh type antigens are weak. The problem is that other proteins also bond to the outside of the cell, and these other proteins often cover the Rh antigen so as to interfere with antibody bonding to the Rh antigen. This can interfere with antibody screen testing and is undesirable. Bromelin is a protein dissolving enzyme which can be used to dissolve the proteins which are interfering with the Rh antigen-antibody bonding process. The bromelin treatment process involves adding bromelin to the donor red blood samples, incubating the mixture for a time to allow the bromelin to dissolve the interfering protein and then continuing with the assay. Figure 10 is a process flow diagram of the process that the machine carries out in performing this bromelin treatment process.

Step 500 represents the repetition of all the sample delivery steps of the blood typing process of Figure 3 up to the * marker. At the * marker, all the red blood cell aliquots for the first seven donors have been suspended in the bromelin containing diluent and samples of the suspended red blood cells have been deposited in the trays to await arrival of the reagents for antibody screening and blood typing. Step 502 is then performed to incubate the samples for a time set by the user by linking to a time delay file. The bromelin treatment file can be three files which are linked or it can be two files which are linked plus removal of the tray by a human for an incubation time followed by replacement tray and running another file described below as the "third" file. The first file is comprised of the first half of the blood typing file consisting of the steps up to the * in Figure 3. The second file, if used in a completely automated version represented by the step 502, is the time delay file currently available from Cetus Corporation in the Pro/Pette Express<sup>tm</sup> software. The last file is the second half of the blood typing process consisting of the steps in Figure 3 following the * and represented in Figure 10 by the step 504. The step 504 consists of all the reagent delivery steps of the blood typing sequence carried out after the bromelin has had a change to dissolve the interfering protein. The process is now complete.

The invention also has the capability of carrying out other processes which are contained in files currently available from Cetus Corporation in Emeryville, California, under the trademark Pro/Pette Express. Those files are: the home and pump prime file; the immuno wash file; the tip test file; the plate fill file; the serial dilution file; the plate to plate file; the empty-fill file; the timer file; and the tip height file. These processes will not be described since they are commercially available.

Plate Loading and Unloading Mechanism

Referring to Figure 11 there is shown a perspective view of the plate handling mechanism. Basically, this mechanism serves to load plates such as the plates 56 and 58 in Figure 1 onto the bed 74 one at a time and to unload and stack the filled plates after they have been filled with samples and reagents. Plates (not shown) to be loaded are stacked for storage between the partitions 600 and 602. The plates are stacked one atop the other, and the spacing and length of the partitions 600 and 602 is such that the plates fit between the partitions snugly in the same orientation to the bed 74 as shown in Figure 1. The plate stacker mechanism has a body 604 which houses various apparatus to move a single continuous loop belt 606 in a manner which will be described below. When a plate is to be loaded, an elevator mechanism to be described below rises up out of the body 604 and engages the camming surfaces of two latches (not shown in Figure 11) and pushes them out of the way thereby allowing the bottom plate in the stack between the partition 600 and 602 to be freed. This bottom plate then rests on the elevator and the elevator is lowered to the floor 608 of the body 604 until the bottom of the plate engages the belt 606. The belt 606 extends above the surface 608 through a slot 610, and it is driven by a motor (not shown) below the surface 608. This motor is turned on so as to move the belt 606 in the direction to move the plate toward the loading position between the partition 602 and a partition 612. The plate moves in the direction of the arrow 611 through a slot cut in the bottom of the partition 602 so as to come to rest between the partitions 602 and 612.

To load this plate, a solenoid (not shown) causes a portion of the belt 606 to rise up through slots 614 and 616 in a manner which will be described below. The belt 606 is then moved in the direction of the arrows 618 such that the plate slides off the surface 608 and onto the bed 74. When the plate slides a certain distance onto the bed 74, the portion of the belt 606 extending through the slot 616 engages the bottom surface of the plate and moves it onto the bed 74 the rest of the way to its final resting place. The plate can be loaded in this manner into either the position of the plate 56 or the plate 58 in Figure 1 simply by moving the bed 74 such that either the slot 616 or another slot 620 is registered over the belt 606.

The plate can be unloaded from either position by reversing the process. First, the belt 606 is reversed so that it is moving in the direction opposite to the direction of the arrows 618. The plate then slides back onto the surface 608 between the partitions 602 and 612. Next, the belt 606 is shut off, and the elevator mechanism is activated to push the plate upward. The edges of the plate engage the camming surfaces of four latches (not shown) and push them out of the way. The elevator mechanism continues to push the plate upward until the bottom edge of the plate clears the edges of the latches. Each latch has a spring which biases it toward the closed or latched position where a projecting portion of the latch projects into the space between the partitions 602 and 612. Since this space is only slightly larger than the dimensions of the plates, when the bottom of the plate clears the latches, each latch springs back into the latched position thereby engaging the bottom of the plate and supporting it.

At the same time the elevator mechanism came up to push the plate removed from the bed onto the stack, it released another plate from the stack between the partitions 600 and 60 in the manner described above. This plate may now be loaded by following the procedure described above.

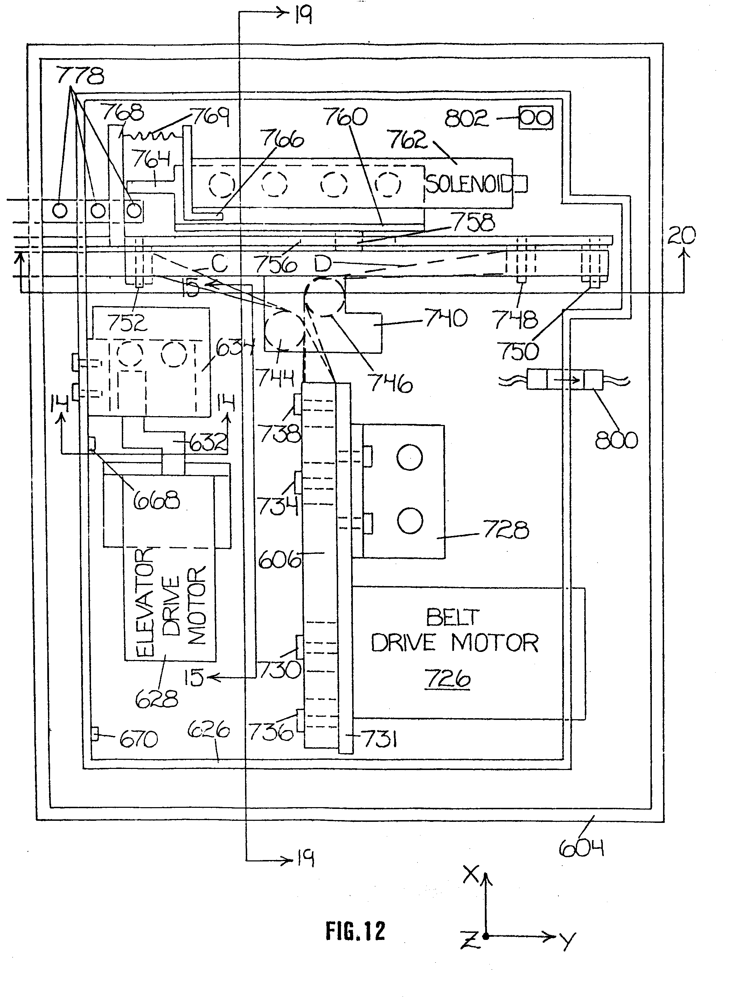

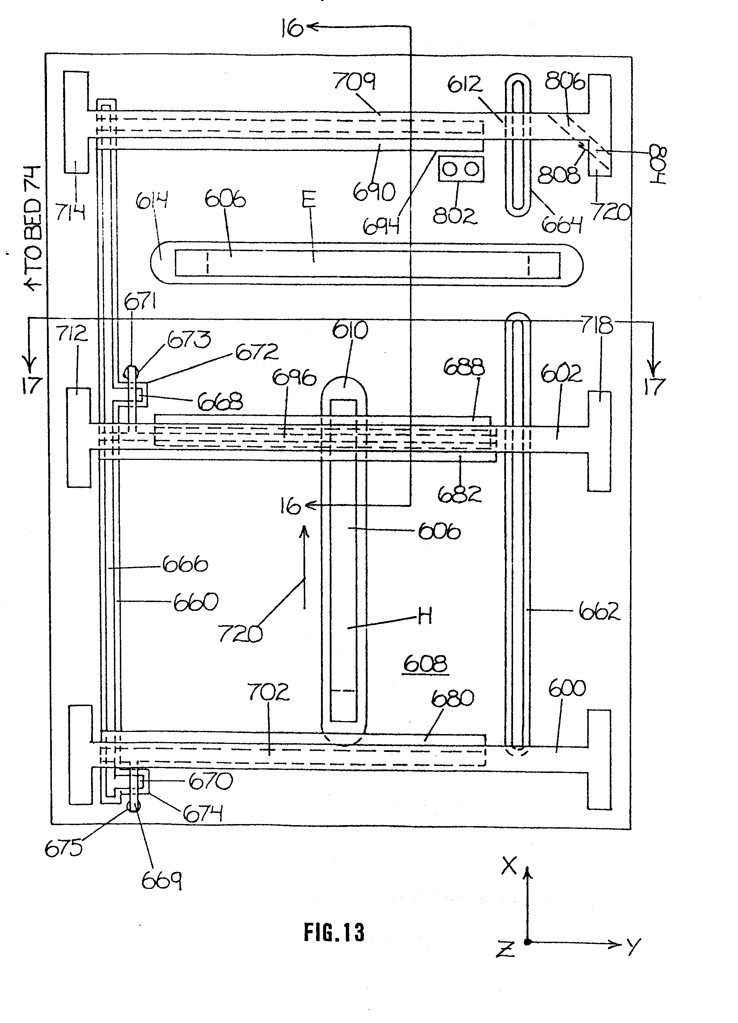

The details of how the above described process is implemented will be better understood by reference to Figures 12 and 13. Figure 12 shows a plan view of the plate loader and unloader mechanism with the top surface 608 removed. Figure 13 shows a plan view of top surface 608 of the plate handling mechanism showing the relative locations of the slots, partitions, belts, plate latches and elevator mechanism. The body 604 is a rigid metal or plastic box for providing mechanical support for the elements. The elevator mechanism 626 consists of a rigid metal or plastic "box" consisting of four sides each comprised of a thin, tall sheet of metal or plastic and joined at the corners so as to form a roughly rectangular unit which can be raised by raising or lowering one side of the box.

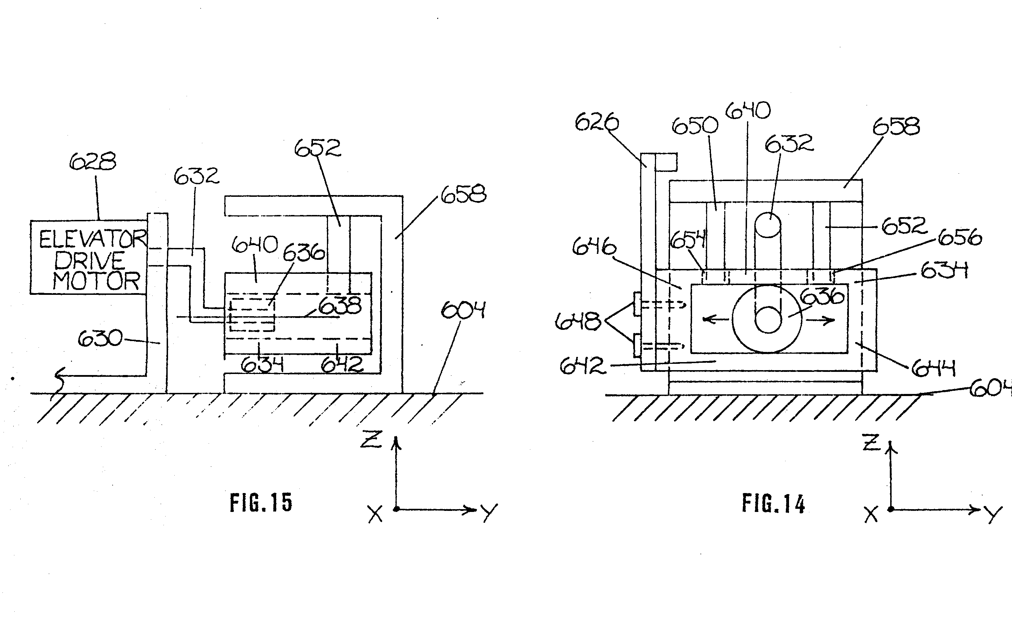

This raising and lowering of the elevator mechanism is accomplished by a motor 628 which is shown as motor 15 in Figure 2. This motor is supported by a bracket 630 and turns a crank 632 for a scottish yoke 634 which serves to convert the rotary motion into linear motion up and down along the Z axis as shown in the lower right of Figure 12. The details of the scottish yoke are shown in Figures 14 and 15 where Figure 14 shows a view of the scottish yoke taken along the view line 14-14 in Figure 12 and Figure 15 shows a view taken along the view line 15-15 in Figure 12.

The crank 632 is attached to a roller 636 which is attached to the crank 632 by a bearing (not shown) such that the roller 636 can freely rotate around the axis 638 of the crank. The roller 636 rolls along the Y axis between two parallel members 640 and 642 of the scottish yoke which are rigidly held in parallel position separated by the diameter of the roller 636 by supporting members 644 and 646. The supporting member 646 is attached to the rigid box 626 of the elevator mechanism by fasteners 648 or other suitable means. As the motor 628 turns the crank 632, the scottish yoke rides up and down on the Z axis guided by two guide rods 650 and 652. These two guide rods engage two guide bores 654 and 656 in the upper parallel member 640, and are rigidly supported parallel to the Z axis by a bracket 658 which is attached to the frame 604. As the scottish yoke rises and falls with the turning of the crank 632, the elevator mechanism 626 rises and falls. The motor 628 is a D.C. servo motor in the preferred

-64-

embodiment, and is controlled by the microprocessor in the barcode reader 95 through an interface latch in the latches 629. That is, when the microprocessor 95 wishes to raise the elevator or lower it, the microprocessor 95 sets the proper logic state into the latch in the latches 629 coupled to the elevator drive motor. This digital level is converted into the proper polarity signal to drive the D.C. servo motor 628 in the proper direction. The program which the microprocessor 95 runs to control the plate handling mechanism is filed herewith as Appendix B (this code also controls the bar code reader). The sequence of operations in controlling the plate handling mechanism will be described in more detail below.

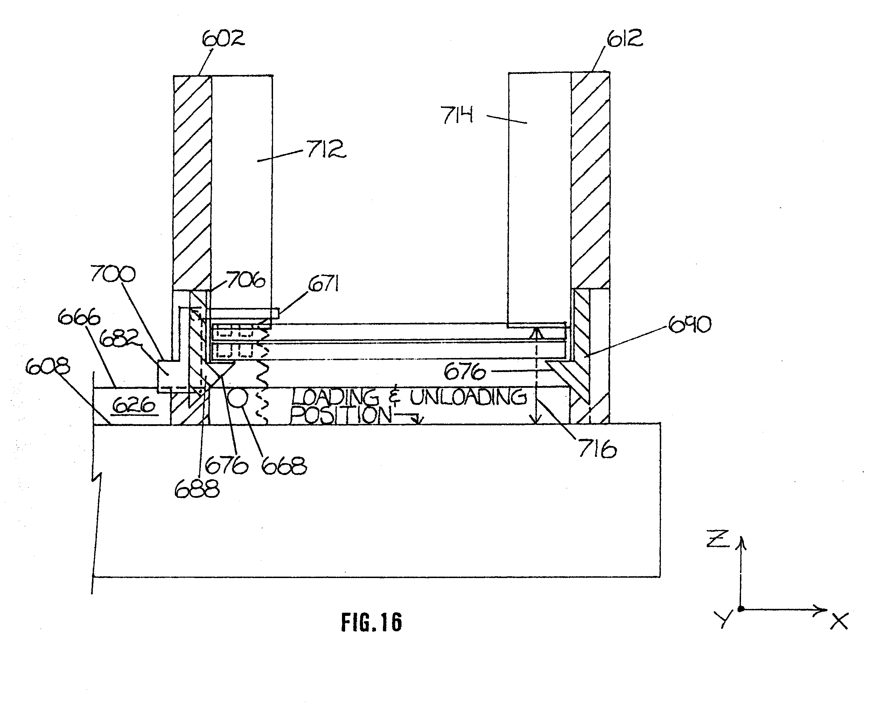

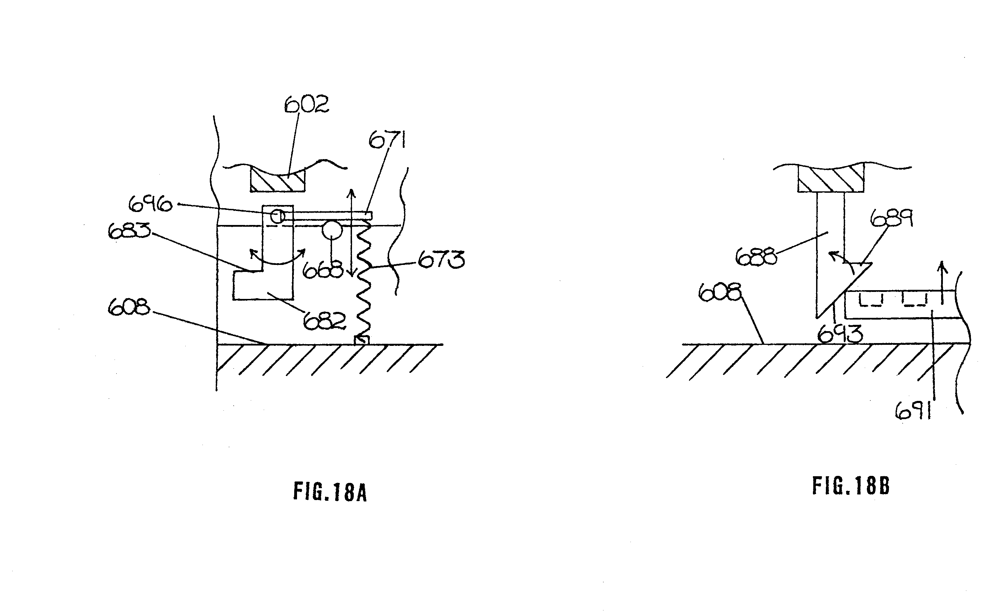

Referring to Figure 13, certain portions of the top edges of the elevator mechanism box 626 are aligned with slots 660, 662 and 664 in the top surface 608. The purpose of these slots is to allow the elevator box to rise through the surface 608 and engage the bottom of a plate and to engage to camming surfaces of latches to release the plates. The top edge 666 of the elevator box 626 has two pins or projections 668 and 670 formed thereon which are aligned with clearance holes 672 and 674 formed on the edges of the slot 660. The pins 668 and 670 are also vertically aligned under projecting arms 669 and 671 which are attached to two shafts which will be described below forming part of the latching mechanism. The details of the latches and the relationship of the pins to the arms can be better understood by reference to Figures 16-18A and Figure 18B.

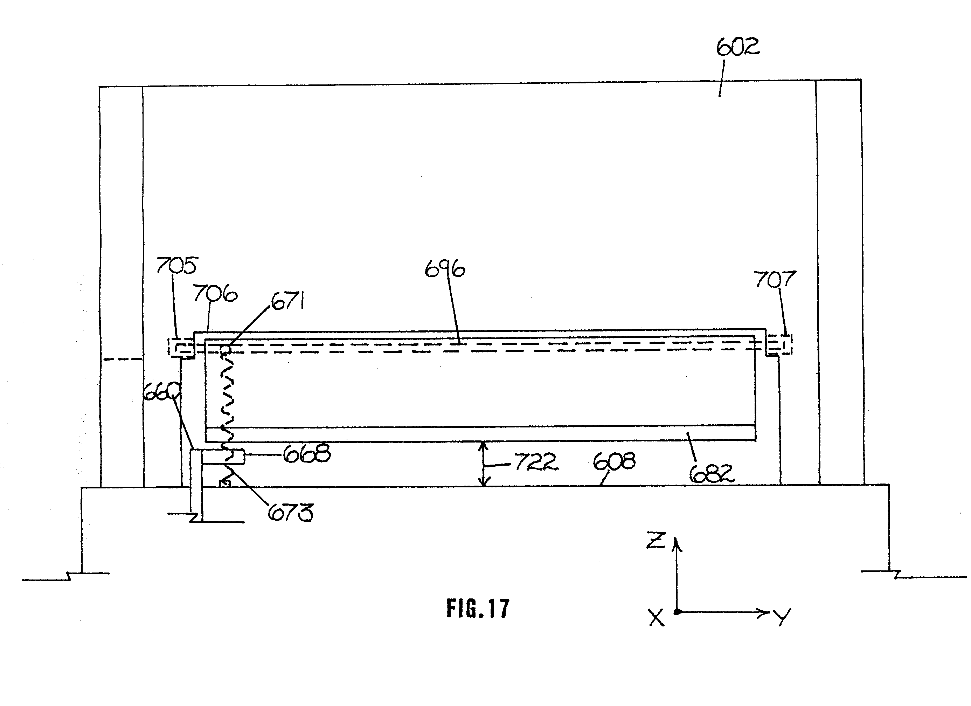

Figure 16 shows a cross sectional view of the partitions 602 and 612 taken along the view line 16-16 in Figure 13, and shows the latches from a side view looking down the Y axis. Figure 17 shows a view taken along the view line 17-17 in Figure 13 and shows the latches looking down the X axis. Figure 18A illustrates the effect of the elevator pin 668 moving up and contacting the arm 671 extending from the axle 696 thereby turning the latch 682 out of the way. Figure 18B illustrates the effect when the elevator mechanism pushes a plate up against the camming surface 676 of one of the sheet metal latches on the storage hopper side of the apparatus. There are two latches for the empty plate storage compartment between the partitions 600 and 602. The latches extend slightly less than the length of their respective partitions and are located in a cutout regions of which cutout region 706 is visible in Figures 16 and 17. The full plate storage compartment above the loading and unloading position labeled in Figure 16 is defined by the partitions 602 and 612. It also has two latches labelled with reference numerals 688 and 690.

Referring to Figure 17, the latch 682 is connected rigidly to a shaft 696 which runs between bores 705 and 707 in the partition 602. The latches 680 and 682 are both L shaped, and the latch 682 and its relationship to the axle 696, the arm 671 connected to the axle and the pin 668 are as shown in Figure 18A. A similar arrangement exists for the latch 680. When the elevator box reaches its maximum upward excursion, the latches 680 and 682 are rotated by the action of the elevator box pins 668 and 670 on the arms 669 and 671. This rotation is far enough such that the latching surfaces, e.g., the surface 683 on the latch 682 in Figure 18A, no longer projects far enough into the space between the partitions 602 and 600 to prevent the plates stacked between the partitions 600 and 602 from falling down onto the top edges of the elevator box.

The elevator box 626 is then lowered such that the stack of plates is lowered. As the elevator box is lowered, the pin 668 disengages the arm 671 and a similar event happens respecting the latch 680. This removes the pressure in the positive Z direction on the arms 671 and 669. Springs 673 and 675 connected between the ends of the arms 671 and 669 and the surface 608 then pull the arms back down to rotate the latching surfaces of the latches 680 and 682 back into the space between the partitions 600 and 602.

The full plate storage hopper between the partitions 602 and 612 has two sheet metal latches 688 and 690 which extend slightly less than the length of the partitions and which are rigidly attached to their partitions so that they do not rotate. The latches 688 and 690 are formed of sheet metal in the cross sectional shape shown in Figure 18B. This sheet metal should be spring like. The latches 688 and 690 are oriented such that the "tangs" or upward projection portions of the J, such as the tang 689 in Figure 18B, points into the space between the partitions. The rising plate such as the plate 691 in Figure 18B is pushed by the elevator into a camming surface on each latch such as the camming surface 693 in Figure 18B. This compresses the tang toward the partition until the plate clears the uppermost extent of the tang whereupon it snaps back under the plate thereby latching the plate into a storage position above the latches and between the partitions 602 and 612.

The latches 688 and 690 serve to latch and hold the plates being unloaded from the bed 74 of the liquid handler into a storage stack vertically arranged in the space between the partitions 602 and 612. Referring to Figures 13 and 16, when a plate is to be unloaded, the direction of the belt 606 is reversed so as to pull the plate located on the bed 74 into the space between the partitions 602 and 612 so that it rests in the loading and unloading position. The partitions 602 and 612 each have a projecting portion 712 and 714 on the end closest to the bed 74. These projecting portions serve as supports for the stack of plates stored between the partitions 602 and 612. As best shown by Figure 16, the projecting portions 712 and 714 do not extend vertically down to the surface 608 however so as to leave a gap 716 between the surface 608 and the bottoms of the projecting portions through which the plates can be pulled by the belt 606. The ends of the partitions 602 and 612 farthest from the bed also have projecting portions 718 and 720 as shown in Figure 13. These projecting portions extend all the way down to the surface 608.

To store the plate residing in the loading and unloading position in the stack, the elevator mechanism is activated to raise the elevator box 626 up through the slots 660, 662 and 664. As the elevator box raises the plate in the loading and unloading position, the top edges of the plate engage camming surfaces on the bottom surfaces of the latches 688 and 690 and the plate is stored as explained with reference to Figure 18B. Any plates which are already in a latched position between the partitions 602 and 612 are pushed up by the plate being raised by the elevator mechanism to make room for the new plate on the bottom of the stack.

The reader will note from the previous discussion that when the elevator mechanism rises, any plate which is latched in storage between the partitions

600 and 602 will be released by the action of the pins 668 and 670. This plate will be lowered onto the belt 606 when the elevator box 626 is lowered. If this plate is to be loaded onto the bed 74, the direction of the belt 606 can be driven in the direction of the arrow 720 in Figure 13 so as to move the plate into position over the portion of the belt 606 between the partitions 602 and 612. Figure 17 shows that the partition 602 has a gap 722 between the surface 608 and the bottom of the latch 682. The purpose of this gap 722 is to allow room for the plate just lowered to the surface 608 between the partitions 600 and 602 to be moved into the loading position between partitions 602 and 612.

Referring again to Figure 12, the belt 606 is one continuous belt driven by a motor 726 shown as motor 16 in Figure 2. This motor is controlled by the microprocessor 95 through a latch in the interface latches 629 in a similar manner to the way the elevator mechanism drive motor 628 is controlled. The motor 726 is held rigidly in place by a bracket 728 coupled to a pulley support 730 which is attached to and supports the motor 726. The bracket 728 is fastened to the frame 604. The elevator box 626 has a clearance aperture formed therein so as to be able to move up and down on the Z axis without touching the surface of the motor 726.

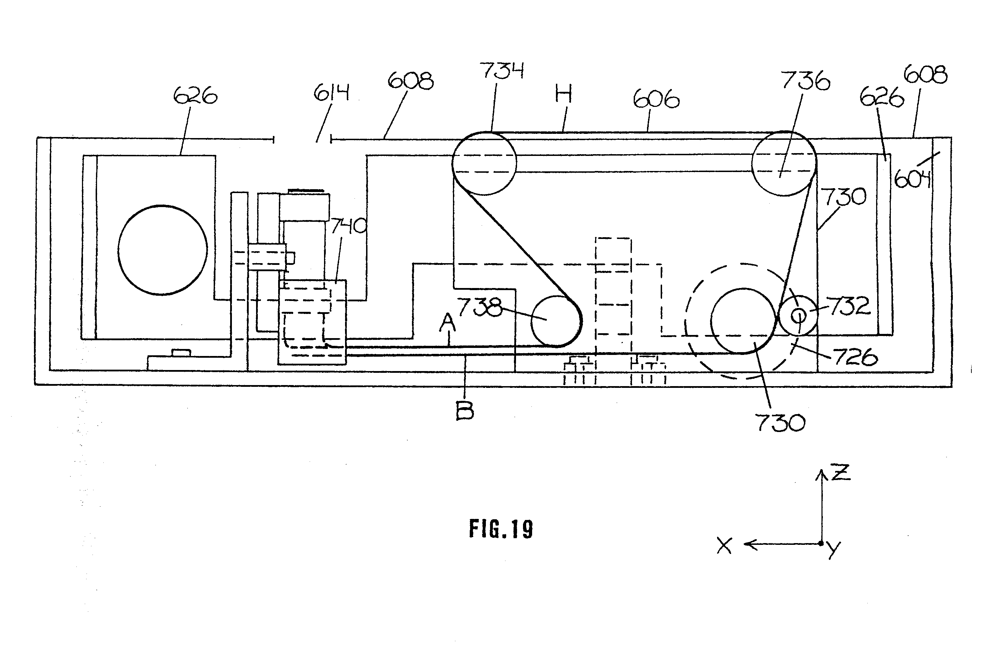

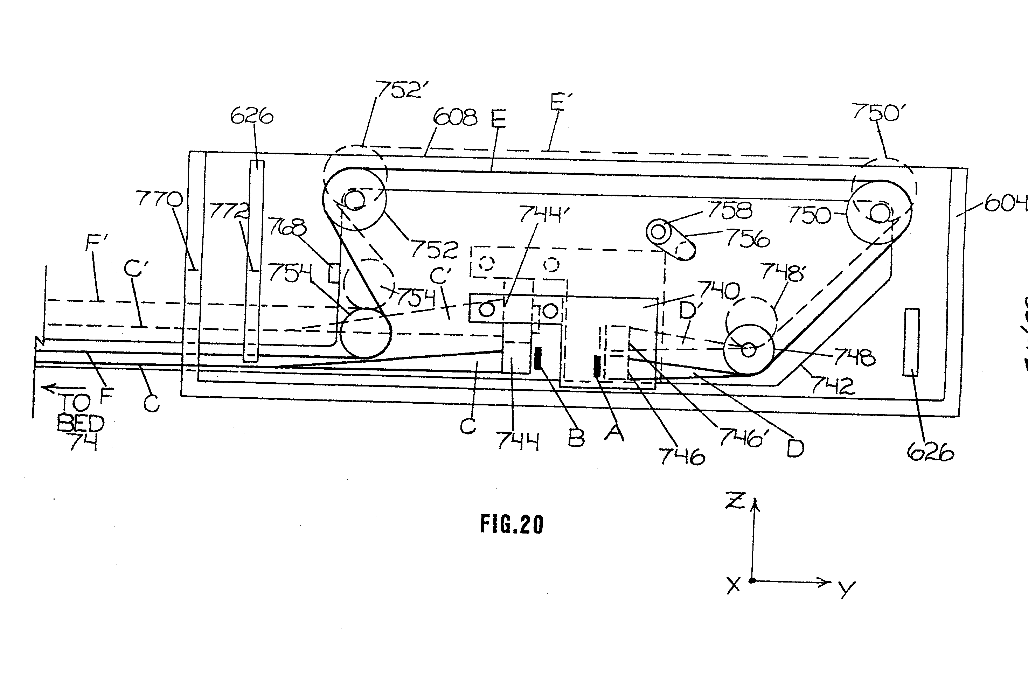

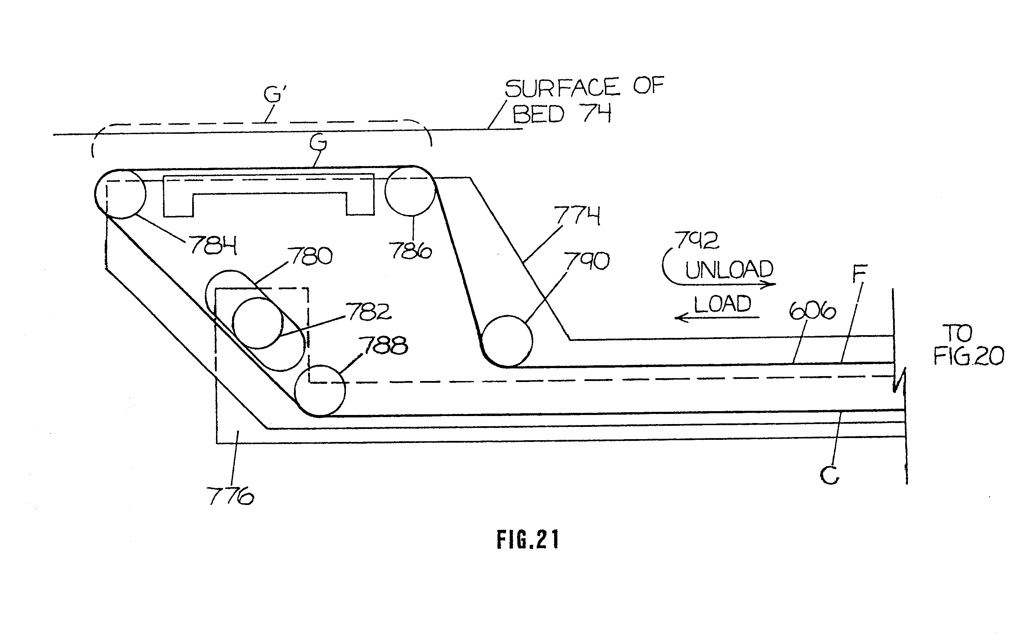

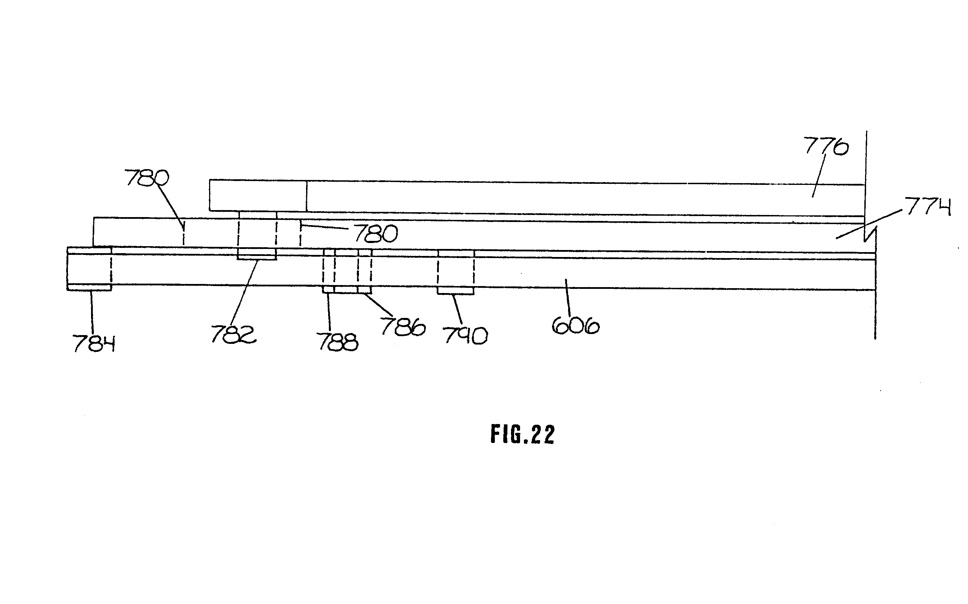

The motor 726 drives the belt 606 which is supported by a series of pulleys rotating around support shafts of a plurality of movable and rigid supports. The belt 606 is continuous in that it is the same belt which is shown in the slots 610, 614 and 616 in Figure 11. The path of the belt 606 will be apparent from study of Figures 12, 19, 20, 21 and 22. Figure 19 is view in elevation of the plate handling mechanism below the surface 608 taken along the view line 19-19 in Figure 12. Figure 20 is view in elevation of the plate handling mechanism below the surface 608 taken along the view line 20-20 in Figure 12. Figure 21 is an elevation view of the extension mechanism which guides and supports the belt 606 under the surface of the bed 74 in Figure 11 and which allows the belt 606 to be raised such that the top surface of the belt rises through the slot 616 in the bed 74 and protrudes above the surface of the bed 74. Figure 22 is a top view of the extension mechanism of Figure 21.

Referring first to Figure 19, the belt 606 is driven by a pulley 730 which is driven by the motor 726. In the preferred embodiment, the pulley 730 has teeth on it which engage rubber teeth on the inside surface of the belt facing the pulley 730. An idler pulley 732 rotationally coupled to the pulley support 730 serves to keep the belt taut. Two pulleys 734 and 736 which are rotationally coupled to the pulley support 731 guide the belt 606 along a path which is parallel to and slightly above the surface 608. The belt 606 extends above the surface 608 through the slot 610 (not shown in Figure 19). A pulley 738 changes the direction of the belt travel to direct it toward a pulley block 740. Two oppositely moving segments A and B of the belt 606 are engaged by pulleys in the pulley block 740: a first segment A from the pulley 738; and a second segment B from the pulley 730.

The pulley block 740 is best seen from the top in Figure 12. The pulley block 740 is attached to a movable belt support 742 so as to move up and down with it, and serves to change the direction of the two belt segments A and B to a direction parallel to the Y axis. The pulley block 740 is rotationally coupled to two pulleys 744 and 746 which have their rotational axes parallel to the Z axis. The pulley 744 converts the direction of the B segment while the pulley 746 changes the direction of the A segment. Since the belt is flexible, each segment begins to twist after it leaves its pulley on the pulley support 731 and continues to twist until the surface of the belt segments is parallel to surfaces of the pulleys 744 and 746, i.e., parallel to the Z axis, at the location of the pulley block 740. The turning of the corners at pulley block 740 is only shown symbolically in Figure 19, but more detail is shown in Figure 20.

Referring to Figure 20, after the belt segments A and B turn their respective corners at the pulley block 740, the two portions of the belt head in opposite directions parallel to the Y axis, and will be identified as segments C and D for discussion purposes. The segment D couples the pulley 746 to a pulley 748 which is rotationally coupled to the movable belt support 742 and which forces the surface of the belt to be parallel to the X axis. From pulley 748, the belt travels upward to a pulley 750 which causes the belt to turn to a direction parallel to the surface 608 and to travel toward a pulley 752 along a path parallel to the Y axis. The belt 606 turns a corner at pulley 752 and is coupled to another pulley 754 where it turns another corner and heads out along the negative Y axis toward the bed 74. All the pulleys 744, 746, 748, 750, 752 and 754 are coupled to the movable belt support 742 so as to move in the same direction as the movable belt support 742.

Movement of the belt support 742 is under the control of the supervisory microprocessor 95 in Figure 2. The movable belt support 742 has a slot 756 formed therein which is formed so as to be longer than it is

0210014

71-

wide and so that its long axis forms an angle to the Z axis in the Z-Y plane. This slot 756 acts as a camming surface for a roller 758. Referring again to Figure 12, the roller 758 is rotationally coupled to a bracket 760 which is rigidly fastened to the frame 604. A solenoid 762 having a solenoid shaft 764 is rigidly coupled to the bracket 760 by another bracket 766. The solenoid is under the control of the microprocessor 95 through a latch in the interface latches 629. When the microprocessor 95 wishes to load or unload a plate from the bed 74, the belt 606 must be raised above the surface 608. To accomplish this, the microprocessor 95 energizes the solenoid 762 through a suitable solenoid driver circuit in the interface circuit 629. This causes the solenoid arm 764 to move in the negative Y direction and engage an arm 768 which is attached to the movable belt support 742. This pushes the movable belt support 742 in the negative Y direction which causes it to rise as the slot 756 rides up on the stationary roller 758. This upward movement raises the belt 606 to the level shown in phantom for the belt segment E' between pulleys 750 and 752. The upward movement of the belt support 742 also causes the pulley block 740 to rise thereby raising the locations of the pulleys 744 and 746 to the locations shown in phantom 744' and 746'. All four pulleys 748, 750, 752 and 754 rise with the movement of the pulley support 742 to the positions shown in phantom and marked with the same reference numerals accented by a ' mark. The final belt position is as shown in phantom.

When the loading or unloading is done, the solenoid 762 is de-energized, and the solenoid arm 764 relaxes pressure on the arm 768 allowing gravity and a spring 769 coupled between the bracket 768 and the bracket 766 to pull the pulley block 742 back down under the guidance of the roller 758 in the slot 756. Note in Figure 20 that the elevator box 626 and the frame 604 have apertures therein the edges 770 and 772 of which are marked in phantom. These apertures provide space for the belt segments going to and coming from the bed 74 to pass unhindered by structural obstruction.

Referring to Figures 21 and 22, there is shown respectively an elevation view and a top view of the movable belt extension and its support bracket. The movable belt extension 774 serves to guide the belt 606 in a predetermined path and to allow the belt to be raised and lowered through the slot 616 in the bed 74 as shown in Figure 11. The movable belt support 774 is supported by a frame extension 776 which is rigidly attached to the frame 604 by the fasteners 778 in Figure 12. The movable belt extension has a camming slot 780 formed therein which serves a similar purpose to the camming slot 756 in Figure 20. This camming slot 780 acts as a guide for a roller 782 which is rotationally coupled to the frame extension 776. The movable belt extension 774 is rigidly attached to the movable belt support 742 such that when the movable belt support 742 is moved by the solenoid arm 764, the movable belt extension 774 moves in unison as an extension of the movable belt support 742. As the movable belt extension 774 moves, it rides up or down as the camming slot top surface of the slot 780 rides up or down on the roller 782. This camming action has the effect of raising the belt segment G between pulleys 784 and 786 between its position below the surface of the bed 74 to a position shown for the segment G' above the surface of the bed 74. The other pulleys 788 and 790 merely guide the belt segments F and C to turn corners properly to guide the belt segments to and from the pulleys 784 and 786. The purpose of moving the belt segment to a position above the surface of the bed 74 is to provide a moving surface above the surface of the bed 74 which can engage the bottom surfaces of plates being loaded and unloaded from the bed to effect a smooth transition of driving power for the plate. That is, a plate to be loaded is first driven by the belt segment E' in Figure 20 toward the bed 74, i.e., in the negative Y direction. When the belt segment E is in the E' position, the belt segment G is in the G' position in Figure 21. As the plate is unloaded onto the bed 74, the front of the plate's bottom surface is engaged by the belt segment G' and further pulled into its final resting position on the belt 74. The unloading process is the exact reverse of this process except that the direction of movement of the belt is reversed such that the belt segment G' is moving in the direction of the vector 792 in Figure 21.

In the preferred embodiment, there are three photosensors to provide various status signals to the microprocessor 95. These photosensors are comprised of a light emitting device such as a light emitting diode or light emitting transistor and a light sensitive device which puts out a known signal when a light beam strikes it. These three light sensitive devices are shown in Figure 2 as the elevator sensor, the plate sensor and the bed sensor. Each is coupled to an interface latch in the interface latches 629 such that the latch connected to each sensor assumes either a logic zero or a logic one depending upon the output signal from the sensor coupled to its input. Each sensor is adjacent to a light emitting device which is always emitting light and is physically located such the physical condition which is to be sensed either interrupts or does not interrupt the beam between the light emitting device and its associated sensor. The elevator sensor is located at 800 in Figure 12. The elevator box 626 breaks the beam between the light emitting device and the light sensitive device when it is in the down position, i.e., the top edges of the box 626 are not extending up through the slots in the surface 608.

Another sensor is located at 802 in Figures 12 and 13. In one embodiment, the sensor 802 senses the presence of a plate on the belt 606 by shining light up through a slot in the surface 608 and sensing reflected light off the bottom surface of the plate. The preferred placement however is as shown at 804 and 806 in Figure 13. In this placement, the light emitting device and the light sensing device are located diagonally opposite each other in one corner of the partition 612 such that there is a light path 808 across the corner. When a plate is present between the partitions 602 and 612, the light path 808 will be broken by the corner of the plate. This condition signals the presence or absence of a plate. There is also a sensor 810 located at the end of the slot 616 under the top surface of the bed 74. This sensor works in a similar fashion to the sensor 802 shown in Figures 12 or 13. That is, this sensor 810 senses when the plate has been pulled to its final position shown in phantom at 812 in Figure 11. When the plate is in the final position 812, the bottom of the plate reflects light back onto the light sensitive device which puts out a signal which causes a latch in the interface latches 629 indicating whether the plate is or is not there. In other embodiments, a rail could be used such as the rail 814 to stop movement of a plate being loaded or the movement of the belt 606 could be timed so that the plate is stopped in the proper location. However, with either the rail or the timed belt movement embodiment, there is no guarantee that the plate ever reached its final destination in case of slippage. This certain outcome is provided by the photosensor 810, and this embodiment is preferred. The microprocessor 95 can then read the latches at any time to determine the status of the machine.

## Plate Handler Firmware

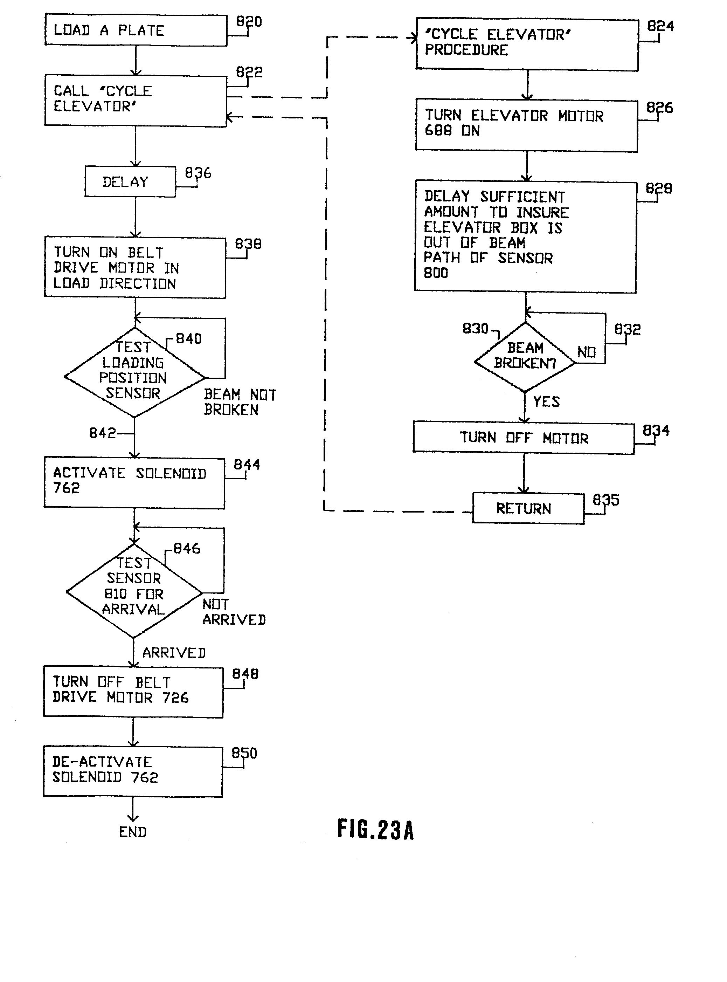

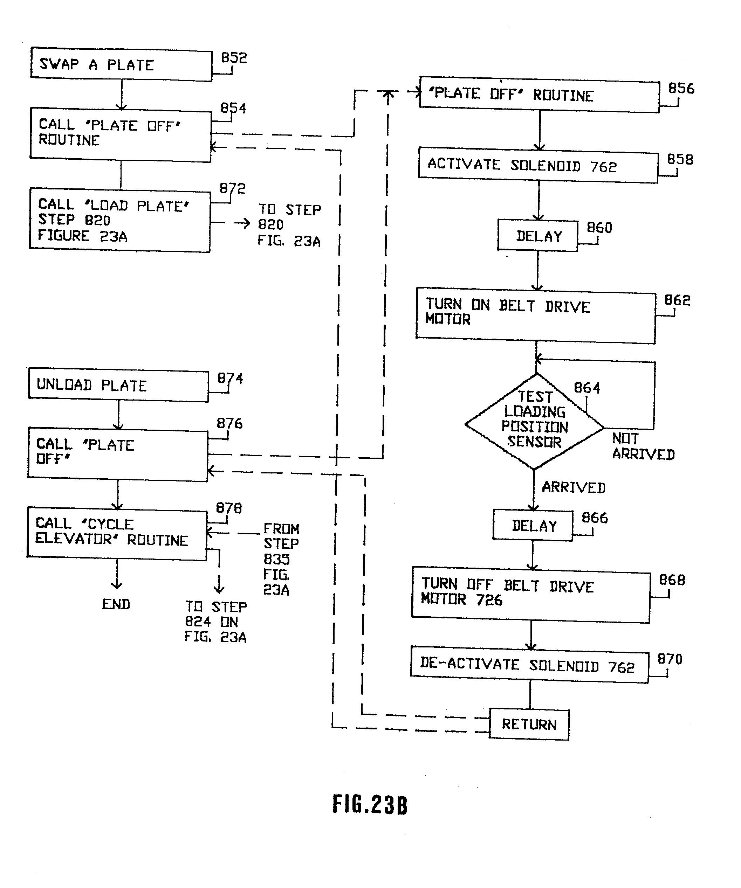

The software which controls the plate handler is given in object code format as part of Appendix B. Basically the software is comprised of three main routines: the Unload Plate routine which takes a plate off the bed 74 and stores it in a stack between partitions 602 and 612; a Swap Plate routine which performs the Unload Plate routine function plus loads a new plate onto the bed; and a Load Plate routine which loads a new plate on the bed 74 from the stack of empty plates stored between partitions 600 and 602. The Load Plate routine is described in flow chart form starting at Figure 23A with step 820 which is the entry point for this routine. This routine is called when the supervisory microprocessor 34 in Figure 2 reaches a point in its liquid handling procedures when it has run out of wells to fill and needs a new empty plate placed on the bed 74. The first step is 822 which calls a cycle elevator subroutine whose entry point is step 824. The purpose of this subroutine is to cycle the elevator box 626 up and down one time. The first step in this subroutine is to turn on the motor 688 in step 826. Then a delay step 828 is performed to insure that the motor has run long enough for the elevator box 626 to have been raised enough to remove it from the light beam of the sensor pair 800 in Figure 12. After this delay period has passed, the barcode reader microprocessor 95 begins reading the state of the sensor 800 to determine if the elevator box 626 has returned to its down position and broken the beam. This step is symbolized by the step 830. This read step is continuously performed as long as the answer to the question of whether the beam has been broken is "no" as symbolized by the vector 832. As soon as the beam has been broken, the elevator box 626 has completely cycled one time, and the elevator motor 688 is turned off in the step 834. Processing is then returned to step 822. The overall physical effect of the cycle elevator routine is to push any plate in the loading and unloading position on the belt 606 between partitions 602 and 612 onto the storage stack above the latches (hereafter the "storage stack"), and to release one empty plate from the stack between the partitions 600 and 602 and above the latches (hereafter the "empty stack") and lower it onto the belt 606 segment H between the partitions 600 and 602 (hereafter the "empty position") for movement into the loading and unloading position on the belt segment E in Figure 13 (hereafter the "loading position").

Next, a delay step 836 is performed, and the belt drive motor 726 is turned on in the "load" direction so as to move any empty plate on the belt 606 from the empty position under the partition 602 into the loading position in a step 838. To confirm that the empty plate has arrived in the loading position, the step 840 is performed to test the sensor in the loading position. This sensor is continuously read until it indicates that the plate has arrived. The vector 842 symbolizes the condition that the plate has arrived as indicated by a broken beam between the sensor pair 804-806 or a reflection detected by the sensor 802.

Next a step 844 is performed to activate the solenoid 762 in Figure 12 to raise the segment E of belt 606 to the E' position above the surface 608. This engages the bottom of the empty plate in the loading position thereby carrying it out onto the bed 74 through the gap 716 in Figure 16. The belt segment G' then engages the plate and pulls it the rest of the way to its final position.

The test of step 846 is then performed to test for arrival of the plate by reading the optical sensor 810 of Figure 11. This sensor is continuously read until it indicates that the plate has arrived. After the plate arrives, the steps 848 and 850 are performed to turn off the belt drive motor 726 and de-activate the solenoid 762 to drop the belt segments E and G back to their original positions below the surface 608.

Referring to Figure 23B, there is shown a flow diagram of the Swap Plate routine which has an entry point at step 852. The first step in this routine is step 854 which calls a Plate Off subroutine. This subroutine has its entry point at step 856. The first step in this subroutine is to activate the solenoid 762 to raise the segments E and G of belt 606 to the E' and G' positions above the surface 608 to engage the bottom of the plate on the bed 74. A delay step 860 insures that the solenoid has had sufficient time to raise the belt 606. Then a step 862 is performed to turn on the belt drive motor 726 in the proper direction to bring the plate from the bed 74 into the loading position. The microprocessor 95 then continuously tests the loading position sensor for arrival of the plate at the loading position. This sensor is continuously read until the plate arrives. When the plate arrives, the step 866 is performed to implement a short delay. Then the step 868 is performed to turn off the belt drive motor 726 to stop the belt 606 and the step 870 is performed to de-activate the solenoid 762 to lower the belt to its subsurface position. Then processing is returned to step 854. The next step 872 vectors processing to step 820 on Figure 23A to load a plate. When the elevator cycles in the Load A Plate routine, the plate just brought in from the bed 74 will be pushed onto the storage stack and an empty plate will be released from the bottom of the empty stack for transfer into the loading position and transfer onto the bed 74.

The Unload a Plate routine has its entry point at step 874 of Figure 23B. The purpose of this Unload Plate routine is to bring a plate off the bed 74 and push it onto the storage stack. The first step 876 in this procedure is to call the Plate Off routine of step 856, Figure 23B. This routine unloads the plate from the bed 74, and returns control to the calling step 876. Next, a step 878 calls the Cycle Elevator subroutine starting at step 824, Figure 23A. This routine pushes the plate just brought into the loading position from the bed 74 onto the storage stack, and returns control to the step 878 whereupon execution ends.

Filed herewith as part of the application documents as Appendix F (which does not form part of the published application) is the real time

operating kernel which coordinates all the tasks or routines and subroutines in Appendix E. Appendix F is written in Intel hex format. The software of Appendix F is comprised of a number of routines which can be categorized in a few general categories of tasks each of which has a certain priority level. There is a user interface task which is comprised of routines which get keyboard strokes, interpret these strokes and display various messages. There is a serial interface task which communicates with the UART's in the system to send and receive messages to the motor controllers, the bar code reader, the printer, the user interface and the host computer outside the system. This task takes care of the communication process itself, and does not concern itself with the content of the communication. There is also a sequencing task comprised of routines which read the user defined process control parameters and use them to control the various motors, solenoids and other peripheral devices to perform the various sequences defined above. Finally there is a task for interpreting messages from the host computer outside the liquid handling system and performing the commands sent from the host computer or retrieving and sending the data requested by the host computer. The real time operating system included herewith as Appendix F monitors various interrupts from software timers, or the various circuits in the system and prioritizes the interrupts. The kernel then checks the various tasks to see if any of them have been waiting for this particular interrupt and calls the specific task which is next to be performed and which has the highest priority in order to implement the process sequences defined above. If any task is running which has a lower priority, the kernel suspends the running of this task. The kernel also maintains a series of mailboxes for the tasks and takes care of allowing messages to be sent from one task to another. Finally, the kernel takes care of calling the task used for communicating with the host computer outside the liquid handler when there is traffic coming from or going to the host computer.

## Further Mechanical Details of the Fusion Head

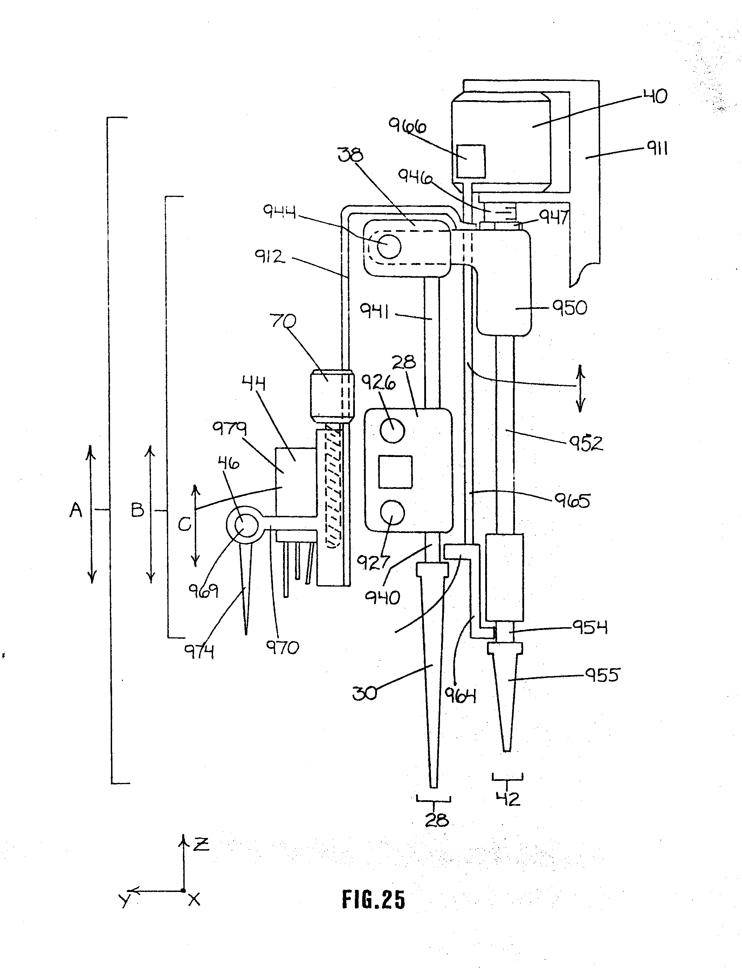

Referring again to Figure 1, the machine includes a vertically translatable integrated "fusion" head 32 positioned above a horizontally translatable table 74. Fig. 1 also shows a rotatable sample carrier or carousel 20 which can serially bring a plurality of analytical samples or the like into position for processing by the fusion head. The construction of machine is further illustrated in Figs. 24, 25, 26, and 27. The table 74 is mounted on guide rails 915 by means of slide bearings 916 and is translated horizontally by action of a stepper motor (not shown) on belt drive 917 which is attached to table 74 and is mounted on the machine chassis 919 by pillow blocks including pillow block 920. Fusion head assembly 32 is mounted for vertical movement on vertical guide rods with slide bearings which are not shown. Fusion head assembly 32 is translated vertically by a stepper motor driving a vertical lead screw through a nut attached to fusion head 32 or driving a pinion gear-rack arrangement (not shown). Fusion head 32, as shown in Figure 1 includes four subassemblies. Moving horizontally from the "outside" of the head (most positive Y coordinate position) to "inside" (least positive Y coordinate position) - it contains a reagent dispensing manifold 46, a wash head assembly 44, a laterally movable x-y head sample transfer pipette 28 and a ganged group of laterally fixed pipettes 42. In Figure 25, the wash head and dispensing manifold are removed to show the other subassemblies.

The x-y head sample transfer pipette 28 is mounted on and translatable vertically with the fusion head 32. It is translatable horizontally on the guide rails 926 and 927 by means of stepper motor 929 driving belt 930 over pulleys 931 and 932. Belt 930 is attached to pipette body 934. The guide rails and belt drive permit pipette 30 to be moved to above sample container (test tube) 26 located in carousel 20. Then, as shown in Figure 2, its tip 30 can be lowered into the sample liquid by lowering head 32. Tip 30 is removable such as into a disposal bin (not shown). X-Y head 28 thus should be translatable to the disposal bin and also to a position above carousel 20 where it can pick up a replacement pipette tip 24 by friction fit of nozzle 940. The volume of pipette 934 is varied to aspirate and discharge liquid by vertically moving a plunger rod 941. Plunger rod 941 is mechanically coupled to slide block 38. Slide block 38 moves horizontally together with x-y head 28 on guide rail 944.

Slide block 38 moves vertically with head 32 but also is moved vertically independently by stepper motor 40 driving vertical lead screw 946 through nut 947 attached to horizontal drive bar 949 and end brackets 950 and 951. Drive bar 949 simultaneously actuates a plurality of plunger rods 952 in ganged pipette subassembly 25 (also called the "multichannel head" herein). These pipettes 954 are arranged in a row transverse to the axis of translation of table 74 and include removable pipette tips 955. Translation of plunger rods 952 varies the contained volume of the ganged pipettes and causes liquid to be aspirated into or discharged from the pipette tips 955.

The table 12 accommodates a plurality of trays 956, 957 and 960. Trays 956 and 957 are conventional titer trays that include a matrix arrangement of wells 961 into which may be deposited the liquid(s) to be taken up by the pipette tips and pipette subassemblies 28 and 42. Tray 960 may be provided with wells or with one or more troughs that provide common liquid reservoirs from which liquid may be taken up. Tray 960 can be a pipette tip tray that contains a similar arrangement of receptacles that accommodate disposable pipette tips 962. The tips 962 are inserted onto and engage the respective ends of the pipettes 954 when the head assembly 32 is lowered after the table 74 has brought one row of tips 962 into registry with the pipettes.

Once the tips are in place on the pipette ends, the table is translated such that the pipettes are above and in registry with a row of wells or troughs in tray 960 that contains the liquid to be taken up into the tips. The tips are then lowered into the wells or troughs by vertical translation of the head assembly 32 and the pipettes are actuated by the plunger drive mechanism to withdraw a predetermined volume of liquid from the wells or troughs. The tips are then withdrawn by upward translation of the fusion head assembly 32. The table 74 is then translated to bring assay tray 956 or 957 into position below and in registry with the tips 955. The tips are lowered by downward translation of the fusion head assembly 32 into a row of the wells 961 of tray and some or all of the fluid they contain is ejected into the wells by actuation of the plunger mechanism of the pipette subassembly. If desired, the pipette operation may be repeated to extract more or other liquids from the titer tray and deposit it/them in the assay tray wells, with or without replacement of the tips, as desired.

Removal of the tips 955 from the pipettes 954 is accomplished with a tip ejector means. The tip ejector means includes a stripper plate 964 that is best illustrated in Figure 25. The plate fits above the top of the pipette tips 955. The tip ejector plate 964 is connected to and supported by a pair of vertically translatable rods 965 mounted on the head assembly 32. These rods are translated by means of a pair of solenoids 966 mounted on the head assembly. When the solenoids 966 are deactuated, the ejector plate 964 is maintained in its upper position. Actuation of the solenoids moves the plate vertically downward, to push the tips 955 down and release them from their frictional engagement with the ends of the pipettes 954.

Plate 964 carries an extension 969 (shown in Fig. 24) at its right-hand end which extends into the space directly above the path of the upper lip of pipette tip 30 on x-y head pipette 934 when x-y head 28 is translated to its right-most position (in Figure 24). Extension 969 is then in a position to release tip 30 from its frictional engagement to pipette nozzle 940 when solenoids 966 are activated. When released, the tips are channelled into a bin (not shown) for disposal.

The liquid dispensing manifold subassembly 46 is used to introduce liquids into the wells of the assay plate 956 and 957 and into the wells and trough of reagent and assay tray 959 except in instances where it is necessary or desirable to introduce the liquid via pipette tip because of the availability of the liquid reagent, the need for precise volume control or the need to avoid cross-contamination by use of disposable pipette tips.

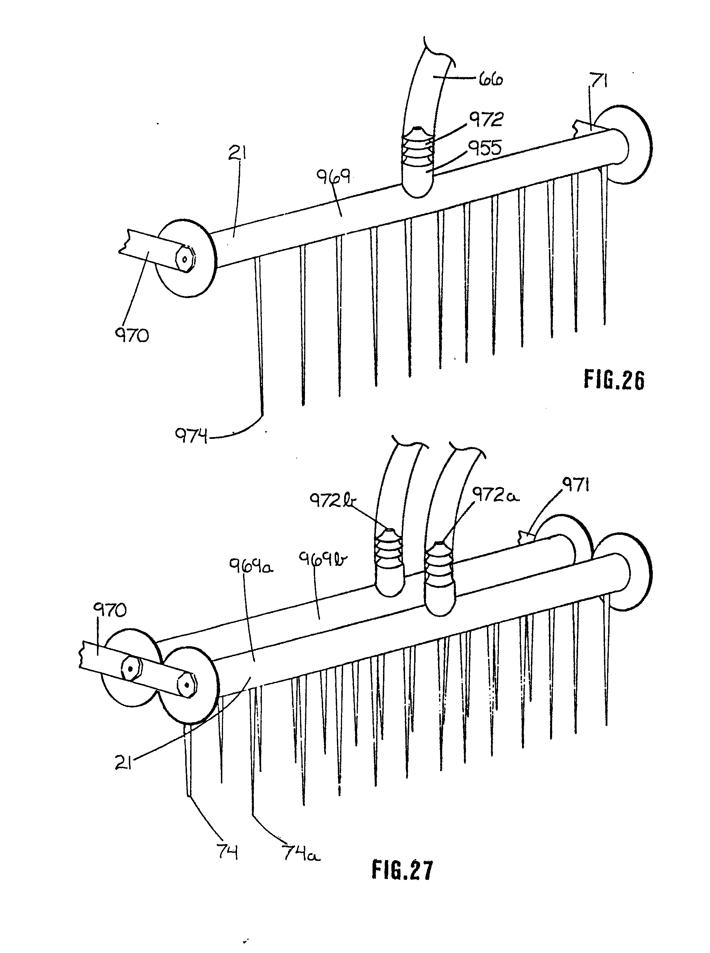

Figure 26 shows in detail an embodiment of the liquid dispensing manifold employing one manifold for dispensing one liquid. Figure 27 shows another embodiment with two manifolds for dispensing two liquids. Additional manifolds may be used as well. The subassembly comprises one or more manifolds 969 or 969a and 969b that are mounted on the front of the head assembly via brackets 970 and 971 such that they extend outwardly therefrom parallel to and above table 12. Each of the manifolds contains a horizontal chamber for receiving the various liquids that are introduced into the wells according to the protocol of the assay being conducted. Each chamber has a single inlet through its upper wall fitted with a tubular sleeve 955 and a plurality of equispaced outlets (12 in each of the depicted manifolds in Figs. 26 and 27) each fitted with a liquid dispensing tube 974 that extends vertically downward through the bottom wall of the manifold. Pressure tight conduit 66 is pressure fit over the outer end of each sleeve 972 (or 972a and 972b) and extends therefrom to the exhaust port of a peristaltic (or similar fixed displacement pump) pump 64 as best seen in Figure 1. The inlet port of the pump is connected via another conduit 68 (Figure 1) to containers that hold the liquids that are used in the assay.

In accord with the invention, a plurality of relative vertical motions are imparted to various subassemblies of the fusion head. Turning to Figure 25 possible motion patterns are depicted. In Figure 25, fusion head chassis 911 is shown. This chassis can move vertically, i.e., along the z axis, in range A by motor means not shown. Range A incorporates all the subassemblies of the fusion head such that they move vertically in concert. Motor 40 and screw 946 drive plunger rods 941 and 952 in range B to expel or aspirate liquid from or into the associated pipettes. In Figure 25, the wash head subassembly 44 is mounted to actuator bar 950 by bracket 912. This means that the chassis of wash head 44 moves in concert with plunger rods 941 and 952. This is advantageous in that it makes it possible to position the wash head assembly without resort to an additional motor. Dispense manifold subassembly 46 is attached to the chassis of wash head 44 and moves vertically together with plunger rods 941 and 952. Finally, wash block 979 in wash head 44 is translated vertically in motion C by motor 70. This allows the wash head aspiration tubes to be lowered to the assay tray for thorough removal of fluids.

The level-sensing system of the invention provides several advantages. For one, the pipette which senses the level is also used to take the samples of the liquid. This avoids delays which would follow from moving a sensing device away from the sample and moving the sampling pipette into position. This also avoids errors which could result from having to position pipette 14 in a function separate from the level detection function. The process avoids contamination and is economically favorable as it can employ a disposable pipette tip as the only item which contacts the liquid and this single contact can effect both level sensing and sample transfer. In addition to sensing fluid levels, this invention can serve to sense the presence of liquid. This can be helpful in determining if a sample is present, for example, or to confirm that other functions, such as sample delivery or pipette attachment, have been properly carried out.

It will be apparent to those skilled in the art that numerous modifications can be made to the invention described herein without departing from the spirit and scope of the invention. For example some of the process steps given above could be combined, reversed in order or changed slightly. Such modifications are included within the scope of the claims appended hereto. There are also appended hereto as appendices the database definition for the blood typing sequence and the object code for the various processors in the system. The appendix for the motor controller software applies to all the controller microprocessors, and they each have their own memory to store this program. The code for the host processor, the bar code reader processor, and the user interface processor is also included as is the operating system.

# APPENDIX A--ABO Rh BLOOD TYPING DATABASE

| FIELD | DESCRIPTION |
|---|---|
| A | PLASMA COLUMNS 1-12 |
| B | # OF ANTIBODY SCREENS |
| C | PLASMA VOLUME |
| D | CELL DILUTION VOLUME |
| E | CELL SAMPLE VOLUME |
| F | CELL SUSPENSION MIXES |
| G | CELL SUSPENSION MIX VOLUME |
| H | CELL SUSPENSION COLUMNS |
| I | CELL SUSPENSION VOLUME |
| J | REAGENT VOLUME |
| K | REAGENT MIXES |
| L | REAGENT MIX VOLUME |
| M | PLATE TYPE |
| N | READ TUBE BAR CODE Y/N |
| O | READ PLATE BAR CODE Y/N |
| P | LIQUID HANDLING SPEED  FAST-MEDIUM-SLOW |

CLAIMS:

1.  An apparatus for automated liquid handling comprising:

means for storing a test tube containing a liquid to be assayed;

one or more trays containing wells;

means for receiving signals and moving liquid between said test tube and said wells or between wells in said trays in accordance with said signals; and

controlling means for interacting with a user to determine the desired liquid handling process and for sending said signals to said liquid moving means to cause the desired liquid transfers.

2.  An apparatus as claimed in claim 1 wherein said means for storing a test tube includes a carrousel for storing a plurality of test tubes and a motor for moving any one of said tubes to a predetermined position, the carrousel optionally including storage positions for pipette tips configured so as to be able to reach to the bottom of said tubes.

3.  An apparatus as claimed in claim 1 or claim 2 wherein said means for moving liquid includes (a) means for moving a pipette between any of said test tubes and any of said wells and for drawing liquid from said test tube or said well and for ejecting liquid into said test tube or said well, and/or (b) means for injecting wash solution into any of said wells, letting it incubate and emptying said wells.

4.  An apparatus as claimed in claim 3(a) further comprising means for sensing the pressure inside said pipette and detecting a rise in pressure and/or means for ejecting said pipette.

5. An apparatus as claimed in any one of the preceding claims further comprising means coupled to said controlling means for reading bar code labels on said test tubes and/or means for reading bar code labels on said trays.

6. An apparatus as claimed in any one of the preceding claims wherein said controlling means stores a plurality of subroutines each containing instructions for generating the signals necessary to cause a predetermined sequence of movements by the elements of said apparatus.

7. An apparatus as claimed in claim 6 wherein said means for controlling includes means for interacting with the user to allow said user to customize the individual process parameters controlling the movements defined by selected ones of said files.

8. An apparatus as claimed in claim 7 further comprising means for storing each customized file upon command from said user.

9. An apparatus as claimed in claim 8 further comprising means in said means for controlling to allow said user to link any of said files into a chain of files which said apparatus will execute seriatem.

10. A method of assaying a liquid sample using a computer controlled liquid transfer apparatus and a plurality of wells, comprising the steps of:

transferring a sample of said liquid using said computer controlled liquid transfer apparatus into a first set of wells; and

transferring a first set of reagents from a second set of said wells into said first set of wells using said computer controlled liquid transfer apparatus.

11. A method as claimed in claim 10 further comprising the steps of transferring another sample of said liquid into a third set of wells using said computer controlled liquid transfer apparatus and transferring a second set of reagents from a fourth set of wells into said third set of wells using said computer controlled liquid transfer apparatus, and optionally the steps of transferring a third sample of said liquid to be assayed to a fifth set of wells using said computer controlled liquid transfer apparatus and transferring a third set of reagents from a sixth set of wells into said fifth set of wells using said computer controlled liquid transfer apparatus.

12. A method as claimed in claim 10 or claim 11 wherein said liquid to be assayed is a centrifuged blood sample and said sample is blood plasma, said other sample preferably being red blood cells when the method is as claimed in claim 11.

transferring a third set of reagents from a sixth set of wells into said fifth set of wells using said computer controlled liquid transfer apparatus.

13. A process for liquid handling to be carried out by a machine which includes a storage means for storing a test tube containing a liquid to be assayed, a tray containing wells and a liquid transfer head having removable pipette tips for moving liquid between said tubes and said wells and for dispensing liquid into selected wells and a controller for controlling the movements of the elements of said apparatus, comprising the steps of:

dispensing diluent into a first set of wells using said transfer head;

withdrawing an aliquot of liquid from said tube using said transfer head;

depositing an aliquot of said liquid in each of a second set of wells using said transfer head;

withdrawing an aliquot of said liquid from said tube using said transfer head;

depositing an aliquot of said liquid in a third set of wells;

withdrawing an aliquot of said liquid from a predetermined level in said tube;

depositing an aliquot of said liquid in each of said first set of wells using said transfer head;

mixing said liquid and said diluent;

withdrawing an aliquot of the diluted liquid from each of said first set of wells;

depositing each said aliquot of said diluted liquid into a fourth set of wells;

withdrawing aliquots of a first reagent set from a fifth set of wells using said transfer head;

depositing an aliquot of a reagent from said first reagent set in each of said fourth set of wells; withdrawing aliquots of a second reagent set from a sixth set of wells using said transfer head; depositing an aliquot of a reagent from said second reagent set in each of said third set of wells; withdrawing aliquots of a third reagent set from a seventh set of wells; and depositing an aliquot of reagent from said third reagent set in each of said second set of wells, the process optionally further comprising the step of adding bromelin to said diluent.

14. A process for liquid handling to be carried out by a machine which includes a storage means for storing a test tube containing a liquid to be assayed, a tray containing wells and a liquid transfer head having removable pipette tips for moving liquid between said tubes and said wells and for dispensing liquid into selected wells and a controller for controlling the movements of the elements of said apparatus, comprising the steps of:

(1) moving liquid from said test tube to a first well using said transfer head;

(2) moving liquid from a second well to said first well using said transfer head.

15. A process as claimed in claim 14, further comprising the steps of having the controller consult the user through a user interface regarding the process parameters desired by the user, reading the responses, and performing the process steps using the user defined process parameters as a guide and preferably for storing the user defined parameters in a memory for future reference, and, when the user defined parameters are stored, further preferably comprising the step of having the controller consult the user regarding which if any other files of user defined parameters stored in said memory for specific processes the steps of which are also stored in memory to execute upon completion of the current file.

16. A process for liquid handling to be carried out by a machine which includes a storage means for storing a test tube containing a liquid to be assayed, a tray containing a plurality of wells and a liquid transfer head having removable pipette tips for moving liquid between said tubes and said wells and for dispensing liquid into selected wells and a controller for controlling the movements of the elements of said apparatus, comprising the steps of:

(1) dispensing diluent into a first plurality of said wells using said transfer head;

(2) sensing the liquid level in said test tube;

(3) withdrawing an aliquot of liquid out of said tube using said transfer head;

(4) depositing an aliquot of said liquid in a second well;

(5) withdrawing an aliquot of said liquid from said tube using said transfer head;

(6) depositing an aliquot of said liquid into a first well in said first plurality of wells using said transfer head;

(7) withdrawing an aliquot of the diluted liquid using said transfer head; and

(8) depositing an aliquot of the diluted liquid into a third well using said transfer head.

17. An apparatus for washing wells in a plate of wells comprising:

means for dispensing liquid into a well; and means for aspirating liquid out of a well after a delay period of from zero to a predetermined amount of time.

18. An apparatus as claimed in claim 17 which further comprises means for interacting with a user to determine which wells to wash and how long to delay between filling and emptying and/or in which said means for dispensing includes a cannula which ejects a stream of wash liquid at an angle to the axis of the well such the wash liquid swirls in said well when dispensed.

19. A process of washing wells in an automated liquid handling apparatus comprising a tray containing a well, a wash head having an empty cannula supplied by a vacuum through a solenoid operated valve, a wash cannula, a pump for forcing wash liquid through said wash cannula and a controller for controlling said pump and said solenoid operated valve, comprising the steps of:

(1) blocking vacuum to said empty cannula using said controller and said solenoid operated valve;

(2) pumping wash liquid into said well by activating said pump using said controller;

(3) delaying for a time established by said controller to allow said wash liquid to incubate with any matter in said well;

(4) opening said solenoid operated valve using said controller to allow vacuum to said empty cannula to empty said well.

20. A process as claimed in claim 19 which further comprises the steps of:

(1) closing the solenoid operated valve using said controller to block vacuum to said empty cannula;

(2) pumping an amount of rinse liquid into said well by activating said pump using said controller; and

(3) opening said solenoid operated valve using said controller to allow vacuum to said empty cannula to empty said well,

and/or in which said apparatus includes an overflow cannula and further comprising the step of supplying vacuum to said overflow cannula.

21. An apparatus for sensing the liquid level in a container comprising:

means for expelling air from a chamber;

means for sensing the air pressure in said chamber while said chamber is lowered into said liquid; and

means for determing the level of the port in said chamber through which said air is expelled when a pressure rise is sensed.

22. A process for sensing the total liquid level in a liquid container in an apparatus having a movable transfer head with a pipette and a means for moving said pipette into and out of said liquid container under the control of a controller, said transfer head having a movable plunger and means controlled by said controller coupled to said plunger for moving it so as to change the volume of said pipette and having a pressure transducer means coupled to said pipette and to said controller, comprising the steps of:

(1) actuating said means for moving said pipette so as to move said pipette into said liquid container;

(2)  actuating said means for moving said plunger so as to expel air from said pipette before and simultaneously with the pipette's entry into said liquid;

(3)  monitoring said pressure transducer to sense a rise of pressure inside said pipette; and preferably

(4)  signaling said controller when a rise in pressure is detected.

23.  An apparatus for mixing liquids in a well, comprising:

a chamber with adjustable volume and a port;

means for moving said port;

means for changing the volume of said chamber;

control means coupled to said means for moving and said means for changing for moving said port into said liquid, causing the volume to increase so to aspirate some liquid, and moving said port in said liquid while decreasing the volume of said chamber, said control means preferably including means to move said port substantially near said bottom before beginning to decrease the volume of said chamber and for simultaneously raising said port toward the top of said liquid while decreasing said volume.

24.  A process for mixing liquids in a liquid handling system having a well, a liquid transfer head having a pipette, a means for changing the volume in said pipette and a means for moving said pipette within said well and having a controller for controlling movements by both said means, comprising the steps of:

controlling said means for changing volume to increase the volume so as to aspirate liquid from said well;

controlling said means for changing volume to decrease the volume in said pipette so as to dispense said aspirated liquid back into said well while controlling the means for moving said pipette to move said pipette from the bottom of said well toward the top of the liquid in said well.

25. An apparatus for delivering multiple reagents to the same well without cross contamination, comprising:

fluid delivery means having an ejectable tip for delivering reagents to said well;

means for causing said fluid delivery means to place a first tip in said well so as to be in contact with a first portion of said well's wall and to deliver a first reagent; and

means for causing said fluid delivery means to eject said first tip, pick up a second tip and to place said second tip in said well so as to be in contact with a second portion of said well's wall not previously contacted by said first tip and to deliver a second reagent.

26. A process for delivering multiple reagents to a single well without cross contamination in a machine which includes a tray containing wells and a liquid transfer head having removable pipette tips for moving liquid between said tubes and said wells and for dispensing liquid into selected wells and a controller for controlling the movements of the elements of said apparatus, comprising the steps of:

(1) drawing an aliquot of a first reagent from a first well using said transfer head pipette;

(2) moving said pipette to a second well and lowering the tip of said pipette using said transfer head until said tip is in the well but not in contact with any liquid in said well;

(3) shifting said pipette tip relative to the side of said well under control of said controller until said tip is in contact with the side of said well and dispensing an aliquot of said reagent;

(4) repeating steps 1 and 2 and 3 above for a second reagent from a third well except including the step of picking up a new pipette tip before aspirating said second reagent and shifting said pipette tip relative to said well under control of said controller such that said tip is in contact with a different portion of the side wall of said well not previously touched.

27. An apparatus for performing user defined liquid handling operations and user defined sequences of said liquid handling operations comprising:

means for performing sets of liquid handling operations;

means for allowing the user to select which of said sets of liquid handling operations is to be performed and in what sequence; and

means for causing the selected sets of liquid handling operations to be performed in the sequence specified by the user, and preferably

means for allowing the user to specify the criteria which control some or all of the specific characteristics of some or all of said sets of liquid handling operations.

28. A process for handling liquids in a machine which includes a storage means for storing a test tube containing a liquid, a tray containing wells and a liquid transfer head having removable pipette tips for moving liquid between said tubes and said wells and for dispensing liquid into selected wells and a controller for controlling the movements of the elements of said apparatus, comprising the steps of:

(1) performing a sequence of liquid handling steps defined by data stored in a sequence of memory locations:

(2) looking for a linking address to another sequence of liquid handling steps defined by data stored in a sequence of memory locations;

(3) vectoring processing by said controller to said starting address;

(4) performing the sequence of liquid handling steps defined by the data stored in the sequence of memory locations beginning with said starting address;

(5) repeating steps (2)-(4) until no more linking addresses are found; and preferably

(6) requesting the user to define process parameters to control some or all of the process steps in each sequence of liquid handling steps defined by data stored in a sequence of memory locations.

29. An apparatus for loading and unloading plates from a liquid handling apparatus, comprising:

means for placing a plate on the work surface of a liquid handling apparatus; and

means for removing a plate from the work surface of a liquid handling apparatus; and preferably

means for storing a plurality of plates to be loaded onto said work surface and/or means for storing the plates unloaded from said work surface.

30. An apparatus as defined in claim 29 wherein said means for placing a plate on the work surface and said means for removing a plate from said work surface include:

a conveyor belt for moving plates;

slots in a loading and unloading surface of said apparatus which is parallel with and at the same height as said work surface;

means for moving predetermined portions of said conveyor belt through said slots so as to project above said surface at predetermined times; and

means for controlling the direction of movement of said conveyor belt and the times when said means for moving is activated; and preferably

a plurality of partitions above said loading and unloading surface forming at least two storage bins; and

latches for supporting said plates in stacks in said storage bins between said partitions.

31. An assay well plate handling mechanism for a liquid handling apparatus, comprising:

a loading and unloading surface;

partition means for forming a first and second storage bin for a plurality of said assay well plates;

means for loading a plate from said first storage stack upon receipt of a predetermined signal;

means for unloading a plate from the work surface of said liquid handling apparatus upon receipt of a predetermined signal and for pushing it onto a storage stack in said second storage bin;

means for controlling said means for unloading and loading in accordance with signals from said liquid handling apparatus,

said means for loading and unloading preferably including conveyor belt means for moving plates in selected directions and/or elevator means for releasing plates from one of said storage bins and for pushing plates into the other of said storage bins.

32. A method for handling assay well plates, comprising the steps of:

releasing a plate from a first storage stack by engaging the camming surfaces of latches which hold the plate in the stack and pushing the latches out of the way;

lowering the plate onto a conveyor belt; and

- 102 -

moving the conveyor belt such that the plate is delivered onto a working surface, and preferably selectively raising portions of the conveyor belt above a loading and unloading surface under said storage stack and above the working surface during plate delivery and/or moving the conveyor belt so as to remove a plate from said working surface and raising an elevator to push said plate just removed onto a second storage stack.

33. A machine for transferring liquid samples and reagents to the wells of an assay tray, comprising in combination

(a) a fusion head assembly translatable between upper and lower positions along a vertical axis and including

a sample transfer pipette assembly mounted on said head for movement therewith and for horizontal translation relative thereto to a plurality of liquid handling positions, said positions including a sample transfer position and a plurality of positions for depositing the sample in assay tray wells, said pipette assembly including a pipette nozzle having a depending end for receiving pipette tips, a plunger disposed within said pipette nozzle and means for moving said plunger within said pipette nozzle to vary the internal volume of said nozzle and a tip supported thereby;

(b) a horizontal liquid reagent dispensing manifold mounted on said fusion head and connected to a pump for dispensing liquid through the manifold;

(c) means for moving the fusion head assembly to upper and lower positions along its vertical axis and for moving the sample transfer pipette along its horizontal axis;

(d) a table mounted beneath the fusion head assembly and adapted to carry the assay tray, the table and/or head being shiftable horizontally relative to one another;

(e) means for moving the table and/or fusion head horizontally to position the rows of wells in registry first with the pipette tip and thereafter in registry with the liquid dispensing manifold; and

(f) means for controlling each of the moving means for the fusion head assembly, the table, the plunger means and the dispensing pump means whereby predetermined volumes of liquid materials are added to one or more wells via the pipette tip and liquid reagent is deposited in the wells in a predetermined sequence.

FIG.1

FIG.2

## ABO Rh BLOOD TYPING PROCESS

START

HOME PISTON, X, Y HEAD, CARROUSEL, BED, VERTICAL POSITION OF INTEGRATED HEAD, WASH HEAD TO ORIGIN LOCATIONS — 100

--ADDRESS #1
--SEND 'HOME' POSITION DATA AND 'HOME' COMMAND — 104

SAME FOR #2, #5, #6, #7, #11 — 106

SEND MODE, START RATE, RUN RATE, JOB RATE, ACCELERATION RATE & MAXIMUM LIMIT DATA TO MOTOR CONTROLLERS TO INITIALIZE — 108

START — 102

PRIME PUMPS — 109

OPEN OR CLOSED SYSTEM ARCHITECTURE? — 110

CLOSED          OPEN

DISPLAY REQUEST FOR DESIRED COLUMNS TO BE FILLED WITH PLASMA AND STORE ANSWER IN DATABASE — 113

ALLOW CUSTOMIZATION OF DESIRED PROCESS PARAMETER FIELDS OF DATABASE — 112

REQUEST NUMBER OF ANTIBODY SCREENS TO BE PERFORMED AND STORE ANSWER — 114

REQUEST DESIRED PLASMA VOLUME AND STORE ANSWER — 115

REQUEST CELL DILUTION VOLUME AND RECORD ANSWER — 116

QUERY USER FOR CELL SAMPLE VOLUME. STORE ANSWER — 117

TO FIG. 3B          TO FIG. 3B

## FIG.3A

FROM FIG. 3A

| | |
|---|---|
| NUMBER OF CELL SUSPENSION MIXES? STORE | 118 |
| CELL SUSPENSION MIX VOLUME? STORE | 119 |
| COLUMNS IN WHICH TO DEPOSIT CELL SUSPENSION SAMPLES? STORE | 120 |
| DESIRED CELL SUSPENSION VOLUME? STORE | 121 |
| DESIRED REAGENT VOLUME? STORE | 122 |
| DESIRED NUMBER OF REAGENT MIXES? STORE | 123 |
| REAGENT MIX VOLUME? STORE | 124 |
| PLATE TYPE? STORE | 125 |
| READ TUBE BARCODE? STORE | 126 |
| READ PLATE BARCODE? STORE | 127 |
| DESIRED LIQUID HANDLING SPEED? STORE | 128 |
| LINK FILE? FILE # IF YES | 129 |
| RUN--STORE--OR PRINT? | 130 |

RUN                    STORE                    PRINT

TO FIG. 3C

**FIG.3B**

FROM FIG. 3B          FROM FIG. 3B

RUN                STORE                          PRINT

┌─────────────────────────┐ 132    ┌─────────────────────────┐
│ FILE NUMBER?            │        │ SEND ASCII             │
│ STORE                  │        │ FILE TO PRINTER        │
└─────────────────────────┘        │ FROM RS232             │
                                    │ INTERFACE              │
┌─────────────────────────┐        └─────────────────────────┘ 136
│ STORE ANSWERS          │
│ IN A FILE              │
│ HAVING GIVEN           │
│ FILE NUMBER            │ 134
└─────────────────────────┘

┌─────────────────────────┐ 140
│ FILL THE DILUTION      │
│ TROUGH WITH            │        ┌─────────────────────────────┐ 141
│ SALINE DILUENT         │        │ SEND 'START' COMMAND AND    │
└─────────────────────────┘        │ POSITION DATA TO #2 TO      │
                                    │ MOVE BED TO PROPER          │
                                    │ POSITION                    │
                                    └─────────────────────────────┘

                                    ┌─────────────────────────────┐ 142
                                    │ COMMAND #6 TO MOVE          │
                                    │ HEAD DOWN TO POSITION       │
                                    │ FOR FILLING FIRST ROW FROM  │
                                    │ DISPENSE MANIFOLD           │
                                    └─────────────────────────────┘

                                    ┌─────────────────────────────┐ 143
                                    │ COMMAND #3 TO PUMP AMOUNT   │
                                    │ OF SALINE DEFINED IN        │
                                    │ PROPER FIELD IN DATABASE    │
                                    └─────────────────────────────┘

                                    ┌─────────────────────────────┐ 144
                                    │ COMMAND #2 TO MOVE BED      │
                                    │ TO PROPER POSITION TO       │
                                    │ FILL NEXT ROW WITH SALINE   │
                                    └─────────────────────────────┘

                                    ┌─────────────────────────────┐ 145
                                    │ COMMAND #3 TO PUMP AMOUNT   │
                                    │ OF SALINE DEFINED IN        │
                                    │ PROPER FIELD IN DATABASE    │
                                    └─────────────────────────────┘
                                              :  FOR ALL
                                              :  ROWS

CONT'D FIG. 3D

**FIG.3C**

FROM FIG. 3C

**143** READ BAR CODES FROM LABELS ON TEST TUBES AND TRAYS AND STORE DATA IN RAM

**143.1** IF BARCODES NOT BEING READ, BEGIN COUNTING TUBES PROCESSED

**143.2** IF BARCODES BEING READ, IS A BARCODE PRESENT?

YES → **143.3** READ IT

NO → **143.4** DONE ← MATCH

NO MATCH

**143.5** MOVE X, Y HEAD TO POSITION TO PICK UP LONG TIP FOR NEXT TUBE AND PICK UP TIP

**143.6** COMMAND #1 TO MOVE CARROUSEL TO MOVE NEXT TEST TUBE TO ACTIVE POSITION

**146** COMMAND #5 TO MOVE X, Y HEAD TO TIP PICKUP POSITION

**147** COMMAND #6 TO MOVE HEAD DOWN TO PICK UP TIP

**148** SENSE LIQUID LEVEL IN TEST TUBE AND PLACE PIPETTE TIP AT DESIRED LEVEL IN TUBE BELOW MENISCUS

**149** COMMAND #6 TO MOVE HEAD UP TO CLEAR LONG TIP FROM CARROUSEL

**150** COMMAND #7 TO MOVE PISTON UP TO MAXIMUM "UP" POSITION

**151** COMMAND #5 TO MOVE PIPETTE TIP OVER TEST TUBE ADJACENT LONG TIP JUST PICKED UP

**152** COMMAND #6 TO BEGIN MOVING HEAD DOWN TOWARD LIQUID AND COMMAND #7 TO BEGIN SIMULTANEOUSLY MOVING PISTON DOWN

**153** MONITOR PRESSURE TRANSDUCER FOR RISE IN PRESSURE

**154** WHEN PRESSURE RISE IS SENSED, READ POSITION OF #6, CALCULATE LIQUID LEVEL AND STORE IN RAM

**155** CALCULATE DISTANCE BELOW TOP OF LIQUID IN TUBE TO PLACE PIPETTE TIP FROM DESIRED 'PLASMA VOLUME' FIELD OF D.B.

CONT'D ON FIG. 3E

CONT'D FIG. 3E

FIG.3D

FROM FIG. 3D

COMMAND #6 TO MOVE PIPETTE TIP DESIRED DISTANCE BELOW TOP OF LIQUID — 155

DRAW DESIRED AMOUNT OF BLOOD PLASMA OUT OF TUBE — 156

COMMAND #7 TO PULL UP PLUNGER A CALCULATED AMOUNT AFTER CALCU- LATING (B+A) X C TO DRAW AMOUNT SPECIFIED IN DATABASE PLUS AN OVERFILL AMOUNT — 157

MOVE X, Y HEAD TO NEXT WELL IN P2 ANTIBODY SCREEN PLATE AND DEPOSIT PLASMA IN NUMBER OF CONSECUTIVE WELLS SET BY '# OF ANTIBODY SCREENS', FIELD B — 158

COMMAND #6 TO PULL HEAD UP TILL PIPETTE TIP CLEARS TOP OF TEST TUBE — 159

COMMAND #5 TO MOVE PIPETTE TIP TO X POSITION OVER NEXT PLASMA POSITION IN ANTIBODY SCREEN PLATE AT P2 POSITION AFTER EVALUATING BAR CODE DATA FROM TRAYS TO DE- TERMINE HOW MANY WELLS ALREADY HAVE SAMPLES IN THEM AND DETERMINING THE PROPER STARTING POSITION — 160

COMMAND #7 TO MOVE PISTON DOWN TO DEPOSIT AMOUNT OF SERUM SPECIFIED IN FIELD C 'PLASMA VOLUME' — 163

COMMAND #2 TO MOVE BED TO POSITION SUCH THAT FIRST PLASMA COLUMN HAS Y POSITION UNDER PIPETTE TIP — 161

REPEAT FOR # OF WELLS SPECIFIED IN FIELD B— DEPOSIT SEQUENTIALLY — 164

COMMAND #6 TO MOVE HEAD DOWN TO PLACE PIPETTE TIP TO BOTTOM OF WELL — 162

COMMAND #6 TO RAISE HEAD TO CLEAR WELL — 167

MOVE X, Y HEAD BACK TO SAME TEST TUBE TO GET MORE BLOOD PLASMA — 166

COMMAND #5 TO MOVE X, Y HEAD BACK TO TUBE — 168

COMMAND #6 TO MOVE PIPETTE TIP DOWN A CALCULATED AMOUNT BELOW THE CURRENT MENISCUS — 169

CONT'D FIG. 3F

COMMAND #7 TO DRAW PISTON UP TO DRAW LIQUID AMOUNT SET BY USER IN DATABASE PLUS AN OVERFILL AMOUNT — 170

FIG.3E

FROM FIG. 3E

MOVE X, Y HEAD
TO X POSITION
OF NEXT WELL IN
P1 BLOODTYPING PLATE
TO RECEIVE SERUM
AND DEPOSIT
SPECIFIED AMOUNT OF
SERUM IN SPECI-
FIED NUMBER OF
WELLS                          172

COMMAND #6 TO RAISE HEAD SUFFI-
CIENTLY TO CLEAR TEST TUBE TOP AND
EVALUATE BAR CODE DATA. TO DETERMINE
NEXT WELL TO USE IN P1 PLATE           173

COMMAND #5 TO MOVE X, Y HEAD TO
X POSITION OF NEXT WELL IN P1
BLOODTYPING PLATE TO RECEIVE PLASMA     174

COMMAND #2 TO MOVE BED SUCH
THAT Y POSITION OF FIRST WELL
IN BACKTYPING PLATE TO RECEIVE
SERUM IS UNDER X, Y HEAD PIPETTE        175

COMMAND #6 TO LOWER HEAD UNTIL
X, Y HEAD PIPETTE IS NEAR
BOTTOM OF FIRST WELL                    176

COMMAND #7 TO LOWER PISTON A
CALCULATED AMOUNT TO DELIVER
SERUM AMOUNT SPECIFIED IN
"PLASMA VOLUME" FIELD OF DATABASE       177

COMMAND #6 TO RAISE HEAD SUFFI-
CIENTLY THAT X, Y HEAD PIPETTE
CLEARS WELL                             178

COMMAND #5 TO MOVE X, Y HEAD
OVER NEXT WELL TO RECEIVE
SERUM IN P1 PLATE                       179

TO FIG. 3G

FIG.3F

FROM FIG. 3F          FROM FIG. 3F

| COMMAND #6 TO LOWER HEAD SUFFICIENTLY TO PUT X, Y HEAD PIPETTE NEAR BOTTOM OF THE WELL | 180 |

| COMMAND #7 TO LOWER PISTON AN AMOUNT CALCULATED TO DELIVER THE AMOUNT OF SERUM SPECIFIED IN THE 'PLASMA VOLUME' FIELD OF THE DATABASE | 181 |

| CONTINUE FOR NUMBER OF COLUMNS SPECIFIED IN 'PLASMA COLUMNS' FIELD | 182 |

| RETURN X, Y HEAD TO ACTIVE TEST TUBE, EXPEL REMAINING SERUM AND DRAW SPECIFIED RED BLOOD CELL SAMPLE | 186 |

| REPOSITION X, Y HEAD | 187 |

| LOWER HEAD INTO SERUM | 188 |

| DROP PLUNGER TO EXPEL EXCESS SERUM | 189 |

| CALCULATE RED BLOOD CELL LEVEL | 190 |

| LOWER HEAD INTO RED BLOOD CELLS | 191 |

| RAISE PLUNGER TO DRAW RED BLOOD CELL SAMPLE SPECIFIED IN 'CELL SAMPLE VOLUME' FIELD | 192 |

TO FIG. 3H

FIG.3G

FROM FIG. 3G

MOVE X, Y HEAD TO DILUTION TRAY WELL AND DEPOSIT RED BLOOD CELL SAMPLE INTO DILUTION TROUGH — 196

RAISE HEAD TO CLEAR TUBE — 197

DRIVE X, Y HEAD TO DILUTION WELL X POSITION — 198

DRIVE BED TO BRING Y POSITION OF DESIRED DILUTION WELL UNDER X, Y HEAD — 199

MIX RED BLOOD CELLS IN SALINE SOLUTION (SEE FIGURES 4 AND 5) — 200

DRAW DILUTED RED BLOOD CELL SOLUTION FROM DILUTION TROUGH — 212

MOVE PLUNGER UP DISTANCE CALCU- LATED TO DRAW ENOUGH DILUTED RED BLOOD CELL MIXTURE AFTER CALCULATING DESIRED ASPIRATION AMOUNT AS I x H — 213

MOVE TO P1 FOR DEPOSIT OF DILUTED RED BLOOD CELL SUSPENSION AND DEPOSIT SAMPLE INTO NEXT WELLS ADJACENT TO WELLS IN WHICH PURE PLASMA WAS PREVIOUSLY DEPOSITED — 216

RAISE HEAD SUFFICIENTLY TO CLEAR SALINE DILUTION WELL — 217

MOVE X, Y HEAD TO X POSITION OF FIRST WELL TO RECEIVE RED BLOOD CELL SAMPLE — 218

MOVE BED SUCH THAT FIRST WELL TO RECEIVE RED BLOOD CELL SUSPEN- SION IS UNDER X, Y HEAD — 219

MOVE HEAD DOWN SO THAT X, Y HEAD PIPETTE TIP IS AT BOTTOM OF FIRST WELL IN FORWARD TYPING PLATE — 220

TO FIG. 3I

TO FIG. 3I

FIG.3H

FROM FIG. 3H

FROM FIG. 3H

MOVE PLUNGER DOWN SUFFICIENTLY TO DEPOSIT AMOUNT OF CELL SUSPENSION DEFINED IN 'CELL SUSPENSION VOLUME' FIELD — 221

READ 'CELL SUSPENSION COLUMN' FIELD TO DETERMINE HOW MANY WELLS ARE TO RECEIVE SAMPLES — 222

LIFT HEAD TO CLEAR FIRST WELL — 223

MOVE X, Y HEAD OVER TO NEXT WELL, IF ANY, TO RECEIVE A CELL SUSPENSION SAMPLE — 224

EJECT LONG TIP — 226

CONTINUE UNTIL ALL DESIRED WELLS ARE DOSED — 225

MOVE X, Y HEAD TO TIP EJECT POSITION AND COMMAND #8 SOLENOID TO ACTUATE TIP EJECT MECHANISM — 227

MOVE CAROUSEL TO PUT NEXT TUBE IN 'ACTIVE' POSITION AND PICK UP LONG TIP — 230

TO FIG. 3J

FIG.3I

FROM FIG. 3I

REPEAT PLASMA DEPOSIT, RED BLOOD CELL DILUTION AND RED BLOOD CELL DEPOSIT STEPS ABOVE FOR NEXT 7 TUBES/DONORS — 232

BROMELIN
——* PROCESS BREAK POINT

MOVE BED SUCH THAT SHORT PIPETTES ARE UNDER MULTI-CHANNEL HEAD AND PICK UP SHORT PIPETTES — 234

MOVE BED SUCH THAT STORAGE LOCATIONS FOR SHORT TIPS ARE ALIGNED WITH CHANNEL TIPS — 235

MOVE HEAD DOWN TO PICK UP TIPS — 236

MOVE HEAD UP SO THAT TIPS CLEAR THE STORAGE LOCATIONS — 237

MOVE BED SUCH SHORT TIPS ARE OVER BLOOD TYPING REAGENT WELLS IN REAGENT TRAY — 236

MOVE HEAD DOWN SUCH THAT SHORT TIPS ARE IN REAGENT — 239

EXPEL AIR AND MIX REAGENT WITH SHORT TIPS — 238

MOVE PISTON DOWN TO EXPEL AIR IN PIPETTE — 240

MOVE HEAD DOWN FURTHER SO THAT TIPS ARE AT THE BOTTOM OF THE WELL — 241

TO FIG. 3K

TO FIG. 3K

**FIG.3J**

FROM FIG. 3J

FROM FIG. 3J

DRAW PISTON UP TO ASPIRATE AMOUNT OF REAGENT SPECIFIED IN 'REAGENT MIX VOLUME' FIELD — 242

MOVE HEAD UP WHILE PUSHING PISTON DOWN TO MIX REAGENT — 243

REPEAT MIX STEP FOR NUMBER OF MIX STEPS DEFINED IN 'REAGENT MIXES' FIELD — 244

ASPIRATE AMOUNT OF BLOOD TYPING REAGENTS DEFINED IN 'REAGENT VOLUME' FIELD OF DATABASE — 246

MOVE HEAD UP TO CLEAR REAGENT WELL AND MOVE BED SUCH THAT FIRST WELL ROW IN P1 PLATE TO RECEIVE REAGENTS IS UNDER MULTICHANNEL HEAD — 248

LOWER PIPETTE TIP INTO CENTER OF WELL BUT NOT TOUCHING SAMPLE — 251

LOWER HEAD AND DEPOSIT REAGENT INTO ROW OF P1 PLATE FOR CURRENT DONOR BEING PROCESSED — 250

MOVE BED SUFFICIENTLY THAT PIPETTE TIP TOUCHES SIDE OF THE WELL AT SAME LEVEL — 252

MOVE PISTON DOWN TO DIS-PENSE DESIRED AMOUNT OF REAGENT — 253

TO FIG. 3L

FIG.3K

FROM FIG. 3K

RAISE HEAD TO POSITION
WHERE TIPS CLEAR WELLS AND
MOVE BED SUCH THAT TIP
STORAGE POSITIONS ARE
ALIGNED WITH TIPS | 252

LOWER HEAD UNTIL TIPS
ARE IN STORAGE POSITIONS
AND EJECT TIPS | 254

PICK UP NEW TIPS TO
ASPIRATE ANTIBODY
SCREENING REAGENTS | 256

MOVE BED UNTIL A NEW ROW
OF TIPS IS UNDER MULTI-
CHANNEL HEAD | 257

LOWER HEAD TO PICK UP
TIPS | 258

LIFT HEAD UNTIL TIPS CLEAR
STORAGE LOCATIONS | 259

MOVE MULTICHANNEL HEAD
OVER ANTIBODY SCREENING
REAGENT STORAGE WELLS
IN REAGENT AND PLATE
MIX REAGENT | 260

MOVE BED TO LINE UP
REAGENT WELLS UNDER TIPS | 261

MOVE HEAD DOWN UNTIL
TIPS ARE IN REAGENTS | 262

MOVE PISTON DOWN TO EXPEL
AIR | 263

REPEAT MIXING SEQUENCE
USED TO MIX ABO Rh
BLOOD TYPING REAGENTS | 264

TO FIG. 3M

FIG.3L

0210014

15/42

FROM FIG. 3L

ASPIRATE DESIRED AMOUNT
OF REAGENT DEFINED IN
'REAGENT VOLUME' FIELD — 266

MOVE BED SUCH THAT
ANTIBODY SCREENING WELLS
IN P2 PLATE ARE LINED
UP UNDER MULTICHANNEL
HEAD — 268

MOVE HEAD DOWN TO LOWER
TIPS INTO CENTER OF WELLS — 271

DEPOSIT REAGENTS IN
ANTIBODY SCREENING WELLS
OF P2 PLATE FOR CURRENT
DONOR — 270

MOVE BED SUCH THAT TIP
COMES INTO CONTACT WITH
SIDE OF WELL — 272

MOVE PISTON DOWN TO
DISCHARGE DESIRED AMOUNT
OF LIQUID. — 273

MOVE BED TO LINE TIPS
UP WITH STORAGE
LOCATIONS — 276

LIFT HEAD TO CLEAR TIPS — 274

EJECT TIPS — 278

DONE

FIG.3M

## MIXING SEQUENCE

```
┌─────────────────────────┐
│ DROP HEAD TO PLACE      │  202
│ X, Y HEAD PIPETTE TIP   │
│ IN SALINE SOLUTION      │
│ AT PREDETERMINED LEVEL  │
└─────────────────────────┘
            │
┌─────────────────────────┐
│ DROP PLUNGER TO EJECT   │  203
│ RED BLOOD CELLS INTO    │
│ SALINE LEAVING HEAD     │
│ AT SAME HEIGHT          │
└─────────────────────────┘
            │
┌─────────────────────────┐
│ DRAW PLUNGER UP TO      │  204
│ ASPIRATE SOME OF SALINE │
│ AND RED BLOOD CELL      │
│ MIXTURE LEAVING HEAD    │
│ AT SAME HEIGHT---DRAW   │
│ AMOUNT SPECIFIED IN "MIX│
│ VOLUME" FIELD           │
└─────────────────────────┘
            │
┌─────────────────────────┐
│ DROP PLUNGER TO EXPEL   │  205
│ SALINE AND RED BLOOD    │
│ CELL MIXTURE INTO       │
│ SOLUTION LEAVING HEAD   │
│ AT SAME HEIGHT          │
└─────────────────────────┘
            │
┌─────────────────────────┐
│ DRAW PLUNGER UP TO      │  206
│ ASPIRATE SOME OF SALINE │
│ AND RED BLOOD CELL      │
│ MIXTURE LEAVING HEAD    │
│ AT SAME HEIGHT          │
└─────────────────────────┘
            │
┌─────────────────────────┐
│ CONTINUE FOR NUMBER OF  │  207
│ TOTAL CYCLES SPECIFIED  │
│ IN "NUMBER OF MIXES"    │
│ FIELD                   │
└─────────────────────────┘
```

**FIG.4**

## MIXING SEQUENCE

```
┌─────────────────────────┐
│ DROP HEAD TO PLACE      │  208
│ X, Y HEAD PIPETTE TIP   │
│ IN SALINE SOLUTION      │
│ AT BOTTOM OF WELL       │
└─────────────────────────┘
            │
┌─────────────────────────┐
│ DRAW HEAD UPWARD        │  209
│ TO MOVE X, Y PIPETTE    │
│ TIP UPWARD THROUGH      │
│ SALINE WHILE SIMUL-     │
│ TANEOUSLY DROPPING      │
│ PLUNGER DOWN TO EXPEL   │
│ RED BLOOD CELLS INTO    │
│ SOLUTION                │
└─────────────────────────┘
```

**FIG.5**

FIG.6A

FIG.7

FIG.6B

19/42

FIG.6D

FIG.6C

0210014

0210014

20/42

WASH SEQUENCE

```
OPEN OR CLOSED SYSTEM        350
ARCHITECTURE?

   CLOSED       OPEN

ALLOW CUSTOMIZATION OF       352
DATABASE FOR DESIRED
WASH PARAMETERS

TO FIG. 8B
```

```
WHICH ROWS TO WASH?          353
STORE ANSWER IN PROPER
FIELD IN THE DATABASE

HOW MANY WASHES ARE          354
DESIRED? STORE ANSWER

WASH VOLUME BEFORE SOAK?     355
STORE

SOAK TIME? STORE             356

RINSE VOLUME AFTER SOAK?     357
STORE

LEAVE WELLS FILLED           379
YES     NO      STORE

PLATE TYPE? STORE            358

LIQUID HANDLING SPEED?       359
STORE

WHICH FILE TO LINK ABOVE     360
DEFINED WASH AS A PART
OF THE SEQUENCE? STORE

RUN, STORE OR PRINT?         361
```

FIG.8A

FROM FIG. 8A

DO HOMING SEQUENCE `362`

MOVE BED TO POSITION WASH HEAD CANNULA OVER WELLS TO BE FILLED `368`

LOWER HEADS SUCH THAT WASH HEAD CANNULA ARE IN THE WELLS TO BE WASHED `370`

PAUSE LONG ENOUGH TO EMPTY WELLS `371`

CLOSE SOV TO 'EMPTY' CANNULA AND START #4 WASH HEAD DRIVE MOTOR TO FILL WELLS WITH SOLUTION THROUGH SLANTED CANNULA `372`

REVERSE #4 WASH HEAD DRIVE MOTOR DIRECTION FOR SHORT BURST TO SUCK LAST DROP BACK UP INTO CANNULA `376`

HOME OVERALL HEAD ASSEMBLY TO KNOWN POSITION `363`

HOME THE WASH HEAD MOVEABLE PLATE TO THE EXTENDED POSITION `364`

HOME THE PISTON FOR THE MULTICHANNEL HEAD TO A KNOWN POSITION `365`

HOME THE BED TO A KNOWN POSITION `366`

ENERGIZE #12 SOV TO SHUT OFF VACUUM SUPPLY TO LONGEST CANNULA `373`

ENERGIZE #4 TO PUMP LIQUID INTO WELL THROUGH 'FILL' CANNULA `374`

TO FIG. 8C

FIG.8B

FROM FIG. 8B

```
RAISE HEAD AND WAIT FOR          378
INCUBATION TIME SPECIFIED IN
THE DATABASE
```

```
LOWER HEAD AND OPERATE #12 SOV   380
TO ALLOW VACUUM TO 'EMPTY'
CANNULA AND EMPTY WELL
```

```
OPERATE #12 SOV TO SHUT OFF      382
VACUUM TO 'EMPTY' CANNULA
```

```
PUMP AMOUNT OF RINSE BUFFER      384
INTO WELLS SPECIFIED IN
DATABASE
```

385

```
LEAVE     YES     OPERATE #12 SOV TO    387
FILLED?           BLOCK VACUUM TO
                  EMPTY CANNULA TO
                  LEAVE WELLS FILLED
```

NO

```
OPERATE #12 SOV TO ALLOW        386
VACUUM TO 'EMPTY' CANNULA
AND EMPTY RINSE SOLUTION
FROM WELL
```

TO STEP 388, FIG. 8D

**FIG.8C**

FROM FIG. 8C

| RAISE HEAD TO REMOVE CANNULA FROM WELLS | 388 |

| ACTIVATE #2 TO MOVE BED SUCH THAT NEXT ROW OF WELLS TO BE WASHED, IF ANY, IS BELOW THE CANNULA | 390 |

| REPEAT ABOVE WASH STEPS FOR NEXT ROW | 392 |

| DRAW INTEGRATED HEAD UP TO HOME POSITION | 394 |  →  | ACTIVATE #6 MOTOR TO PULL ENTIRE HEAD ASSEMBLY UP | 396 |

| PULL WASH HEAD UP TO RETRACTED POSITION | 398 |  →  | ACTIVATE #11 MOTOR TO RETRACT WASH HEAD UP INTO SUPPORT FRAME | 390 |

END

FIG.8D

## ASSAY SAMPLE HANDLING PROCESS

```
┌─────────────────────────┐ 400
│ HOME ALL STEP MOTORS    │
│ AND PRIME PUMP          │
└─────────────────────────┘
            │
┌─────────────────────────┐ 402
│ OPEN OR CLOSED          │
│ ARCHITECTURE?           │
└─────────────────────────┘
            │
┌─────────────────────────┐ 404
│ QUERY USER FOR PROCESS  │
│ PARAMETERS              │
└─────────────────────────┘
            │
┌─────────────────────────┐ 406
│ RUN - STORE - PRINT     │
└─────────────────────────┘
   RUN    STORE
                  ┌──────────┐
                  │ PRINT    │
                  └──────────┘
      ┌─────────────────┐ 424
      │ FILE NUMBER?    │
      └─────────────────┘
      ┌─────────────────┐ 426
      │ STORE FILE IN   │
      │ DESIGNATED      │
      │ FILE NUMBER     │
      └─────────────────┘

  TO FIG. 9B
```

| | |
|---|---|
| NUMBER OF WELLS PLATE 1 96-60                          1 | 407 |
| NUMBER OF WELLS PLATE 2 96-60                          2 | 408 |
| PLATE POSITION P1-P2-BOTH                              3 | 409 |
| PREDILUTION OF P2 SINGLE-DOUBLE-NONE                   4 | 410 |
| # ASSAYS PER TUBE,P1 (0-4)                1            5 | 411 |
| # ASSAYS PER TUBE,P2 (0-4)                1            6 | 412 |
| P1 SAMPLE VOLUME (0-200)              200 UL           7 | 413 |
| P2 SAMPLE VOLUME (0-200)              200 UL           8 | 414 |
| P2 P/D VOLUME (0-999)                 380 UL           9 | 415 |
| P2 P/D MIXES (0-9)                    3               10 | 416 |
| P2 P/D MIX VOLUME (0-200)             175 UL          11 | 417 |
| P2 P/D TRANSFR VOL (0-200)            200 UL          12 | 418 |
| PLATE 1 TYPE FLAT-U-V-HEIGHT                          13 | 419 |
| PLATE 2 TYPE FLAT-U-V-HEIGHT                          14 | 420 |
| LIQ HANDLING SPEEDS RAPID-MEDIUM-SLOW                 15 | 421 |
| CONTROL CONFIG FILE (21-70)            6              16 | 422 |
| LINK TO STORED FILE (1-50, 70=STOP)    70             17 | 423 |

**FIG.9A**

FROM FIG. 9A

IF THERE IS A PLATE
IN P2 FILL ALL WELLS
IN DILUTION TRAY WITH A
DILUENT USING THE DISPENSE
MANIFOLD — 428

ACTIVATE #2 BED DRIVE
MOTOR TO MOVE BED SUCH
THAT THE ROW OF WELLS
IS ALIGNED UNDER THE
DISPENSE MANIFOLD — 429

ACTIVATE #6 TO MOVE
HEAD DOWN SUCH THAT
DISPENSE MANIFOLD TIPS
ARE IN WELLS — 430

REPEAT STEPS 143, 143.5
148, 156 AND 158 AND
THEIR SUBSTEPS TO
DEPOSIT SERUM IN THE
DESIGNATED WELLS OF
P1 PLATE — 436

ACTIVATE #3 DISPENSE
MANIFOLD PUMP MOTOR
ACCORDING TO A PRE-
DETERMINED PUMP SPEED
PROFILE TO FILL FIRST
ROW OF WELLS PER FIELD 9 — 431

REPOSITION X, Y HEAD
OVER CURRENTLY ACTIVE
TUBE AND ASPIRATE
THE AMOUNT OF LIQUID
SPECIFIED IN FIELD 8 — 438

ACTIVATE #6 MOTOR TO
DRAW HEAD UP TO CLEAR
DISPENSE MANIFOLD TIPS
FROM WELLS — 432

CONSULT FIELD 4 TO
DETERMINE WHETHER A
ONE STAGE OR TWO
STAGE DILUTION IS
DESIRED — 440

TO FIG. 9C          TO FIG. 9C

FIG.9B

FROM FIG. 9B

ONE OR TWO
STEP DILUTION

REPEAT STEP 196 OF
BLOOD TYPING PROCESS
AND SUBSTEPS TO
DEPOSIT AND MIX
SERUM IN FIRST WELL
OF DILUTION TRAY — 442

ONE
STAGE          TWO
STAGE

ASPIRATE AMOUNT OF
DILUTED SERUM SET IN
FIELD 12 — 444

MOVE X, Y HEAD TO
P2 PLATE AND
DEPOSIT INTO
NUMBER OF WELLS
SET BY FIELD 6 — 446

REPEAT
FOR NEXT
7 TUBES — 450

TRANSFER AMOUNT OF
DILUTED SERUM SET
BY FIELD 12 INTO THE
NEXT DILUTION TRAY
WELL AND MIX — 448

END

FROM FIG. 9B

REVERSE #3 MOTOR FOR
A SHORT TIME TO DRIVE
DISPENSE MANIFOLD PUMP
BACKWARDS TO DRAW LAST
DROP BACK INTO TIPS — 433

ACTIVATE BED DRIVE
MOTOR TO POSITION BED
SUCH THAT ANOTHER
ROW OF WELLS IS
BENEATH THE DISPENSE
MANIFOLD — 434

REPEAT ABOVE STEPS UNTIL
ALL DESIRED ROWS ARE
FILLED — 435

FIG.9C

BROMELIN TREATMENT PROCESS

| | |
|---|---|
| REPEAT STEPS OF BLOOD TYPING SEQUENCE OF FIG. 3 UP TO * EXCEPT ADD BROMELIN ENZYME TO DILUENT SOLUTION PUMPED INTO DILUENT TRAY | 500 |
| INCUBATE FOR A TIME SET BY USER--USUALLY AT LEAST 15 MINUTES | 502 |
| CONTINUE WITH STEPS IN BLOOD TYPING SEQUENCE STARTING AT * | 504 |

**FIG.10**    DONE

**FIG.11**

FIG.12

FIG.13

FIG.15

FIG.14

ELEVATOR DRIVE MOTOR

30/42

0210014

602

612

714

712

700   706   671

666   682

608

626   690

676

676   668

688

716

LOADING & UNLOADING
POSITION

Z

Y       X

**FIG.16**

FIG.17

FIG.18A

FIG.18B

33/42

0210014

FIG.19

FIG.20

FIG.21

0210014

37/42

FIG.22

LOAD A PLATE — 820

CALL 'CYCLE ELEVATOR' — 822

DELAY — 836

TURN ON BELT DRIVE MOTOR IN LOAD DIRECTION — 838

TEST LOADING POSITION SENSOR — 840

BEAM NOT BROKEN

842 —

ACTIVATE SOLENOID 762 — 844

TEST SENSOR 810 FOR ARRIVAL — 846

NOT ARRIVED

ARRIVED

TURN OFF BELT DRIVE MOTOR 726 — 848

DE-ACTIVATE SOLENOID 762 — 850

END

'CYCLE ELEVATOR' PROCEDURE — 824

TURN ELEVATOR MOTOR 688 ON — 826

DELAY SUFFICIENT AMOUNT TO INSURE ELEVATOR BOX IS OUT OF BEAM PATH OF SENSOR 800 — 828

830 — BEAM BROKEN? — NO — 832

YES

TURN OFF MOTOR — 834

RETURN — 835

FIG.23A

FIG.23B

FIG.24

FIG.25

FIG.26

FIG.27